# EUROPEAN PATENT SPECIFICATION

(11) **EP 4 439 041 B1**
(45) Date of publication and mention of the grant of the patent: **23.07.2025**
(21) Application number: 24166763.3
(22) Date of filing: 27.03.2024
(51) Int. Cl.: G01N 15/1429, G01N 15/1434, G01N 15/14, G01N 15/00, G01N 15/10

(54) **BLOOD CELL ANALYSIS METHOD**
VERFAHREN ZUR ANALYSE VON BLUTZELLEN
PROCÉDÉ D'ANALYSE DE CELLULES SANGUINES

(30) Priority: 31.03.2023 JP 2023059036
(43) Date of publication of application: 02.10.2024
(73) Proprietor: SYSMEX CORPORATION, Kobe-shi Hyogo 651-0073 (JP)
(72) Inventor: TAKARA, Chihiro, Kobe-shi, Hyogo, 651-0073 (JP); KOMAKI, Takanori, Kobe-shi, Hyogo, 651-0073 (JP); YAMAUCHI, Masaya, Kobe-shi, Hyogo, 651-0073 (JP)
(74) Representative: Hoffmann Eitle

(56) References cited:
- CN-A- 114 441 480
- US-A1- 2020 141 858
- US-A1- 2022 091 127

## Description

### FIELD OF THE INVENTION

The present invention relates to a blood cell analysis method.

### BACKGROUND

Nucleated red blood cells are erythroid precursors present in the bone marrow and are also called erythroblasts. Although nucleated red blood cells are usually not present in the peripheral blood, nucleated red blood cells may appear in the peripheral blood of patients with acute myeloid leukemia, hemolytic anemia, iron-deficiency anemia, pernicious anemia, and the like. Therefore, in the field of clinical examination, detection of nucleated red blood cells is very important. Conventionally, a method for detecting nucleated red blood cells by analyzing blood cells in a blood specimen with an automatic blood cell analyzer is known. On the other hand, in blood collected from a subject, the number of red blood cells is usually much larger than the number of nucleated cells such as nucleated red blood cells and white blood cells. Therefore, in blood cell analysis for blood cells other than red blood cells, in order to suppress the influence of red blood cells, it is widely practiced to dissolve red blood cells by mixing a blood specimen and a hemolysis reagent. For example, U.S. Patent Application Publication No. 2022/0091127 describes that a blood specimen was treated with a hemolysis reagent and three types of fluorescent dyes and analyzed by an automatic blood cell analyzer to detect nucleated red blood cells, and detection of reticulocyte fragments and classification of white blood cells into subpopulations were performed.

### SUMMARY OF THE INVENTION

In a measurement sample prepared using a hemolysis reagent, a remnant of hemolyzed red blood cells (also called red blood cell ghost) remains. When this measurement sample is analyzed by an automatic blood cell analyzer to detect nucleated red blood cells, the presence of red blood cell ghosts hinders accurate detection of nucleated red blood cells. The hemolysis reagent elutes hemoglobin of nucleated red blood cells. As a result, the characteristics of nucleated red blood cells that enable distinction from white blood cells are lost, and discrimination between nucleated red blood cells and white blood cells becomes difficult. Therefore, conventionally, as shown in U.S. Patent Application Publication No. 2022/0091127, measurement for detecting nucleated red blood cells and measurement for classifying white blood cells are separately performed. An object of the present invention is to provide a means capable of detecting nucleated red blood cells without using a hemolysis reagent.

The present inventors have found that nucleated red blood cells can be specified based on fluorescence information, first scattered light information, and second scattered light information generated by staining a blood cell in a specimen with a fluorescent dye and irradiating the stained blood cell with light having a wavelength of 315 nm or more and 490 nm or less and light having a wavelength of 610 nm or more and 750 nm or less, and have completed the inventions described in the following [1] to [30].

According to the present invention there is provided a blood cell analysis method according to claim 1. Preferred embodiments are defined in the dependent claims.

### BRIEF DESCRIPTION OF THE DRAWINGS

Fig. 1 is a perspective view showing an analysis system suitable for a blood cell analysis method of the present embodiment.
Fig. 2 is a diagram showing a fluid circuit including a specimen suction section, a sample preparation section, and a flow cytometer (FCM) detection section in a measurement unit.
Fig. 3 is a block diagram showing a configuration of the measurement unit.
Fig. 4 is a schematic diagram showing an example of a configuration of an optical system of the FCM detection section.
Fig. 5 is a schematic diagram showing that various types of light emitted when a particle passing through a flow cell is irradiated with light are received by the optical system of the FCM detection section.
Fig. 6 is a block diagram showing a configuration of an analysis unit.
Fig. 7 is a flowchart showing a flow of operation of the analysis system.
Fig. 8 is a flowchart showing procedures of measurement processing.
Fig. 9 is a diagram showing an example of a reagent for blood cell analysis according to the present embodiment.
Fig. 10A is a flowchart showing procedures of analysis processing of Embodiment 1.
Fig. 10B is a flowchart showing procedures of analysis processing of Embodiment 1.
Fig. 11 is a schematic diagram illustrating positions at which a first particle population and a second particle population appear in a first scattergram in which a first side scattered light (SSC-1) intensity is taken on a horizontal axis and a logarithm of a first fluorescence intensity (SFL-1 (log)) is taken on a vertical axis. In the figure, "NRBC" is a nucleated red blood cell, "WBC" is a white blood cell, "RBC" is a mature red blood cell, and "PLT" is a platelet.
Fig. 12 is a schematic diagram illustrating positions at which a third particle population and a fourth particle population appear in a second scattergram in which a logarithm of the first side scattered light intensity (SSC-1 (log)) is taken on a horizontal axis and a second forward scattered light (FSC-2) intensity is taken on a vertical axis.
Fig. 13 is a schematic diagram illustrating positions at which a population of nucleated red blood cells and each subpopulation of white blood cells appear in a second scattergram in which SSC-1 (log) is taken on a horizontal axis and an FSC-2 intensity is taken on a vertical axis. In the figure, "Gran" is a granulocyte, "Mono" is a monocyte, and "Lym" is a lymphocyte.
Fig. 14 is a flowchart showing procedures of analysis processing of Embodiment 2.
Fig. 15 is a schematic diagram illustrating positions at which a fifth particle population and a sixth particle population appear in a third scattergram in which a logarithm of a second side scattered light intensity (SSC-2 (log)) is taken on a horizontal axis and the FSC-2 intensity is taken on a vertical axis.
Fig. 16 is a first scattergram for a normal specimen and an abnormal specimen in Example 1. In the figure, "V-SSC" and "V-SFL" are a side scattered light intensity and a fluorescence intensity obtained by irradiating particles in a measurement sample with light of a first wavelength (blue-violet laser), respectively.
Fig. 17 is a second scattergram for a normal specimen and an abnormal specimen in Example 1. In the figure, "R-FSC" is a forward scattered light intensity obtained by irradiating particles in a measurement sample with light of a second wavelength (red laser).
Fig. 18 is a second scattergram for a normal specimen and an abnormal specimen in Example 1. In the figure, "R-SSC" is a side scattered light intensity obtained by irradiating particles in a measurement sample with a red laser.
Fig. 19 is a histogram of fluorescence intensity for a normal specimen and an abnormal specimen in Example 2. In the figure, "Count" is the number of particles.
Fig. 20 is a second scattergram for a normal specimen and an abnormal specimen in Example 2.
Fig. 21 is a first scattergram for a normal specimen and an abnormal specimen in Example 3.
Fig. 22 is a first scattergram for a normal specimen and an abnormal specimen in Example 3.
Fig. 23 is a second scattergram for a normal specimen and an abnormal specimen in Example 3.
Fig. 24 is a second scattergram for a normal specimen and an abnormal specimen in Example 3.
Fig. 25 is a third scattergram for a normal specimen and an abnormal specimen in Example 4.
Fig. 26 is a third scattergram for a normal specimen and an abnormal specimen in Example 4.
Fig. 27 is a third scattergram for a normal specimen and an abnormal specimen in Example 4.
Fig. 28 is a first scattergram for a normal specimen and an abnormal specimen in Example 4.
Fig. 29 is a first scattergram for a normal specimen and an abnormal specimen in Example 4.
Fig. 30 is a first scattergram for a normal specimen and an abnormal specimen in Example 4.
Fig. 31 is a second scattergram for a normal specimen and an abnormal specimen in Example 4.
Fig. 32 is a second scattergram for a normal specimen and an abnormal specimen in Example 4.
Fig. 33 is a second scattergram for a normal specimen and an abnormal specimen in Example 4.
Fig. 34 is a first scattergram for a normal specimen and an abnormal specimen in Example 5.
Fig. 35 is a second scattergram for a normal specimen and an abnormal specimen in Example 5.
Fig. 36 is a first scattergram for a normal specimen and an abnormal specimen in Example 6.
Fig. 37 is a second scattergram for a normal specimen and an abnormal specimen in Example 6.
Fig. 38 is a second scattergram for a normal specimen and an abnormal specimen of Comparative Example. In the figure, "V-FSC" is a forward scattered light intensity obtained by irradiating particles in a measurement sample with a blue-violet laser.
Fig. 39 is a second scattergram for a normal specimen and an abnormal specimen of Comparative Example.
Fig. 40 is a first scattergram for a normal specimen and an abnormal specimen in Example 7.
Fig. 41 is a second scattergram for a normal specimen and an abnormal specimen in Example 7.
Fig. 42 is a first scattergram for a normal specimen and an abnormal specimen in Example 8.
Fig. 43 is a second scattergram for a normal specimen and an abnormal specimen in Example 8.
Fig. 44 is a first scattergram for a normal specimen and an abnormal specimen in Example 9.
Fig. 45 is a second scattergram for a normal specimen and an abnormal specimen in Example 9.

### DETAILED DESCRIPTION OF THE PREFERRED EMBODIMENTS

### (Analysis system)

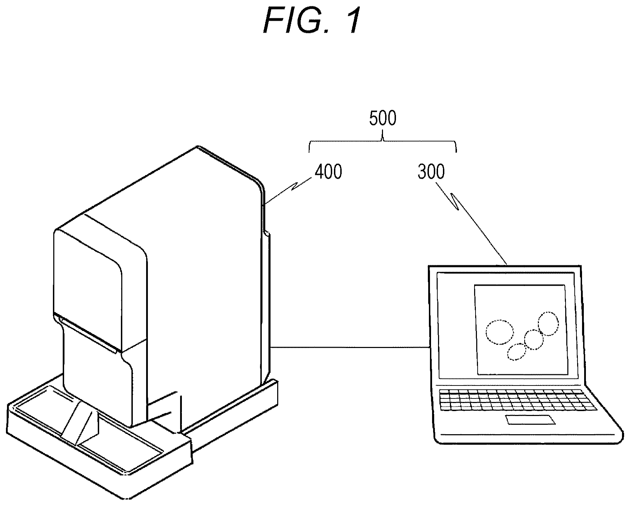

First, an analysis system suitable for a blood cell analysis method of the present embodiment will be described with reference to Fig. 1. An analysis system 500 includes a measurement unit 400 that is a measuring device and an analysis unit 300 that is an analyzer. The analysis unit 300 is, for example, a personal computer in which software for analyzing a specimen to be measured is incorporated. The analysis unit 300 also executes operation control of the measurement unit 400. The analysis system 500 may have a configuration in which the analysis unit 300 is provided in the measurement unit 400.

The measurement unit 400 is a unit for measuring a specimen. The measurement unit 400 includes a flow cytometer. In the measurement unit 400, a specimen and a reagent are mixed to prepare a measurement sample. In the preparation of the measurement sample, a staining reagent and a dilution reagent are used as reagents. The staining reagent contains a fluorescent dye for staining particles. The dilution reagent contains a buffer and a solvent. Details of the specimen, the staining reagent, and the dilution reagent will be described later. In the analysis of particles in the specimen by this analysis system, particles in the measurement sample stained with the fluorescent dye are analyzed. The "particles in the measurement sample" refers to a tangible component contained in the measurement sample that can be individually measured by an FCM detection section 460 described later. Examples of the particles in the measurement sample include cells, red blood cell ghost, platelet clumps, lipid particles, fungi, bacteria, and the like contained in the specimen. The term "cell" includes various blood cells and platelets. The red blood cell ghost may also be caused by hemolysis other than the hemolysis reagent, for example, a physical impact on a blood collection tube, a low pH and a low osmotic pressure of the measurement sample.

The measurement sample is measured by the FCM detection section 460 of the measurement unit 400. An optical signal related to fluorescence emitted from the fluorescent dye of the stained particles in the measurement sample and an optical signal related to scattered light emitted from the particles are acquired. The "fluorescent dye of the... particles" refers to a fluorescent dye bound to particles by staining. The mode of binding between the particle and the fluorescent dye is not particularly limited as long as the particle and the fluorescent dye are integrally measured by a flow cytometer. The acquired optical signals are A/D converted to acquire digital data. The analysis unit 300 analyzes the digital data acquired by the measurement unit 400 to specify and/or classify particles in the measurement sample.

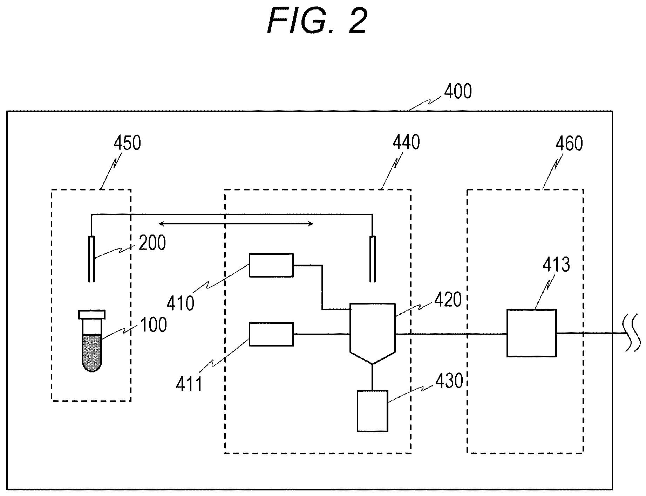

A configuration of a fluid system in the measurement unit 400 will be described with reference to Fig. 2. The measurement unit 400 includes a sample preparation section 440, a specimen suction section 450, and an FCM detection section 460. The sample preparation section 440 includes a reagent container 410, a reagent container 411, a reaction chamber 420, and a waste liquid chamber 430. For example, the reagent container 410 contains a dilution reagent, and the reagent container 411 contains a staining reagent. The reagent container 410 and the reagent container 411 are each connected to the reaction chamber 420 by a liquid feeding tube. The sample preparation section 440 injects the dilution reagent and the staining reagent into the reaction chamber 420 via each liquid feeding tube. The specimen suction section 450 includes a suction tube 200. The suction tube 200 sucks the specimen stored in a blood collection tube 100. The suction tube 200 discharges the sucked specimen to the reaction chamber 420. The reaction chamber 420 is connected to a flow cell 413 of the FCM detection section 460 by a liquid feeding tube.

The reaction chamber 420 is a container for preparing a measurement sample. In the reaction chamber 420, a specimen, a staining reagent containing a fluorescent dye, and a dilution reagent are mixed to prepare a measurement sample. The measurement sample in the reaction chamber 420 is supplied to the flow cell 413 of the FCM detection section 460 via the liquid feeding tube and measured. The FCM detection section 460 acquires various optical signals emitted from individual particles in the measurement sample. After the measurement by the FCM detection section 460 is completed, the measurement sample remaining in the reaction chamber 420 is discarded in the waste liquid chamber 430. The reaction chamber 420 is cleaned by a cleaning mechanism (not shown) before the next measurement sample is prepared.

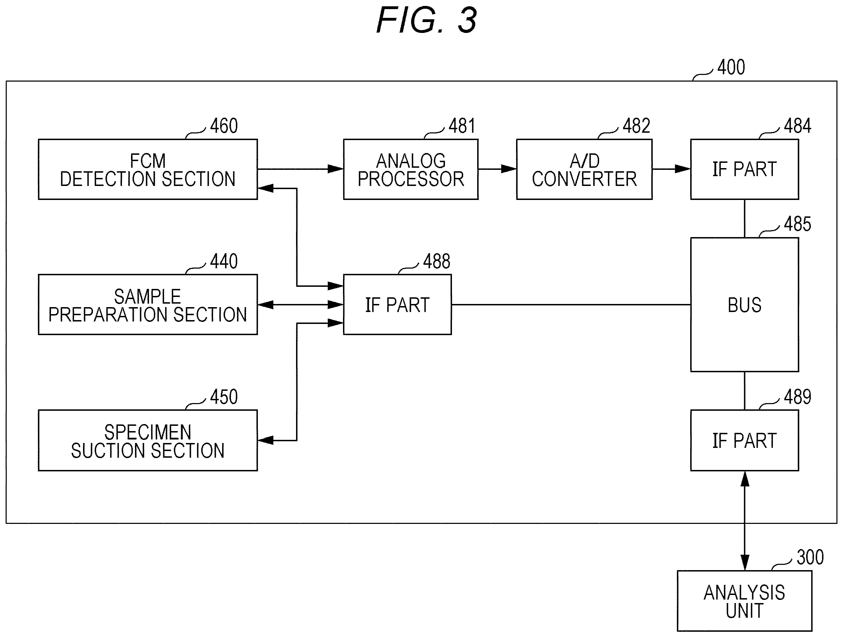

Electrical connection of each section in the measurement unit 400 will be described with reference to Fig. 3. The sample preparation section 440 and the specimen suction section 450 are connected to the FCM detection section 460 via an interface (IF) part 488. The FCM detection section 460 is connected to an analog processor 481 and an A/D converter 482. The analog processor 481 processes an analog signal output from the FCM detection section 460, and the A/D converter 482 converts an analog signal output from the analog processor 481 into a digital signal. The measurement unit 400 is connected to the analysis unit 300 via an IF part 489. An IF part 484, the IF part 488, and the IF part 489 are connected to a bus 485.

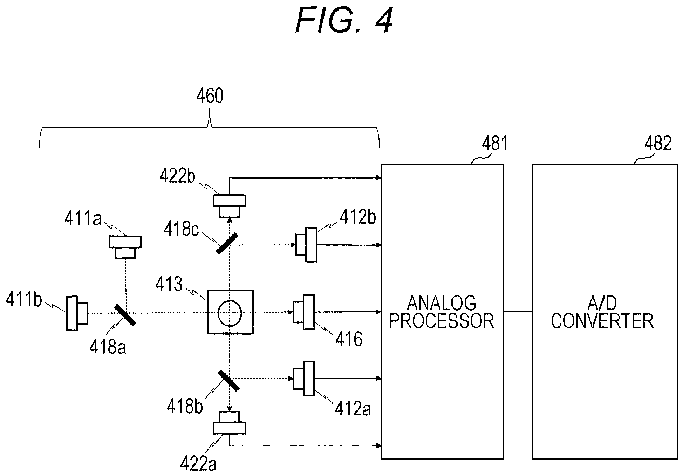

The FCM detection section 460, the analog processor 481, and the A/D converter 482 will be described with reference to Fig. 4. The FCM detection section 460 includes a first light source 411a and a second light source 411b, a flow cell 413, dichroic mirrors 418a, 418b, and 418c, side scattered light receiving elements 412a and 412b, a forward scattered light receiving element 416, and side fluorescent light receiving elements 422a and 422b. The first light source 411a and the second light source 411b emit lights having wavelengths different from each other. For example, the first light source 411a emits light having a first wavelength, and the second light source 411b emits light having a second wavelength. The first wavelength is preferably a wavelength absorbed by hemoglobin. Such a wavelength is, for example, 315 nm or more and 490 nm or less, preferably 400 nm or more and 450 nm or less, and more preferably 400 nm or more and 410 nm or less. As described later, when nucleated red blood cells are irradiated with light in the above wavelength range, the light is absorbed by hemoglobin in the nucleated red blood cells, and thus parameters such as intensity (peak value), pulse width, and pulse area of scattered light generated from the nucleated red blood cells tend to be smaller than those of white blood cells not containing hemoglobin. The second wavelength is a wavelength different from the first wavelength, and is preferably a wavelength not absorbed by hemoglobin. Such a wavelength is, for example, 610 nm or more and 750 nm or less, preferably 620 nm or more and 700 nm or less, and more preferably 633 nm or more and 643 nm or less. By using both light in the wavelength range absorbed by hemoglobin and light in the wavelength range not absorbed by hemoglobin, nucleated red blood cells and white blood cells can be clearly discriminated from each other. As the first and second light sources, for example, semiconductor laser light sources can be used.

The measurement sample prepared in the reaction chamber 420 flows into the flow cell 413 of the FCM detection section 460. In the example of Fig. 4, the measurement sample flows in a direction perpendicular to a paper surface. In a state where the measurement sample is flowing into the flow cell 413, light emitted from the first light source 411a is reflected by the dichroic mirror 418a, and the light is applied to individual particles in the measurement sample flowing in the flow cell 413. The light emitted from the second light source 411b is transmitted through the dichroic mirror 418a, and the light is applied to the individual particles in the measurement sample flowing in the flow cell 413.

In the example of Fig. 4, the forward scattered light receiving element 416 is disposed to receive forward scattered light emitted from the particles based on the light emitted from the second light source 411b. Alternatively, the forward scattered light receiving element 416 may be disposed to receive forward scattered light emitted from the particles based on the light emitted from the first light source 411a. Alternatively, another light receiving element may be disposed in order to receive forward scattered light emitted from the particles based on the light emitted from the first light source 411a. The forward scattered light is, for example, scattered light having a light receiving angle of 0 degrees to about 20 degrees. The forward scattered light receiving element 416 is, for example, a photodiode. The side scattered light corresponding to light emitted from the first light source 411a (the first side scattered light) is reflected by the dichroic mirror 418b, and the first side scattered light is received by the side scattered light receiving element 412a. The side scattered light corresponding to light emitted from the second light source 411b (the second side scattered light) is reflected by the dichroic mirror 418c, and the second side scattered light is received by the side scattered light receiving element 412b. The side scattered light is, for example, scattered light having a light receiving angle of about 20 degrees to about 90 degrees. The side scattered light receiving elements 412a and 412b are, for example, photodiodes.

When a fluorescent dye excited by the first wavelength is used, the side fluorescent light corresponding to light generated by exciting the first fluorescent dye (the first side fluorescent light) is transmitted through the dichroic mirror 418b, and the first side fluorescent light is received by the side fluorescent light receiving element 422a. When a fluorescent dye excited by the second wavelength is used, the side fluorescent light corresponding to light generated by exciting the first fluorescent dye (the second side fluorescent light) is transmitted through the dichroic mirror 418c, and the second side fluorescent light is received by the side fluorescent light receiving element 422b. The side fluorescent light receiving elements 422a and 422b are, for example, avalanche photodiodes.

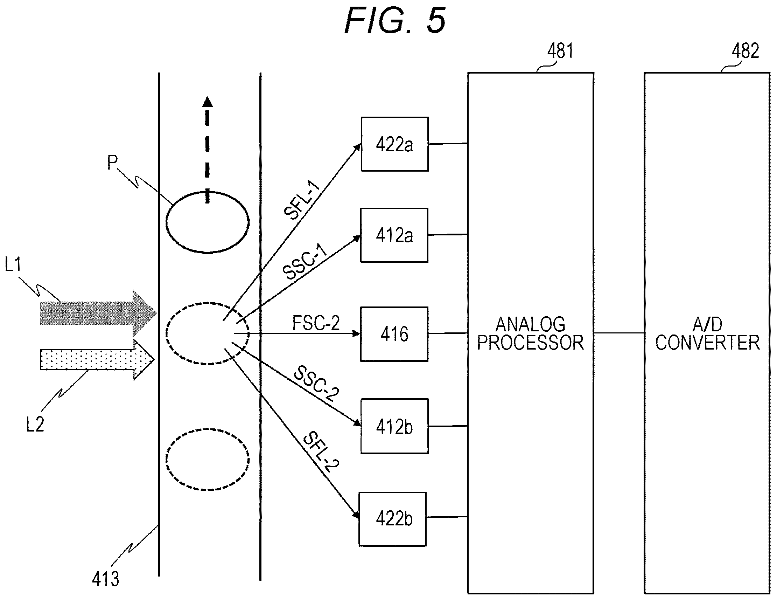

A relationship between various types of light emitted when a particle P passing through the flow cell 413 is irradiated with light and an optical system of the FCM detection section 460 will be described with reference to Fig. 5. In Fig. 5, the light emitted from the first light source 411a is light L1 having a first wavelength, and the light emitted from the second light source 411b is light L2 having a second wavelength. When the particle P passing through the flow cell 413 is irradiated with the lights L1 and L2, forward scattered light corresponding to each of the light of the first wavelength and the light of the second wavelength is generated forward with respect to the traveling direction of the light. In the example of Fig. 5, since the light receiving element 416 receives the forward scattered light corresponding to the light of the second wavelength, only a second forward scattered light (FSC-2) corresponding to the light of the second wavelength is shown, and a first forward scattered light (FSC-1) corresponding to the light of the first wavelength is omitted. Referring to Fig. 5, first side scattered light (SSC-1) corresponding to the light of the first wavelength and second side scattered light (SSC-2) corresponding to the light of the second wavelength are generated laterally with respect to the traveling direction of the light. When the particle P is stained with the fluorescent dye excited by the first wavelength, the first side fluorescence (SFL-1) excited by the light of the first wavelength is generated laterally with respect to the traveling direction of the light. Alternatively, when the particle P is stained with the fluorescent dye excited by the second wavelength, the second side fluorescence (SFL-2) excited by the light of the second wavelength is generated laterally with respect to the traveling direction of the light. In the blood cell analysis method of the present embodiment, any one of SFL-1 and SFL-2 is used depending on the type of fluorescent dye, but in the example of Fig. 5, a state in which both SFL-1 and SFL-2 are generated from the particle P is shown for the sake of explanation.

As described above, FSC-2, SSC-1, SFL-1, SSC-2, and SFL-2 are received by the light receiving elements 416, 412a, 422a, 412b, and 422b, respectively. Each light receiving element outputs a wave-shaped electric signal including a pulse corresponding to received light intensity (also referred to as an analog signal). Hereinafter, an analog signal corresponding to FSC-2 is also referred to as a "second forward scattered light signal", an analog signal corresponding to SSC-1 is also referred to as a "first side scattered light signal", an analog signal corresponding to SFL-1 is also referred to as a "first fluorescence signal", an analog signal corresponding to SSC-2 is also referred to as a "second side scattered light signal", and an analog signal corresponding to SFL-2 is also referred to as a "second fluorescence signal". When FSC-1 is received, an analog signal corresponding to FSC-1 is also referred to as a "first forward scattered light signal". One pulse of each analog signal corresponds to one particle (for example, one cell).

Analog signals corresponding to various types of light are input to the analog processor 481, and processing such as noise removal and smoothing is performed. The A/D converter 482 samples analog signals output from the analog processor 481 at a predetermined sampling rate (for example, sampling at 1024 points at intervals of 10 nanoseconds, sampling at 128 points at intervals of 80 nanoseconds, sampling at 64 points at intervals of 160 nanoseconds, or the like). The A/D converter 482 digitizes the sampled analog signal to generate waveform data. The A/D converter 482 samples and digitizes five types of analog signals corresponding to individual cells flowing through the flow cell 413 to generate waveform data of the second forward scattered light signal, the first side scattered light signal, the first fluorescence signal, the second side scattered light signal, and the second fluorescence signal. When FSC-1 is received, waveform data of the first forward scattered light signal is also generated. Furthermore, the A/D converter 482 calculates feature parameters representing morphological features of individual cell from the waveform data of each signal. Examples of such feature parameters include a peak value (height of a pulse peak), pulse width, pulse area, transmittance, Stokes shift, ratio, temporal change, values correlated thereto, and the like.

Optical information may be the feature parameter described above. The optical information includes fluorescence information, first scattered light information, and second scattered light information. The fluorescence information may be first fluorescence information or second fluorescence information. When a fluorescent dye capable of being excited by the light of the first wavelength is used as the fluorescent dye, first fluorescence information is acquired. When a fluorescent dye capable of being excited by the light of the second wavelength is used as the fluorescent dye, second fluorescence information is acquired. The first fluorescence information is information on fluorescence generated from the fluorescent dye of the stained particle by irradiating the measurement sample with the light of the first wavelength. The second fluorescence information is information on fluorescence generated from the fluorescent dye of the stained particle by irradiating the measurement sample with the light of the second wavelength. The fluorescence information is not particularly limited as long as it is information reflecting the amount of fluorescent dye that has stained a nucleic acid in a nucleated cell. As the first and second fluorescence information, a peak value of the first fluorescence signal (hereinafter, also referred to as "first fluorescence intensity") and a peak value of the second fluorescence signal (hereinafter, also referred to as "second fluorescence intensity") are respectively preferable.

The first scattered light information is information on scattered light generated from the particle by irradiating the measurement sample with the light of the first wavelength. The second scattered light information is information on scattered light generated from the particle by irradiating the measurement sample with the light of the second wavelength. The first scattered light information includes first forward scattered light information and first side scattered light information, and the second scattered light information includes second forward scattered light information and second side scattered light information. The forward scattered light information is not particularly limited as long as it is information reflecting particle size. As the first and second forward scattered light information, a peak value of the first forward scattered light signal (hereinafter, also referred to as "first forward scattered light intensity") and a peak value of the second forward scattered light signal (hereinafter, also referred to as "second forward scattered light intensity") are respectively preferable. The side scattered light information is not particularly limited as long as the side scattered light information is information reflecting internal information such as complexity of cell structure, granule characteristics, nuclear structure, and degree of lobulation. As the first and second side scattered light information, a peak value of the first side scattered light signal (hereinafter, also referred to as "first side scattered light intensity") and a peak value of the second side scattered light signal (hereinafter, also referred to as "second side scattered light intensity") are respectively preferable.

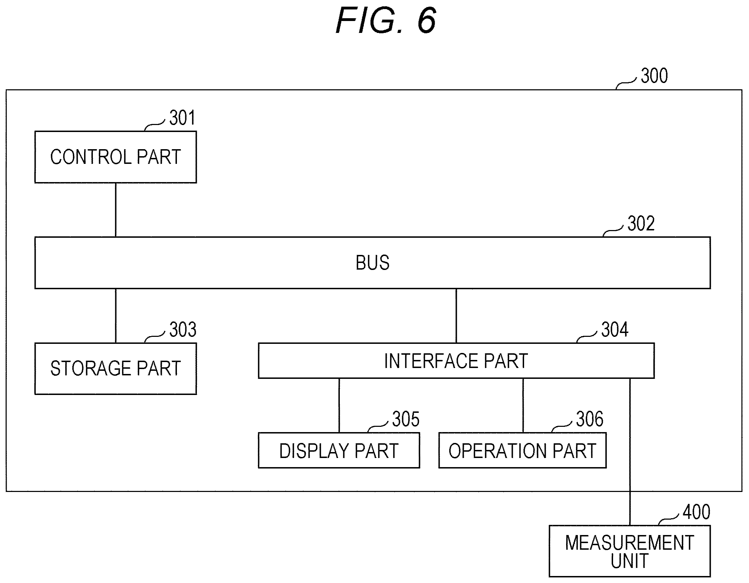

Electrical connection of each section in the analysis unit 300 will be described with reference to Fig. 6. The analysis unit 300 is electrically connected to the measurement unit 400 via an interface part 304. The interface part 304 is, for example, a USB interface. The analysis unit 300 includes a control part 301, a bus 302, a storage part 303, the interface part 304, a display part 305, and an operation part 306. The analysis unit 300 includes, for example, a personal computer (see the analysis unit 300 in Fig. 1). The analysis unit 300 controls the measurement unit 400 of the analysis system 500 by executing a program stored in the storage part 303. The analysis unit 300 analyzes the data including optical information acquired by the measurement unit 400. The analysis unit 300 displays the analysis result on the display part 305. The analysis unit 300 may perform cell classification based on the optical information.

The storage part 303 stores, for example, a program for controlling the measurement unit 400, a program for analyzing data acquired by the measurement unit 400, and the like. The display part 305 displays, for example, an analysis result of data acquired by the measurement unit 400. The operation part 306 includes a keyboard, a mouse, or a pointing device including a touch panel.

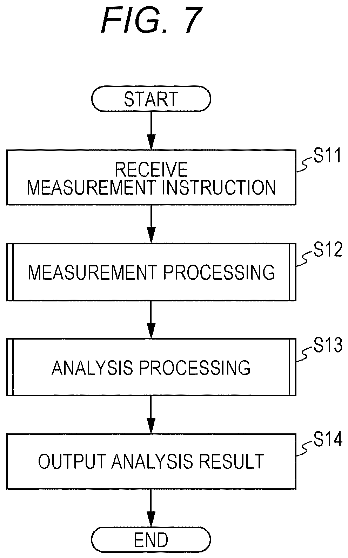

An example of the operation of the analysis system 500 will be described with reference to Fig. 7, but it is not limited to this example. In step S11, the control part 301 of the analysis unit 300 receives an instruction to start measurement from a user via the operation part 306. Upon receiving the instruction to start measurement, the control part 301 transmits instruction data for instructing the measurement start to the measurement unit 400. The measurement unit 400 receives the instruction data to execute measurement processing in step S12.

The blood cell analysis method of the present embodiment includes, for example, Embodiments 1 and 2 as follows. In "Embodiment 1", a measurement sample prepared from a specimen is measured, and a population of nucleated cells is specified from particles in the measurement sample. Then, nucleated red blood cells are specified from the population of nucleated cells, and white blood cells are classified into subpopulations. In "Embodiment 2", a measurement sample prepared from a specimen is measured, and a particle population excluding a platelet is specified from particles in the measurement sample. Next, the population of nucleated cells is specified from the particle population excluding a platelet. Then, in the same manner as in Embodiment 1, nucleated red blood cells are specified from the population of nucleated cells, and white blood cells are classified into subpopulations.

### (Measurement processing)

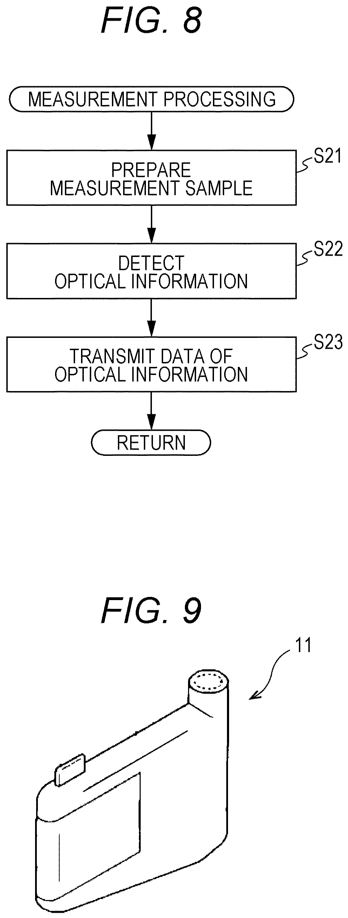

With respect to step S12 in Fig. 7, an example of measurement processing of Embodiments 1 and 2 will be described with reference to Fig. 8, but it is not limited to this example. In step S21, the control part 301 of the analysis unit 300 causes the measurement unit 400 to prepare a measurement sample from the specimen. Specifically, the measurement unit 400 mixes the specimen, the staining reagent, and the dilution reagent in the reaction chamber 420 to prepare a measurement sample. In step S22, the control part 301 causes the measurement unit 400 to lead the measurement sample to the FCM detection section 460, and the control part 301 executes optical measurement by a flow cytometry method. As a result, the measurement unit 400 detects optical information on individual particles in the measurement sample, for example, waveform data of SSC-1, SSC-2, FSC-2 (or FSC-1), and SFL-1 (or SFL-2). In step S23, the control part 301 causes the measurement unit 400 to transmit the optical information to the analysis unit 300, and the control part 301 ends the measurement processing. Then, the analysis unit 300 executes the analysis processing in step S13 in Fig. 7. An example of the analysis processing of each embodiment will be described later.

### (Specimen)

The specimen is a blood specimen. Examples of the blood specimen include whole blood, a dilution of whole blood, and the like. The whole blood is, for example, peripheral blood collected from a subject. The blood specimen may include an anticoagulant. Examples of the anticoagulant include ethylenediaminetetraacetic acid (EDTA), EDTA salts (for example, EDTA · 2K, EDTA · 2Na, and the like), sodium citrate, heparin, warfarin, and the like. The dilution of whole blood is obtained, for example, by diluting whole blood with a suitable aqueous solvent, preferably a dilution reagent described later. Examples of the aqueous solvent include water, physiological saline, aqueous solutions of buffers, and the like.

In the present specification, the "blood component" includes a tangible component known to be contained in blood and an abnormal cell. The tangible component known to be contained in blood is, for example, blood cells usually contained in peripheral blood of a healthy person. Examples of such blood cells include white blood cells, mature red blood cells, and platelets. The "mature red blood cell" is a terminally differentiated red blood cell having no nucleus and nucleic acid, and is synonymous with the term "red blood cell" used in the field of clinical examination. In the present specification, the term "mature red blood cell" is used for distinguishing from the nucleated red blood cell. The "abnormal cell" refers to a tangible component that does not usually appear in blood or body fluid. Examples of the abnormal cell in blood include a nucleated red blood cell. The "nucleated red blood cell" is also called NRBC or erythroblast, and includes proerythroblasts, basophilic erythroblasts, polychromatic erythroblasts, and orthochromatic erythroblasts. The abnormal cell also includes non-cellular particles and microorganisms. Examples of the non-cellular particle include red blood cell ghost, lipid particles, and platelet clumps. Platelet clumps occur in a blood collection tube due to contamination or insufficient mixing of tissue fluid during blood collection or action of EDTA. Examples of the microorganism include bacteria, fungi, and the like.

### (Dilution reagent)

The dilution reagent used for preparing the measurement sample will be described. The dilution reagent contains a buffer and a solvent. Preferably, the dilution reagent contains a solution of a buffer. Examples of the solvent include water, physiological saline, and the like, and water is particularly preferable. The buffer preferably has a buffering action in a pH range of 6 or more and 11 or less. Such a buffer can be selected from, for example, carboxylates, phosphates, good buffers, taurine, triethanolamine, and the like. The pH of the dilution reagent is, for example, 6 or more and 11 or less, preferably 7 or more and 10 or less, and more preferably 8 or more and 9.5 or less. When the pH of the dilution reagent is 6 or more, mature red blood cells are less likely to be hemolyzed in the measurement sample. Thus, the occurrence of red blood cell ghost can be suppressed. When the pH of the dilution reagent is 11 or less, non-specific staining of mature red blood cells and red blood cell ghosts with the fluorescent dye can be reduced. A preferred dilution reagent is an aqueous solution of the buffer having a pH of 6 or more and 11 or less.

In addition to the above buffers, the dilution reagent may further contain components such as an osmotic pressure compensator, a staining promoter, a polyvalent anion, and a preservative. The osmotic pressure compensator is a substance capable of maintaining the osmotic pressure of the dilution reagent within an appropriate range. Examples of the osmotic pressure compensator include alkali metal salts of organic acids such as propionic acid, saccharides such as glucose and mannose, alkali metal halides such as sodium chloride, and alkaline earth metal halides such as magnesium chloride. The osmotic pressure compensator may be used alone or in combination of two or more. When the osmotic pressure compensator is used, the osmotic pressure compensator is preferably added to the dilution reagent so that the osmotic pressure of the dilution reagent is 150 mOsm/kg or more and 600 mOsm/kg or less, and more preferably 200 mOsm/kg or more and 300 mOsm/kg or less.

The staining promoter is a substance capable of promoting permeability of a fluorescent dye to blood cells. Examples of the staining promoter include surfactants, and cationic surfactants are preferable. As the cationic surfactant, a quaternary ammonium salt type surfactant is particularly preferable, and examples thereof include decyltrimethylammonium bromide (DTAB), lauryltrimethylammonium chloride (LTAC), octyltrimethylammonium bromide, cetyltrimethylammonium chloride, myristyltrimethylammonium bromide, and the like. These cationic surfactants may be used alone or in combination of two or more.

The concentration of the cationic surfactant in the dilution reagent is not particularly limited as long as hemolysis of mature red blood cells can be suppressed. For example, it can be appropriately determined from a range of 50 ppm or more and 20,000 ppm or less. Specifically, when DTAB is used, the concentration of DTAB in the dilution reagent is preferably 500 ppm or more and 3,000 ppm or less. When LTAC is used, the concentration of LTAC in the dilution reagent is preferably 100 ppm or more and 500 ppm or less. When the cationic surfactant is contained in the dilution reagent at such a concentration, hemolysis of mature red blood cells can be suppressed, and staining of blood cells with the fluorescent dye can be promoted.

The polyvalent anion is added to the dilution reagent to suppress non-specific staining of mature red blood cells with the fluorescent dye. Examples of the polyvalent anion include a sulfate ion, a phosphate ion, a carbonate ion, a polyvalent carboxylate ion, and the like. Examples of the compound capable of supplying these ions include citric acid, sulfuric acid, phosphoric acid, EDTA, and alkali metal salts thereof. The polyvalent anion may be used alone or in combination of two or more.

Examples of the preservative contained in the dilution reagent include sodium 2-pyridylthio-1-oxide, β-phenethyl alcohol, and the like.

In the blood cell analysis method of the present embodiment, a commercially available dilution reagent may be used. Examples of commercially available dilution reagent include Cell Pack (registered trademark) DFL, Cell Pack DCL, Cell Pack DST (all manufactured by Sysmex Corporation), and the like.

### (Staining reagent and fluorescent dye)

The staining reagent used for preparing the measurement sample will be described. A fluorescent dye suitable for the staining reagent is a fluorescent dye that can be excited by the first wavelength or the second wavelength and can bind to a nucleic acid. Such a fluorescent dye is known per se. The fluorescent dye that can be excited by the first wavelength and can bind to the nucleic acid can be selected from, for example, an acridine compound, a cyanine compound, a styryl compound, and a coumarin compound. The fluorescent dye that can be excited by the second wavelength and can bind to the nucleic acid can be selected from, for example, a cyanine compound, a styryl compound, a phenoxazine compound, a phenothiazine compound, and an azo(triazine) compound. By binding the fluorescent dye to the nucleic acid, it is possible to discriminate between non-nucleated cells such as mature red blood cells and platelets and nucleated cells such as nucleated red blood cells and white blood cells.

Examples of the fluorescent dye of the acridine compound include fluorescent dyes represented by the above formula (I). The fluorescent dye represented by the above formula (I) may be a fluorescent dye that can be excited by the light of the first wavelength. The "alkyl group" may be linear or branched. With regard to R₁ to R₁₂ in the formula (I), examples of the alkyl group having 1 to 18 carbon atoms include methyl, ethyl, propyl, isopropyl, t-butyl, n-butyl, isopentyl, neopentyl, t-pentyl, isohexyl, heptyl, octyl, decyl, dodecyl, tetradecyl, hexadecyl, octadecyl, and the like. The number of carbon atoms in the alkyl group is preferably 1 to 10, more preferably 1 to 6, and particularly preferably 1 to 3. Preferred examples of the alkyl group include methyl, ethyl, propyl, isopropyl, t-butyl, n-butyl, isopentyl, neopentyl, t-pentyl, isohexyl, and the like. With regard to R₁₃ in the formula (I), the number of carbon atoms in the alkyl group is preferably 1 to 3.

The "halogen" is fluorine, chlorine, bromine, or iodine. The "haloalkyl group" is an alkyl group in which at least one hydrogen is substituted with a halogen. When the haloalkyl group contains two or more halogens, the halogens may be the same or may contain a plurality of kinds. The "aminoacyl group" is a group obtained by removing OH from a carboxy group (-COOH) of an amino acid. Examples of the aminoacyl group include an alanyl group, an arginyl group, an asparagyl group, an aspartic acid group, a cysteinyl group, a cystyl group, a glutamic acid group, a glutamyl group, a glycyl group, a histidyl group, a hydroxylysyl group, a hydroxyprolyl group, an isoleucyl group, a leucyl group, a lysyl group, a methionyl group, a phenylalanyl group, a prolyl group, a ceryl group, a threonyl group, a tryptophyl group, a tyrosyl group, a valyl group, a β-alanyl group, a β-lysyl group, an N,N-dimethylglycyl group, a 2-aminobutyryl group, a 4-hydroxyphenylglycyl group, a phenylglycyl group, a 2,4-diaminobutyryl group, an ornithyl group, a homoceryl group, and the like. The aminoacyl group may be either D- or L- form.

Examples of the substituent of the phenyl group include -NH₂, halogen, -OH, - SH, -CN, -NO₂, -COOH, and an alkyl group having 1 to 6 carbon atoms. Examples of the counter ion X⁻ in the formula (I) include F⁻, Cl⁻, Br⁻, I⁻, 1/2SO₄²⁻, NO₃⁻, and the like. When X⁻ is Cl⁻, 1/2SO₄²⁻or NO₃⁻, an acid capable of supplying those ions, for example, HCl, H₂SO₄ or HNO₃, may be added to the fluorescent dye. Lactic acid may be added to the fluorescent dye as the counter ion X⁻.

Examples of the fluorescent dye of the cyanine compound include fluorescent dyes represented by the above formulas (II) to (VI). The fluorescent dye represented by these formulas may be a fluorescent dye that can be excited by the light of the first wavelength or the second wavelength. In the blood cell analysis method of the present embodiment, since the light of the first wavelength and the light of the second wavelength are irradiated, fluorescence can be generated from any of the fluorescent dyes of the above formulas (II) to (VI).

The alkyl group in the above formulas (II) to (VI) is the same as that described for the formula (I). With regard to R₁ and R₂ in the formulas (II) to (VI) above, examples of the alkenyl group having 3 to 20 carbon atoms include allyl, propenyl, isopropenyl, butenyl, isobutenyl, pentenyl, isopentenyl, hexenyl, heptenyl, octenyl, decenyl, dodecenyl, tetradecenyl, hexadecenyl, octadecenyl, icosenyl, and the like. The number of carbon atoms in the alkenyl group is preferably 3 to 14, more preferably 3 to 10, and particularly preferably 3 to 6.

The substituent of the phenyl group in the above formulas (II) to (VI) is the same as that described for the formula (I). Examples of the substituent of the benzyl group in the formulas (II) to (VI) include -CN, -COOH, -NH₂, -NO₂, -OH, -SH, an alkyl group having 1 to 18 carbon atoms, an alkoxy group having 1 to 6 carbon atoms, an alkylamino group having 1 to 6 carbon atoms, an acylamino group having 1 to 6 carbon atoms, a halogen, and a haloalkyl group having 1 to 6 carbon atoms. Examples of the counter ion Z⁻ in the above formulas (II) to (VI) include F⁻, Cl⁻, Br⁻, I⁻, CF₃SO₃⁻, BF₄⁻, ClO₄⁻, and the like.

Examples of the fluorescent dye of the styryl compound include fluorescent dyes represented by the above formulas (VII) to (IX). The fluorescent dye represented by these formulas may be a fluorescent dye that can be excited by the light of the first wavelength or the second wavelength. In the blood cell analysis method of the present embodiment, since the light of the first wavelength and the light of the second wavelength are irradiated, fluorescence can be generated from any of the fluorescent dyes of the above formulas (VII) to (IX).

The substituents of the alkyl group and the phenyl group in the above formulas (VII) to (IX) are the same as those described for the formula (I). The substituents of the alkenyl group and the benzyl group are the same as those described for the above formulas (II) to (VI). In the above formulas (VII) and (IX), a heterocyclic ring formed by R₂ and/or R₃ together with a benzene ring to which N is bonded may be a five-membered ring or a six-membered ring. The heterocyclic ring may have a substituent. Examples of the substituent include an alkyl group having 1 to 3 carbon atoms. Examples of the counter ion Z⁻ in the above formulas (VII) to (IX) include F⁻, Cl⁻, Br⁻, I⁻, CF₃SO₃⁻, BF₄⁻, ClO₄⁻, and the like.

Examples of the fluorescent dye of the phenoxazine compound include fluorescent dyes represented by the above formula (X). Examples of the phenothiazine compound include fluorescent dyes represented by the above formula (XI). The fluorescent dyes represented by the above formulas (X) and (XI) may be fluorescent dyes that can be excited by the light of the second wavelength.

The substituents of the alkyl group, the aminoacyl group, and the phenyl group in the above formulas (X) and (XI) are the same as those described for the formula (I). In the above formulas (X) and (XI), a benzene ring formed by bonding R₁ and R₈ to each other and a benzene ring formed by bonding R₆ and R₇ to each other may have a substituent. Examples of the substituent include -CN, -COOH, -NH₂, -NO₂, -OH, -SH, an alkyl group having 1 to 18 carbon atoms, an alkoxy group having 1 to 6 carbon atoms, an alkylamino group having 1 to 6 carbon atoms, an acylamino group having 1 to 6 carbon atoms, a halogen, and a haloalkyl group having 1 to 6 carbon atoms. Examples of the counter ion X⁻ in the above formulas (X) and (XI) include F⁻, Cl⁻, Br⁻, I⁻, CF₃SO₃⁻, BF₄⁻, ClO₄⁻, ZnCl₄²⁻, acetate ions, and the like.

Examples of the fluorescent dye of the coumarin compound include fluorescent dyes represented by the above formula (XII). The fluorescent dye represented by the above formula (XII) may be a fluorescent dye that can be excited by the light of the first wavelength. The substituents of the alkyl group, the aminoacyl group, and the phenyl group in the above formula (XII) are the same as those described for the formula (I). The heterocyclic ring formed by R₃ and/or R₄ together with a benzene ring to which N is bonded is the same as that described for the formulas (VII) and (IX). The ring formed by bonding R₁ and R₂ to each other may be an aliphatic ring or an aromatic ring. Preferably, it is an aliphatic five-membered ring. When R₂ is a benzimidazole ring, a benzothiazole ring, a benzoxazole ring, or a pyridine ring, these rings may have a substituent. Examples of the substituent include an alkyl group having 1 to 3 carbon atoms.

The staining reagent preferably contains a solution of a fluorescent dye. The solvent is not particularly limited as long as it can dissolve the fluorescent dye described above. Examples thereof include water, organic solvents, and mixtures thereof. The organic solvent is preferably a solvent that can be mixed with water, and examples thereof include alcohols having 1 to 6 carbon atoms, ethylene glycol, diethylene glycol, polyethylene glycol, dimethyl sulfoxide (DMSO), and the like. The concentration of the fluorescent dye in the staining reagent can be appropriately determined according to the type of fluorescent dye. The concentration of the fluorescent dye may be, for example, 100 ppm or more, preferably 500 ppm or more, and more preferably 1,000 ppm or more. The concentration of the fluorescent dye may be, for example, 100,000 ppm or less, preferably 50,000 ppm or less, and more preferably 10,000 ppm or less.

As described above, since the fluorescent dye itself binds to the nucleic acid of the cell, it is not necessary to stain the cell using an antibody labeled with the fluorescent dye in the blood cell analysis method of the present embodiment. Therefore, in the blood cell analysis method of the present embodiment, the fluorescent dye does not contain an antibody.

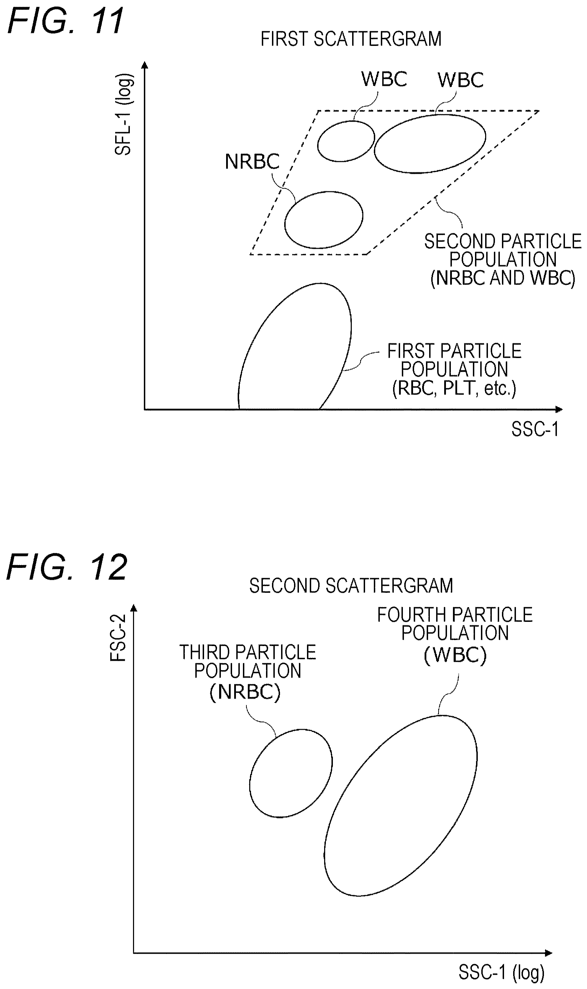

The staining reagent containing the fluorescent dye may be provided as a reagent for blood cell analysis for use in the blood cell analysis method of the present embodiment. The reagent for blood cell analysis of the present embodiment may be, for example, in a form in which the solution of the fluorescent dye is stored in a container. Referring to Fig. 9, 11 denotes a container containing the reagent for blood cell analysis of the present embodiment. When the container 11 is stored in a packing box, an attached document describing a composition, a use method, a storage method, and the like of a reagent for blood cell analysis, a buffer material for reducing an impact from outside, and the like may also be stored.

A further embodiment relates to a use of a fluorescent dye for manufacture of a reagent for blood cell analysis. Details of the fluorescent dye and the reagent for blood cell analysis are as described above.

### (Preparation of measurement sample)

The fluorescent dye is mixed with the specimen and the dilution reagent so that the concentration (final concentration) in the measurement sample is within a predetermined range. The final concentration of the fluorescent dye in the measurement sample is preferably 500 ppm or less, more preferably 100 ppm or less, and further preferably 50 ppm or less. The final concentration of the fluorescent dye in the measurement sample is preferably 0.01 ppm or more, more preferably 0.1 ppm or more, and further preferably 1 ppm or more.

The mixing ratio of the dilution reagent, the staining reagent, and the specimen can be appropriately determined according to the concentration of the fluorescent dye in the staining reagent and the type of the specimen. The mixing ratio of the dilution reagent, the staining reagent, and the specimen is preferably, for example, 1000 : 0.1 or more : 1 or more in volume ratio. The mixing ratio is more preferably 1000 : 0.5 or more : 5 or more, and further preferably 1000 : 1 or more: 10 or more. The mixing ratio of the dilution reagent, the staining reagent, and the specimen is preferably, for example, 1000 : 50 or less : 100 or less in volume ratio. The mixing ratio is more preferably 1000 : 30 or less : 50 or less, and further preferably 1000 : 20 or less : 25 or less. The mixing ratio of the staining reagent and the specimen may be the same or different.

As described above, the blood cell analysis method of the present embodiment enables detection of nucleated red blood cells without using a hemolysis reagent. Therefore, in the blood cell analysis method of the present embodiment, the measurement sample does not contain a hemolysis reagent. That is, the blood cell analysis method of the present embodiment does not include hemolyzing a mature red blood cell in the preparation of the measurement sample. The hemolysis reagent is a reagent for dissolving mature red blood cells in a specimen by being mixed with the specimen. The hemolysis reagent itself is known, and for example, a surfactant is contained in a concentration capable of dissolving mature red blood cells.

### (Analysis processing of Embodiment 1)

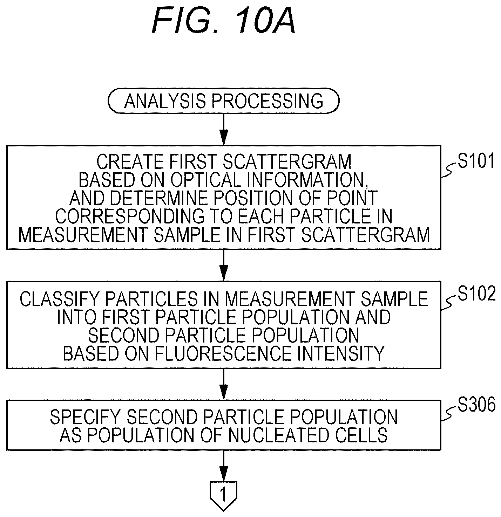

With respect to step S13 in Fig. 7, an example of analysis processing of Embodiment 1 will be described with reference to Figs. 10A to 13, but it is not limited to this example. In this example, the first side scattered light intensity (hereinafter, also referred to as "SSC-1 strength") is used as the first scattered light information. The second forward scattered light intensity (hereinafter, also referred to as "FSC-2 strength") and the second side scattered light intensity (hereinafter, also referred to as "SSC-2 strength") are used as the second scattered light information. The first side fluorescence intensity (hereinafter, also referred to as "SFL-1 intensity") is used as the fluorescence information.

Referring to Fig. 10A, in this analysis processing, first, a population of nucleated cells is specified from particles in the measurement sample. In the blood cell analysis method of the present embodiment, since a hemolysis reagent is not used, the measurement sample contains mature red blood cells. That is, the data acquired from the measurement unit 400 includes optical information of mature red blood cells. In this analysis processing, the particles in the measurement sample are classified into a population of nucleated cells and a particle population not containing a nucleus and a nucleic acid of a mature red blood cell or the like based on fluorescence information, thereby specifying the population of nucleated cells. Nucleated cells have a large amount of nucleic acid, and are strongly stained with the fluorescent dye described above. On the other hand, cells and particles not containing a nucleus and a nucleic acid of a mature red blood cell, platelets, debris and the like are hardly stained or weakly stained with a fluorescent dye as described above. Therefore, the population of nucleated cells and the particle population not containing a nucleus and a nucleic acid can be discriminated based on a difference in fluorescence information.

Specification of the population of nucleated cells based on fluorescence information can be performed, for example, by analysis using a scattergram. Hereinafter, the scattergram for specifying the population of nucleated cells is also referred to as a "first scattergram". The first scattergram is created based on the first or second scattered light information and the fluorescence information. For example, in the first scattergram, the first or second scattered light information is taken on a horizontal axis, and the fluorescence information is taken on a vertical axis. Referring to Fig. 10A, in step S101, the analysis unit 300 creates a first scattergram having two axes of the scattered light intensity and the fluorescence intensity based on the acquired optical information. Then, in the first scattergram, a position of a point corresponding to each particle is determined. In this example, in the first scattergram, the SSC-1 intensity is taken on a horizontal axis, and the SFL-1 intensity is taken on a vertical axis. However, the first scattergram is not limited to this example. The scattered light information of the first scattergram may be FSC-2 intensity, SSC-2 intensity, or FSC-1 intensity. The fluorescence information may be the SFL-2 intensity. If necessary, the axis of the fluorescence intensity of the first scattergram may be displayed in logarithm. By logarithmically displaying the fluorescence intensity, the distance between the population of nucleated cells and the population including mature red blood cells, platelets, debris and the like increases on the first scattergram. This makes it easier to specify the population of nucleated cells on the scattergram.

Referring to Fig. 10A, in step S102, the analysis unit 300 classifies the particles in the measurement sample into a first particle population and a second particle population based on the fluorescence intensity. The second particle population is a population indicating a higher fluorescence intensity than that of the first particle population. Referring to Fig. 11, in the first scattergram, the first particle population and the second particle population indicating a higher fluorescence intensity than that of the first particle population appear. The second particle population is a population composed of particles in a region surrounded by a dashed line. Comparison of the fluorescence intensity between the particle populations in the scattergram can be performed by, for example, a statistical representative value of the fluorescence intensity of each particle population. The statistical representative value of the fluorescence intensity of one particle population is a value acquired from the fluorescence intensity of the particles constituting the particle population, and examples thereof include median, average, mode, and the like. The statistical representative value of the SSC intensity of one subpopulation of white blood cells is preferably median. The statistical representative value of the fluorescence intensity of the particle population is calculated by the analysis unit 300.

As described above, particles not containing a nucleus and a nucleic acid of a mature red blood cell, platelets, debris and the like are less likely to be stained with a fluorescent dye than nucleated cells, and thus have a lower fluorescence intensity. Therefore, as shown in Fig. 11, the first particle population includes mature red blood cells (RBC), platelets (PLT), debris, and the like. The second particle population includes nucleated cells. Specifically, the second particle population includes a population of nucleated red blood cells (NRBC) and a population of white blood cells (WBC). As described above, in the first scattergram, the particles in the measurement sample are classified into the first particle population including mature red blood cells and the second particle population including nucleated cells. In Fig. 11, there are two populations of white blood cells, and this indicates that the white blood cells formed a subpopulation according to the SSC-1 intensity. However, it is not limited to this example, and one population may appear as a population of white blood cells or three groups may appear on the first scattergram.

Referring to Fig. 10A, in step S103, the analysis unit 300 specifies the second particle population as the population of nucleated cells. As described above, since the second particle population includes nucleated cells, the second particle population can be specified as the population of nucleated cells. For example, by accumulating measurement data for a plurality of specimens, a region where the second particle population appears in the first scattergram may be determined in advance, and particles appearing in the region may be specified as the population of nucleated cells.

In step S103, since the population of nucleated cells is specified, data of particles not containing a nucleus and a nucleic acid of a mature red blood cell and the like is excluded from data of particles in the measurement sample. If necessary, the cells included in the population of nucleated cells may be counted.

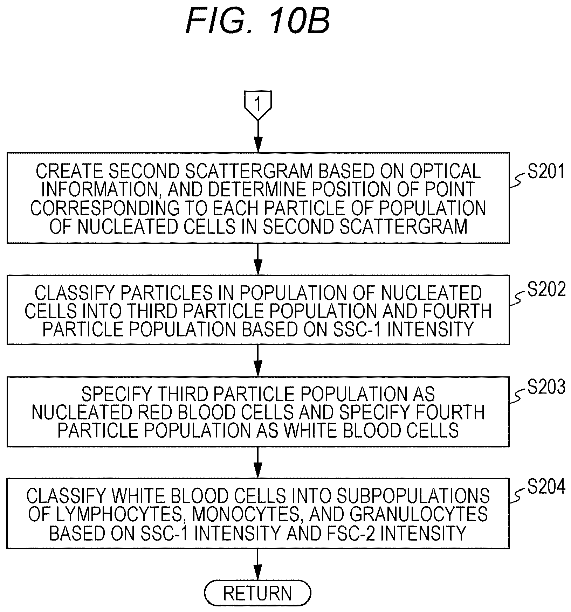

Referring to Fig. 10B, the process proceeds to step S201. In this analysis processing, nucleated red blood cells and white blood cells are specified from the population of nucleated cells. When the specimen does not contain nucleated red blood cells, white blood cells are specified. In this analysis processing, the nucleated red blood cells and the white blood cells are specified by classifying each particle of the nucleated cells into a population of nucleated red blood cells and a population of white blood cells based on the first and second scattered light information. It is known that hemoglobin contained in the nucleated red blood cells absorbs blue-violet light. When nucleated red blood cells are irradiated with the light of the first wavelength corresponding to blue-violet light, scattered light generated from the nucleated red blood cells is weaker than scattered light generated when the light of the second wavelength corresponding to red light is irradiated. Therefore, conventionally, red light has been preferably used for blood cell analysis. On the other hand, when the white blood cells are irradiated with the light of the first wavelength and the light of the second wavelength, there is almost no difference in the intensity of the generated scattered light. The present inventors have conceived discrimination between a population of nucleated red blood cells and a population of white blood cells using the above phenomenon. Specifically, irradiation with the light of the first wavelength causes a difference in the first scattered light information between the nucleated red blood cells and the white blood cells. For example, when the first scattered light information is the SSC-1 intensity, the SSC-1 intensity of nucleated red blood cells is low due to absorption by hemoglobin. However, the SSC-1 intensity of white blood cells is not affected. Therefore, a difference in the SSC-1 intensity between the nucleated red blood cells and the white blood cells increases. The present inventors have made it clear that the population of nucleated red blood cells and the population of white blood cells can be separated on the scattergram by combining the first scattered light information and the second scattered light information.

Specification of the nucleated red blood cells based on the first and second scattered light information can be performed, for example, by analysis using a scattergram. Hereinafter, the scattergram for specifying nucleated red blood cells is also referred to as a "second scattergram". The second scattergram is created based on the first scattered light information and the second scattered light information. For example, in the second scattergram, the first side scattered light information or the first forward scattered light information is taken on a horizontal axis, and the second forward scattered light information or the second side scattered light information is taken on a vertical axis. Referring to Fig. 10B, in step S201, the analysis unit 300 creates a second scattergram having two axes of the first scattered light information and the second scattered light information based on the acquired optical information. Then, in the second scattergram, a position of a point corresponding to each particle is determined. In this example, in the second scattergram, the SSC-1 intensity is taken on a horizontal axis, and the FSC-2 intensity is taken on a vertical axis. However, the second scattergram is not limited to this example, and the first scattered light information of the second scattergram may be the FSC-1 intensity, and the second scattered light information may be the SSC-2 intensity. If necessary, the axis that takes the first scattered light information of the second scattergram may be displayed in logarithm. By displaying the first scattered light information in logarithm, the distance between the population of nucleated red blood cells and the population of white blood cells increases on the second scattergram. This makes it easier to specify the population of nucleated red blood cells on the scattergram.

Referring to Fig. 10B, in step S202, the analysis unit 300 classifies the particles in the population of nucleated cells into a third particle population and a fourth particle population based on the SSC-1 intensity. The fourth particle population is a population indicating a higher SSC-1 intensity than that of the third particle population. Comparison of the side scattered light intensity between the particle populations in the second scattergram is preferably performed by, for example, a statistical representative value of the side scattered light intensity of each particle population. The statistical representative value of the scattered light intensity of one particle population is a value acquired from the scattered light intensity of the particles constituting the particle population, and examples thereof include median value, average, mode, and the like. The statistical representative value of the SSC intensity of one subpopulation of white blood cells is preferably median. Referring to Fig. 12, when the specimen contains nucleated red blood cells, the third particle population and the fourth particle population indicating a higher SSC-1 intensity than that of the third particle population appear in the second scattergram. As described above, since the hemoglobin of the nucleated red blood cells absorbs the light of the first wavelength, the SSC-1 intensity of the nucleated red blood cells decreases. Therefore, in the second scattergram, the population of nucleated red blood cells appears in a region where the SSC-1 intensity is low. Therefore, as shown in Fig. 12, the third particle population is a population of nucleated red blood cells (NRBC). On the other hand, since white blood cells do not have hemoglobin, the light of the first wavelength is not absorbed. Therefore, in the second scattergram, the population of white blood cells appears in a region where the SSC-1 intensity is higher than that of the population of nucleated red blood cells. Thus, the fourth particle population is a population of white blood cells. As described above, in the second scattergram, the particles in the population of nucleated cells are classified into the population of nucleated red blood cells and the population of white blood cells.

Referring to Fig. 10B, in step S203, the analysis unit 300 specifies the third particle population as nucleated red blood cells, and specifies the fourth particle population as white blood cells. For example, by accumulating measurement data for a plurality of specimens, a region where each of the third and fourth particle populations appears in the second scattergram may be determined in advance, and particles appearing in the region may be specified as the population of nucleated red blood cells and the population of white blood cells. If necessary, the cells included in each of the population of nucleated red blood cells and the population of white blood cells may be counted. The process proceeds to step S204.

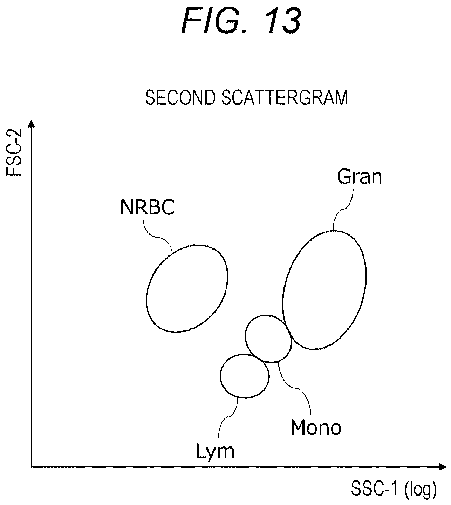

In step S204, the analysis unit 300 classifies the population of white blood cells into subpopulations of lymphocytes, monocytes, and granulocytes based on the first and second scattered light information. The granulocyte is a generic term for neutrophils, eosinophils, and basophils. As the first and second scattered light information, for example, a combination of the SSC-1 intensity or the FSC-1 intensity and the FSC-2 intensity or the SSC-2 intensity can be used. Referring to Fig. 13, each subpopulation of white blood cells is distributed on the second scattergram. In this figure, white blood cells are classified into three subpopulations, a lymphocyte (Lym) subpopulation, a monocyte (Mono) subpopulation, and a granulocyte (Gran) subpopulation, but are not limited thereto. In a specimen in which nucleated red blood cells appear, it is known that there is also an abnormality in white blood cells. For example, some of the subpopulation of white blood cells may be reduced to a degree that is difficult to classify. White blood cells may be classified into two populations, for example, a population of lymphocytes or monocytes and a population of granulocytes.

In the classification of white blood cells into subpopulations, for example, by accumulating measurement data for a plurality of specimens, a region where each subpopulation of white blood cells appears in the second scattergram may be determined in advance, and particles appearing in the region may be specified as the subpopulation of white blood cells. If necessary, the cells included in each subpopulation of white blood cells may be counted. After executing the white blood cell classification, the analysis unit 300 ends the analysis processing, and the process proceeds to step S14 in Fig 7.

### (Modification of Embodiment 1)

In a modification of Embodiment 1, the second particle population is specified from the particles in the measurement sample using a threshold value for fluorescence intensity without creating a first scattergram. For example, first, a threshold value that can distinguish between the first particle population and the second particle population is determined for the fluorescence intensity. Then, particles indicating a higher fluorescence intensity than the threshold value are extracted from the particles in the measurement sample, and the particles are specified as the second particle population.

In a further modification of Embodiment 1, the second particle population is specified from the particles in the measurement sample using a histogram for fluorescence intensity without creating a first scattergram. For example, first, a histogram based on the fluorescence intensity and the number of particles is created for the particles in the measurement sample. In this histogram, a peak corresponding to the population of nucleated cells appears on the side where the fluorescence intensity is high (see Example 2 described later). Particles included in this peak may be extracted, and the particles may be specified as the second particle population. Alternatively, in this histogram, particles indicating a higher fluorescence intensity than the threshold value may be extracted, and the particles may be specified as the second particle population.

### (Analysis processing of Embodiment 2)

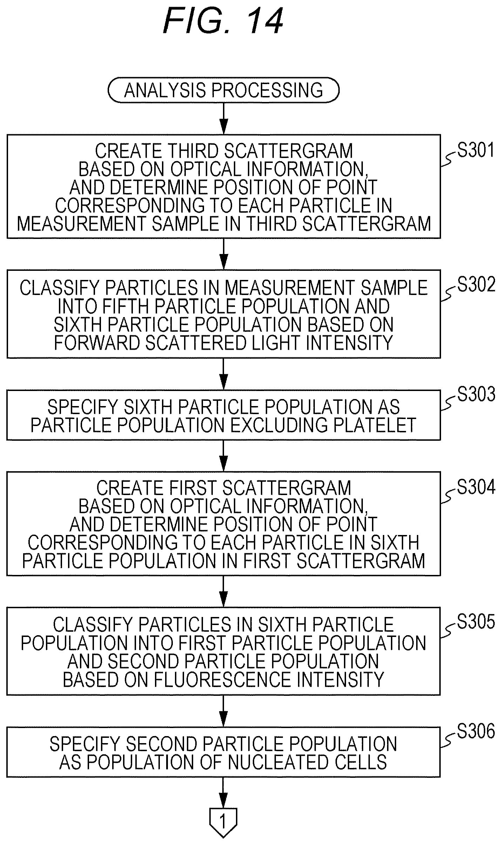

With respect to step S13 in Fig. 7, an example of analysis processing of Embodiment 2 will be described with reference to Figs. 14 to 15, but it is not limited to this example. As described above, in the analysis processing of Embodiment 2, before specifying a population of nucleated cells, platelets are excluded from the particles in the measurement sample, thereby specifying a particle population excluding a platelet. For example, in the case of analyzing a specimen in which platelets increase or the like, nucleated red blood cells can be detected more accurately by removing platelets in advance from the particles in the measurement sample. Platelets are smaller in size than other blood cells. Therefore, the population of platelets and the particle population excluding a platelet can be discriminated based on a difference in forward scattered light information. This is because the forward scattered light information is information reflecting particle size. The particle population excluding a platelet includes, for example, mature red blood cells, nucleated red blood cells, white blood cells, and the like.

Referring to Fig. 14, in the analysis processing of Embodiment 2, before executing steps S101 to S103 of Embodiment 1, steps S301 to S303 are executed to exclude a platelet from the particles in the measurement sample, thereby specifying the particle population excluding a platelet. Then, instead of steps S101 to S103 of Embodiment 1, steps S304 to S306 are executed to specify a population of nucleated cells from the particle population excluding a platelet.

The particle population excluding a platelet based on the forward scattered light information can be specified by, for example, analysis using a scattergram. Hereinafter, the scattergram for specifying the particle population excluding a platelet is also referred to as a "third scattergram". The third scattergram is created based on the forward scattered light information and the side scattered light information or the fluorescence information. For example, in the third scattergram, the first side scattered light information, the first fluorescence information, the second side scattered light information, or the second fluorescence information is taken on a horizontal axis, and the first or second forward scattered light information is taken on a vertical axis. Referring to Fig. 14, in step S301, the analysis unit 300 creates a third scattergram having two axes of the side scattered light intensity or the fluorescence intensity and the forward scattered light intensity based on the acquired optical information. Then, in the third scattergram, a position of a point corresponding to each particle is determined. In this example, in the third scattergram, the SSC-2 intensity is taken on a horizontal axis, and the FSC-2 intensity is taken on a vertical axis. However, the third scattergram is not limited to this example, and the forward scattered light information of the third scattergram may be the FSC-1 intensity. Instead of the SSC-2 intensity, the SSC-1 intensity, the SFL-1 intensity, or the SFL-2 intensity may be used. If necessary, the horizontal axis and/or the vertical axis of the third scattergram may be displayed in logarithm. By logarithmically displaying the optical information on the horizontal axis and/or the vertical axis of the scattergram, the distance between the population of platelets and the particle population excluding a platelet increases in the third scattergram. This makes it easier to specify the particle population excluding a platelet on the scattergram.

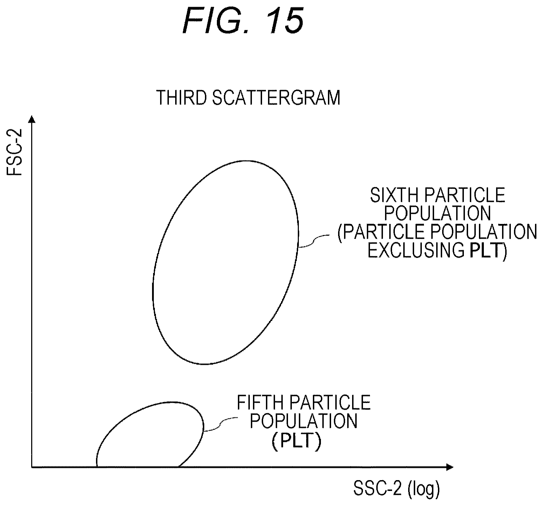

Referring to Fig. 14, in step S302, the analysis unit 300 classifies the particles in the measurement sample into a fifth particle population and a sixth particle population indicating a higher forward scattered light intensity than that of the fifth particle population based on the forward scattered light intensity. Referring to Fig. 15, in the third scattergram, the fifth particle population appears in a region where the forward scattered light intensity is low. The sixth particle population appears in a region where the forward scattered light intensity is high. As described above, since the platelet is smaller in size than the other blood cells, the forward scattered light intensity decreases. Therefore, as shown in Fig. 15, the fifth particle population is a population of platelets (PLT). The sixth particle population indicating a higher forward scattered light intensity than that of the fifth particle population is a particle population excluding a platelet. As described above, in the third scattergram, the particles in the measurement sample are classified into the particle population of platelets and the particle population excluding a platelet.

Referring to Fig. 14, in step S303, the analysis unit 300 specifies the sixth particle population as the particle population excluding a platelet. For example, by accumulating measurement data for a plurality of specimens, a region where the sixth particle population appears in the third scattergram may be determined in advance, and particles appearing in the region may be specified as the population of nucleated cells.

In Fig. 15, there is one particle population excluding a platelet, but it is not limited to this example. For example, when a scattergram having two axes of the SSC-1 intensity and the FSC-2 intensity is created as the third scattergram, the particle population excluding a platelet can be separated into two or more. This is because mature red blood cells and nucleated red blood cells in the particle population excluding a platelet contain hemoglobin, so that the SSC-1 intensity decreases. Therefore, the particle population excluding a platelet can be separated into the population containing mature red blood cells and nucleated red blood cells and the population containing white blood cells. The population of white blood cells may also be separated into subpopulations according to the SSC-1 intensity. Furthermore, when a scattergram having two axes of FSC-2 intensity and fluorescence intensity is created as the third scattergram, the particle population excluding a platelet can be separated into three. Specifically, when the specimen contains nucleated red blood cells, the particle population excluding a platelet can be separated into the population containing mature red blood cells, the population containing nucleated red blood cells, and the population containing white blood cells according to the fluorescence intensity.

Referring to Fig. 14, in step S304, the analysis unit 300 creates the first scattergram in which the scattered light intensity is taken on a horizontal axis and the fluorescence intensity is taken on a vertical axis based on the optical information of the sixth particle population. Then, in the first scattergram, a position of a point corresponding to each particle is determined. In step S305, the analysis unit 300 classifies the particles in the sixth particle population into a first particle population and a second particle population indicating a higher fluorescence intensity than that of the first particle population based on the fluorescence intensity. Steps S304 and S305 are the same as steps S101 and S102 except that the optical information of the sixth particle population is used instead of the optical information of the particles in the measurement sample. In step S406, the analysis unit 300 specifies the second particle population as the population of nucleated cells in the same manner as in step S103. Then, the process proceeds to step S201 in Fig. 10B. The subsequent analysis is similar to that described in Embodiment 1.

### (Output of analysis result)

Referring to Fig. 7, when the analysis processing of Embodiment 1 or 2 is ended, the control part 301 outputs the analysis result to the display part 305 in step S14, and the control part 301 ends the processing. The analysis result screen output to the display part 305 may include, for example, the number of nucleated red blood cells, the number of white blood cells, and the number of each subpopulation of white blood cells (lymphocytes, monocytes, and granulocytes). In addition to these pieces of information, the screen may include a scattergram created based on the optical information. The screen may further include a flag based on the analysis result. For example, when nucleated red blood cells are specified, information indicating that the nucleated red blood cell is present in the specimen may be output. For example, a flag "NRBC?" may be output to the display part 305. Not displaying the flag on the display part 305 can be information indicating the absence of a nucleated red blood cell.

As described above, the blood cell analysis method of the present embodiment can provide a medical worker such as a doctor or a medical technician with information on whether or not a specimen contains nucleated red blood cells, and if so, the number of nucleated red blood cells as an analysis result of nucleated cells. Analysis results for white blood cells can also be provided. The medical worker can determine, for example, whether or not to further examine the specimen from the acquired analysis result. The preparation of the measurement sample and analysis of the specimen described above are all performed in vitro.

Hereinbelow, the present invention will be described in detail by examples, but the present invention is not limited to these examples.

### EXAMPLES

In the following Examples, the blood cell analysis method of the present embodiment was performed using the following blood specimen, dilution reagent, staining reagent, and analyzer. Details are as described in [Measurement method] below.

### [Blood specimen]

Peripheral blood obtained from a plurality of healthy person was used as a normal specimen. A plurality of whole blood specimens known to contain nucleated red blood cells were used as abnormal specimens.

### [Dilution reagent]

Cell Pack (registered trademark) DFL (Sysmex Corporation) was used as a dilution reagent for diluting whole blood.

### [Staining reagent]

Various fluorescent dyes capable of binding to nucleic acid were dissolved in DMSO so as to have a concentration of 5,000 ppm to prepare a staining reagent. The type of fluorescent dye used was described in each Example.

### [Analyzer]

A prototype modified from flow cytometer XF-1600 (Sysmex Corporation) was used as an analyzer. The prototype was prepared as follows. XF-1600 had three semiconductor laser light sources that emit blue-violet (405 nm) light, blue (488 nm) light, and red (638 nm) light, respectively, a detector for scattered light of each color, and a detector for fluorescence excited by each light. A semiconductor laser light source that emits blue (488 nm) light was removed from XF-1600. The semiconductor laser light source was modified into an FCM system including two semiconductor laser light sources. An FCM detection section of the analyzer had the configuration of Fig. 4. The analyzer did not include a sample preparation section 440, and had the same configuration as the measurement unit shown in Figs. 2 and 3 except that the sample sucked by a suction tube 200 is fed via a liquid feeding tube connecting the suction tube 200 and a flow cell 413.

### [Measurement method]

Preparation and measurement of the measurement sample were performed according to a manual attached to XF-1600, except that Cell Pack DFL and the staining reagent were used. A measurement sample was prepared by mixing a staining reagent (2 µL) with Cell Pack DFL (1000 µL) heated to 40°C, and further mixing whole blood (15 µL). The measurement sample was measured after incubation at 40°C for 25 seconds. The dilution ratio of the staining reagent in the measurement sample was 508.5. The final concentration of the fluorescent dye in the measurement sample was 9.83 ppm.

### Example 1: Blood cell analysis using acridine fluorescent dye

A measurement sample was prepared using a staining reagent containing Acridine Yellow (3,6-Diamino-2,7-dimethylacridinium) as a fluorescent dye, and nucleated red blood cells and white blood cells in the measurement sample were classified by the analyzer. Acridine Yellow was an acridine fluorescent dye excited by a blue-violet laser.

### (1) Measurement

Each measurement sample was measured by the analyzer to acquire first scattered light information, second scattered light information, and fluorescence information. The first scattered light information was side scattered light intensity obtained by irradiating the particles in the measurement sample with a blue-violet laser (hereinafter, also referred to as "side scattered light intensity (blue-violet)" or "V-SSC"). The second scattered light information was forward scattered light intensity obtained by irradiating the particles in the measurement sample with a red laser (hereinafter, also referred to as "forward scattered light intensity (red)" or "R-FSC") and side scattered light intensity obtained by irradiating the particles in the measurement sample with a red laser (hereinafter, also referred to as "side scattered light intensity (red)" or "R-SSC"). The fluorescence information was fluorescence intensity obtained by irradiating the particles in the measurement sample with a blue-violet laser (hereinafter, also referred to as "fluorescence intensity (blue-violet)" or "V-SFL").

### (2) Analysis

### (2.1) Analysis by first scattergram (V-SSC/V-SFL)

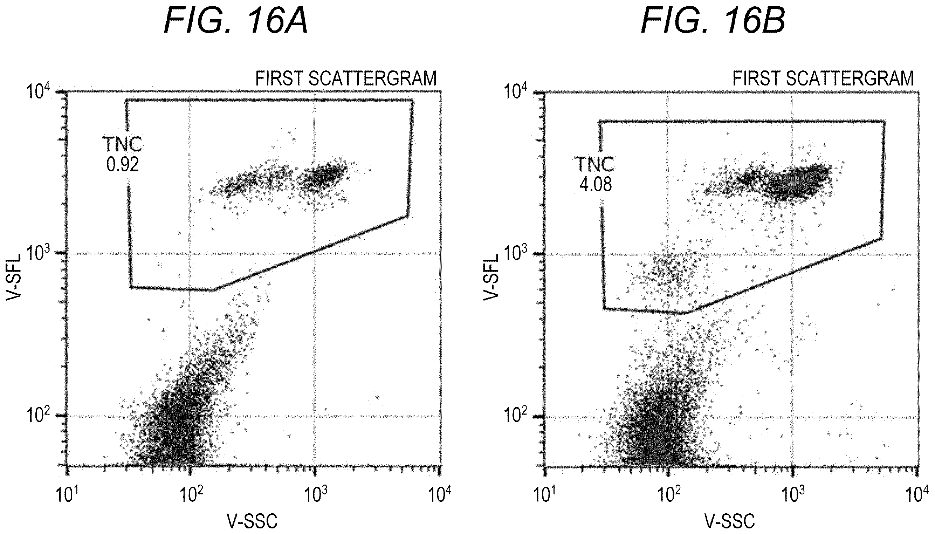

For each measurement sample, a first scattergram in which the side scattered light intensity (blue-violet) was taken on a horizontal axis and the fluorescence intensity (blue-violet) was taken on a vertical axis was created. The first scattergrams for the normal specimen and the abnormal specimen are shown in Figs. 16A and 16B, respectively. Hereinafter, in the figures, "TNC" represents total nucleated cells. Referring to Fig. 16, in either specimen, a population indicating a high fluorescence intensity and a population having a lower fluorescence intensity than that of the population were recognized. As described above, nucleated cells are strongly stained with a fluorescent dye capable of binding to nucleic acid, but cells and particles not containing a nucleus and a nucleic acid of a mature red blood cell, platelets, debris and the like are hardly stained or weakly stained with the fluorescent dye. Therefore, in each scattergram, a population appeared in a region where the fluorescence intensity (blue-violet) was high (a region surrounded by a solid line) was specified as nucleated cells. Comparing Fig. 16A with Fig. 16B, the number of nucleated cells was larger in the scattergram of Fig. 16B. This reflected that the abnormal specimen contained nucleated red blood cells. Nucleated cells specified in each first scattergram were extracted (gated).

### (2.2) Analysis by second scattergram (V-SSC/R-FSC)

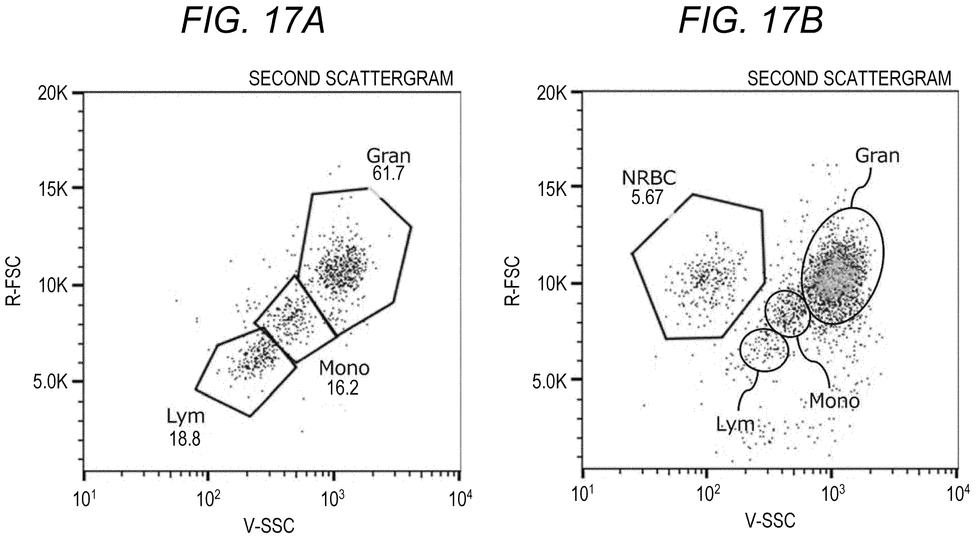

The nucleated cells gated in the first scattergram were displayed on the second scattergram in which the side scattered light intensity (blue-violet) was taken on a horizontal axis and the forward scattered light intensity (red) was taken on a vertical axis. The second scattergrams for the normal specimen and the abnormal specimen are shown in Figs. 17A and 17B, respectively. Hereinafter, in the figures, "Gran" represents granulocytes, "Mono" represents monocytes, "Lyn" represents lymphocytes, and "NRBC" represents nucleated red blood cells. Referring to Fig. 17A, in the normal specimen, white blood cells contained as nucleated cells were classified into lymphocytes, monocytes, and granulocytes. In the normal specimen, particles classified as nucleated red blood cells hardly appeared. Referring to Fig. 17B, in the abnormal specimen, nucleated red blood cells contained as nucleated cells were specified, and white blood cells were classified into lymphocytes, monocytes, and granulocytes. Comparing Fig. 17A with Fig. 17B, white blood cells were more clearly classified into subpopulations in the scattergram of Fig. 17A. It is known that in a disease in which nucleated red blood cells appear in peripheral blood, there are many cases in which abnormality also occurs in white blood cells. Therefore, it may be difficult to clearly classify white blood cells of the abnormal specimen into subpopulations.

As described above, since the measurement sample was prepared under non-hemolytic conditions without using a hemolysis reagent, the measurement sample contained red blood cells. However, by gating the nucleated cells based on the fluorescence intensity in the first scattergram, mature red blood cells could be excluded. Thus, in the second scattergram, it was shown that nucleated red blood cells can be specified and white blood cells can be classified without being affected by mature red blood cells.

### (2.3) Analysis by another second scattergram (V-SSC/R-SSC)

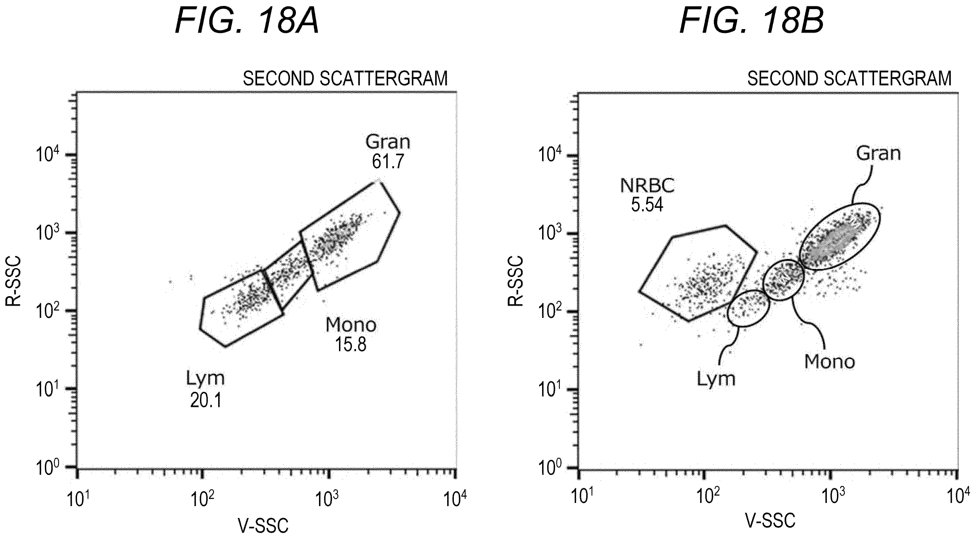

As another second scattergram, nucleated cells gated on the first scattergram were displayed on a scattergram in which the side scattered light intensity (blue-violet) was taken on a horizontal axis and the side scattered light intensity (red) was taken on a vertical axis. The second scattergrams for the normal specimen and the abnormal specimen are shown in Figs. 18A and 18B, respectively. Referring to Fig. 18A, in the normal specimen, white blood cells contained as nucleated cells were classified into lymphocytes, monocytes, and granulocytes. In the normal specimen, particles classified as nucleated red blood cells hardly appeared. Referring to Fig. 17B, in the abnormal specimen, nucleated red blood cells contained as nucleated cells were specified, and white blood cells were classified into lymphocytes, monocytes, and granulocytes. It was shown that nucleated red blood cells can be specified and white blood cells can be classified even when the vertical axis of the second scattergram is changed from R-FSC to R-SSC.

### Example 2: Blood cell analysis using acridine fluorescent dye (2)

In Example 2, nucleated cells in the measurement sample were specified using a histogram for fluorescence intensity instead of the first scattergram. Otherwise in the same manner as in Example 1, a measurement sample was prepared using a staining reagent containing Acridine Yellow, and measurement and analysis by the analyzer were performed. The normal specimen and the abnormal specimen used in Example 2 were the same as those in Example 1.

### (1) Measurement

Each measurement sample was measured by the analyzer to acquire first scattered light information, second scattered light information, and fluorescence information. The first scattered light information was side scattered light intensity (blue-violet). The second scattered light information was forward scattered light intensity (red). The fluorescence information was fluorescence intensity (blue-violet).

### (2) Analysis

### (2.1) Analysis by histogram (V-SFL)

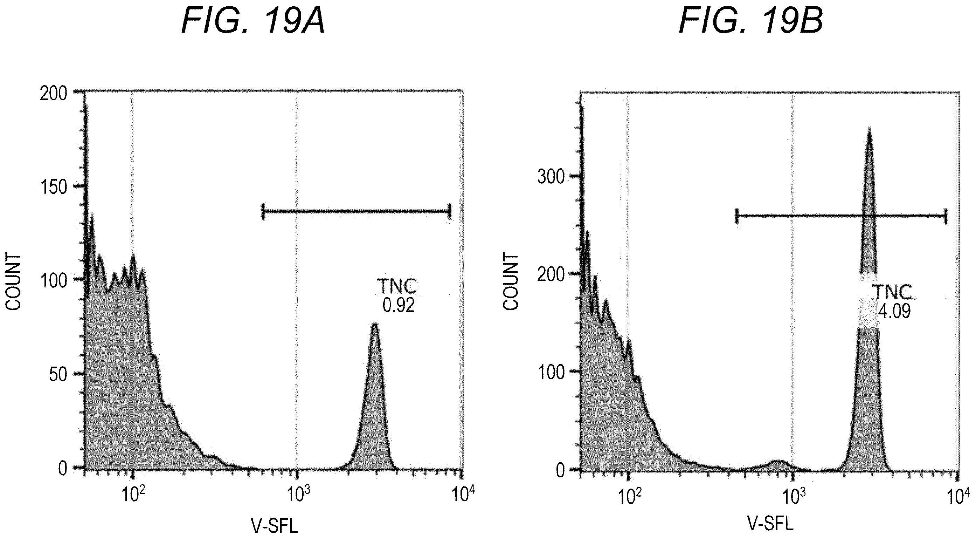

For each measurement sample, a histogram in which the fluorescence intensity (blue-violet) was taken on a horizontal axis and the number of particles (Count) was taken on a vertical axis was created. The histograms for the normal specimen and the abnormal specimen are shown in Figs. 19A and 19B, respectively. Referring to Fig. 19, a peak was observed on the right side (the side where the fluorescence intensity was high) in the histogram of either specimen. In addition, a large number of particles were observed on the left side (the side where the fluorescence intensity was low) of each histogram. In each histogram, particles having a high fluorescence intensity (blue-violet) (particles within the range indicated by a horizontal line in the figure) were specified as nucleated cells. Comparing Fig. 19A with Fig. 19B, the number of nucleated cells was larger in the histogram of Fig. 19B. This reflected that the abnormal specimen contained nucleated red blood cells. The nucleated cells specified by each histogram were extracted.

### (2.2) Analysis by second scattergram (V-SSC/R-FSC)

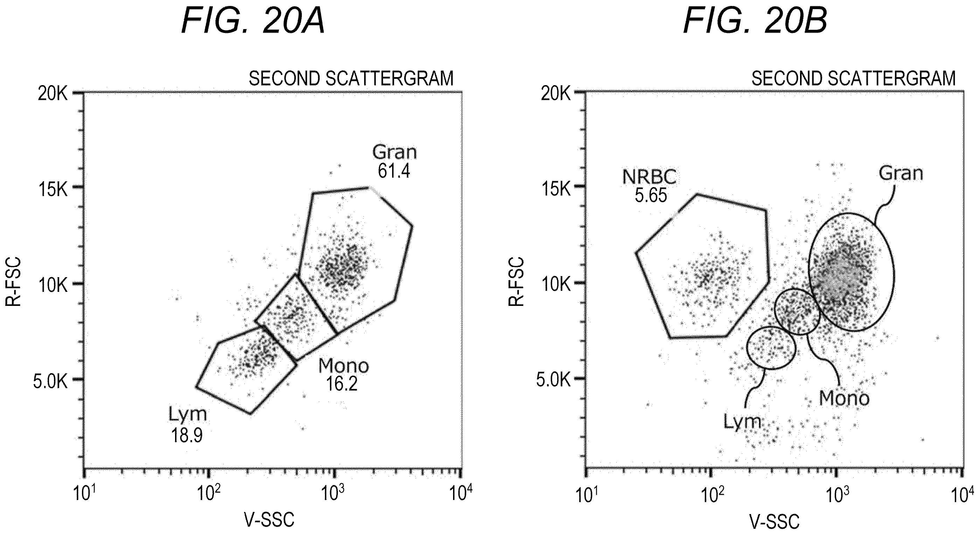

The nucleated cells extracted from the histogram were displayed on the second scattergram in which the side scattered light intensity (blue-violet) was taken on a horizontal axis and the forward scattered light intensity (red) was taken on a vertical axis. The second scattergrams for the normal specimen and the abnormal specimen are shown in Figs. 20A and 20B, respectively. Referring to Fig. 20A, in the normal specimen, white blood cells contained as nucleated cells were classified into lymphocytes, monocytes, and granulocytes. In the normal specimen, particles classified as nucleated red blood cells hardly appeared. Referring to Fig. 20B, in the abnormal specimen, nucleated red blood cells contained as nucleated cells were specified, and white blood cells were classified into lymphocytes, monocytes, and granulocytes. As described above, it was shown that nucleated cells can be specified from the particles in the measurement sample even when the histogram of fluorescence intensity is used instead of the first scattergram. It was shown that nucleated red blood cells can be specified and white blood cells can be classified from the nucleated cells specified by the histogram.

### Example 3: Blood cell analysis using acridine fluorescent dye (3)

In Example 3, nucleated cells in the measurement sample were specified using a first scattergram different from that in Example 1. Otherwise in the same manner as in Example 1, a measurement sample was prepared using a staining reagent containing Acridine Yellow, and measurement and analysis by the analyzer were performed. The normal specimen and the abnormal specimen used in Example 3 were the same as those in Example 1.

### (1) Measurement

Each measurement sample was measured by the analyzer to acquire first scattered light information, second scattered light information, and fluorescence information. The first scattered light information was side scattered light intensity (blue-violet). The second scattered light information was the forward scattered light intensity (red) and the side scattered light intensity (red). The fluorescence information was fluorescence intensity (blue-violet).

### (2) Analysis

### (2.1) Analysis by first scattergram (R-SSC/V-SFL)

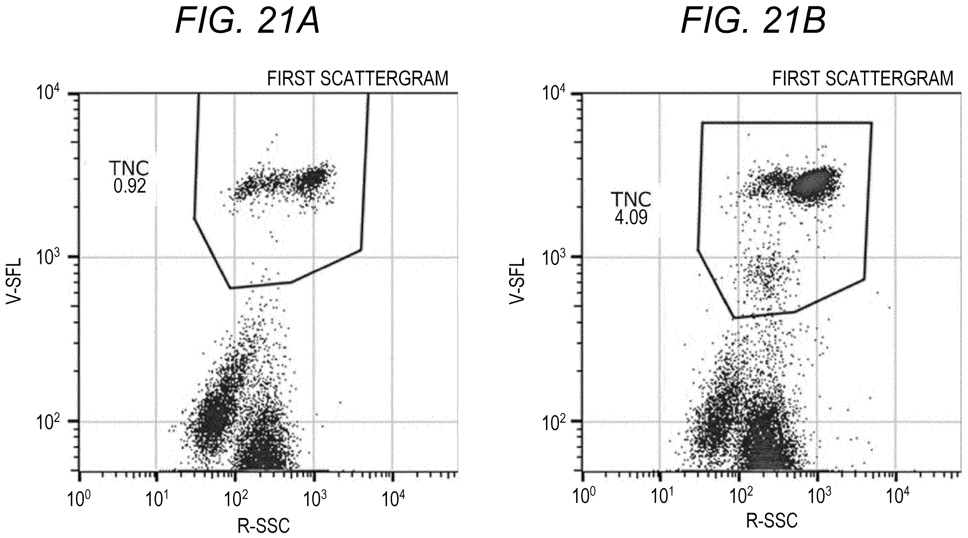

For each measurement sample, a first scattergram in which the side scattered light intensity (red) was taken on a horizontal axis and the fluorescence intensity (blue-violet) was taken on a vertical axis was created. The first scattergrams for the normal specimen and the abnormal specimen are shown in Figs. 21A and 21B, respectively. Referring to Fig. 21, in either specimen, a population indicating a high fluorescence intensity and a population having a lower fluorescence intensity than that of the population were recognized. In each scattergram, a population appeared in a region where the fluorescence intensity (blue-violet) was high (a region surrounded by a solid line) was specified as nucleated cells. Comparing Fig. 21A with Fig. 21B, the number of nucleated cells was larger in the scattergram of Fig. 21B. This reflected that the abnormal specimen contained nucleated red blood cells. Nucleated cells specified in each first scattergram were gated.

### (2.2) Analysis by another first scattergram (R-FSC/V-SFL)

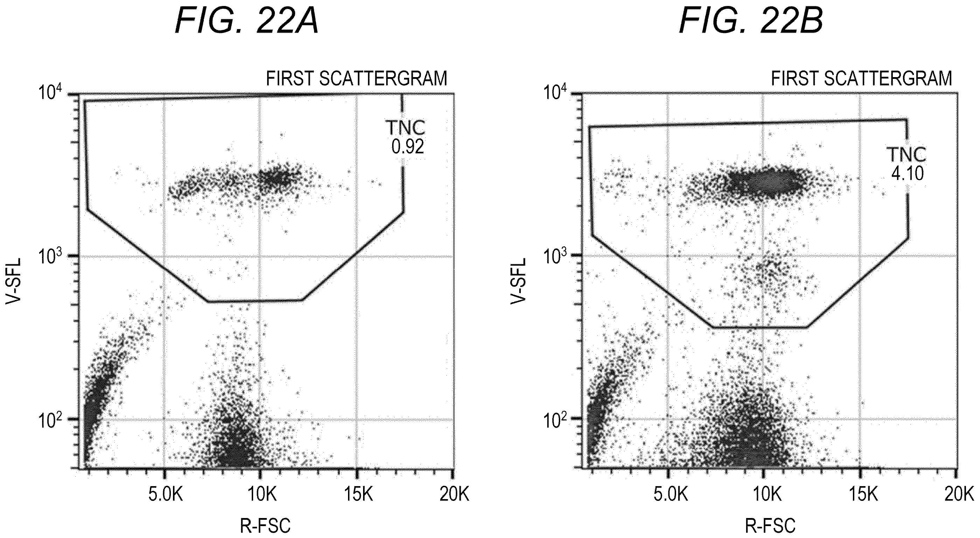

As another first scattergram, a scattergram in which the forward scattered light intensity (red) was taken on a horizontal axis and the fluorescence intensity (blue-violet) was taken on a vertical axis was created. The first scattergrams for the normal specimen and the abnormal specimen are shown in Figs. 22A and 22B, respectively. Comparing Fig. 22A with Fig. 22B, the number of nucleated cells was larger in the scattergram of Fig. 22B. This reflected that the abnormal specimen contained nucleated red blood cells. In each scattergram, a population appeared in a region where the fluorescence intensity (blue-violet) was high (a region surrounded by a solid line) was specified as nucleated cells. Nucleated cells specified in each first scattergram were gated.

### (2.3) Analysis by second scattergram (V-SSC/R-FSC)

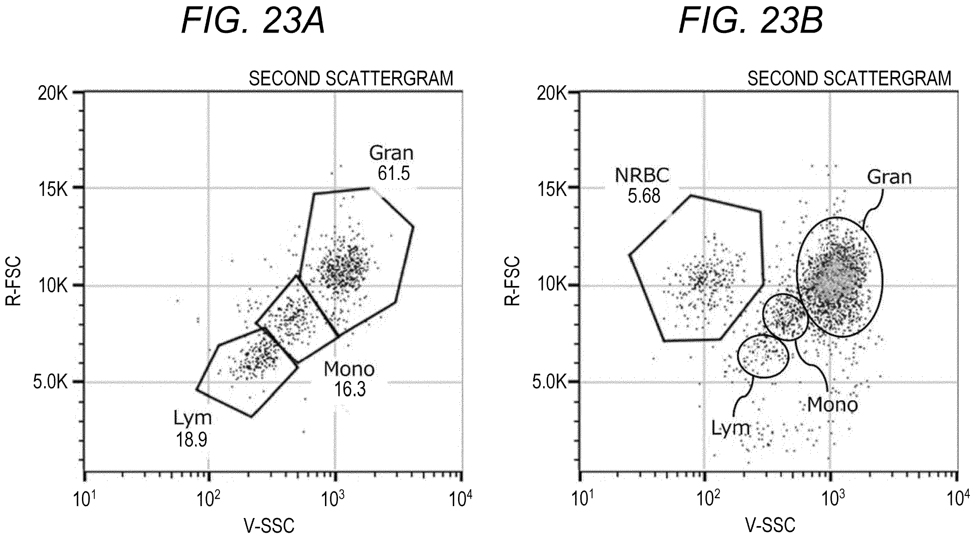

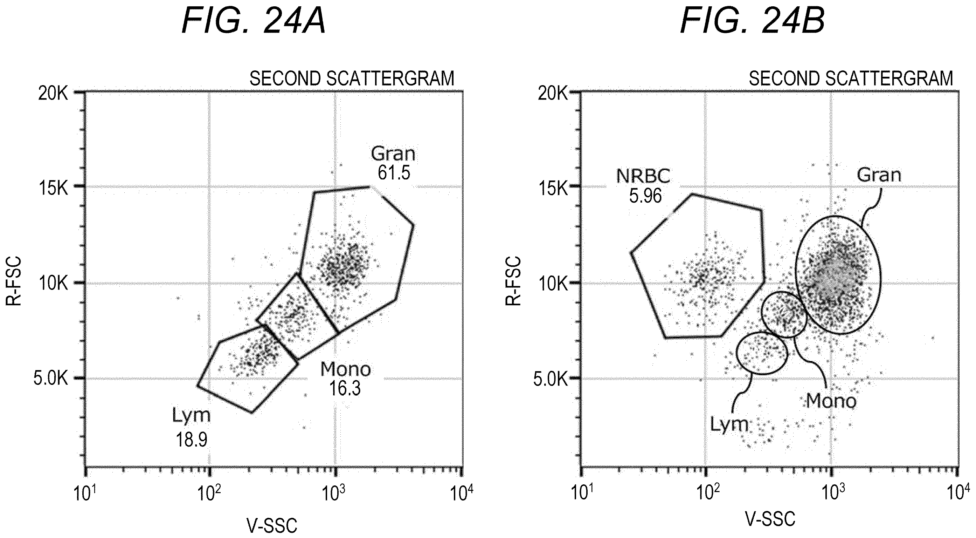

The nucleated cells gated in the first scattergram of Fig. 21 were displayed on the second scattergram of Fig. 23. The nucleated cells gated in the first scattergram of Fig. 22 were displayed on the second scattergram of Fig. 24. Figs. 23A and 24A are scattergrams of the normal specimen, and Figs. 23B and 24B are scattergrams of the abnormal specimen. Referring to Figs. 23A and 24A, in the normal specimens, white blood cells contained as nucleated cells were classified into lymphocytes, monocytes, and granulocytes. In the normal specimen, particles classified as nucleated red blood cells hardly appeared. Referring to Figs. 23B and 24B, in the abnormal specimens, nucleated red blood cells contained as nucleated cells were specified, and white blood cells were classified into lymphocytes, monocytes, and granulocytes. As described above, it was shown that nucleated cells can be specified from the particles in the measurement sample even when the horizontal axis of the first scattergram is changed from V-SSC to R-SSC or R-FSC. It was shown that nucleated red blood cells can be specified and white blood cells can be classified from the nucleated cells specified as described above.

### Example 4: Blood cell analysis using acridine fluorescent dye (4)

In Example 4, before the analysis by the first scattergram, platelets were excluded from the particles in the measurement sample based on various third scattergrams. Otherwise in the same manner as in Example 1, a measurement sample was prepared using a staining reagent containing Acridine Yellow, and measurement and analysis by the analyzer were performed. The normal specimen and the abnormal specimen used in Example 4 were the same as those in Example 1.

### (1) Measurement

Each measurement sample was measured by the analyzer to acquire first scattered light information, second scattered light information, and fluorescence information. The first scattered light information was side scattered light intensity (blue-violet). The second scattered light information was the forward scattered light intensity (red) and the side scattered light intensity (red). The fluorescence information was fluorescence intensity (blue-violet).

### (2) Analysis

### (2.1) Analysis by third scattergram (R-SSC/R-FSC)

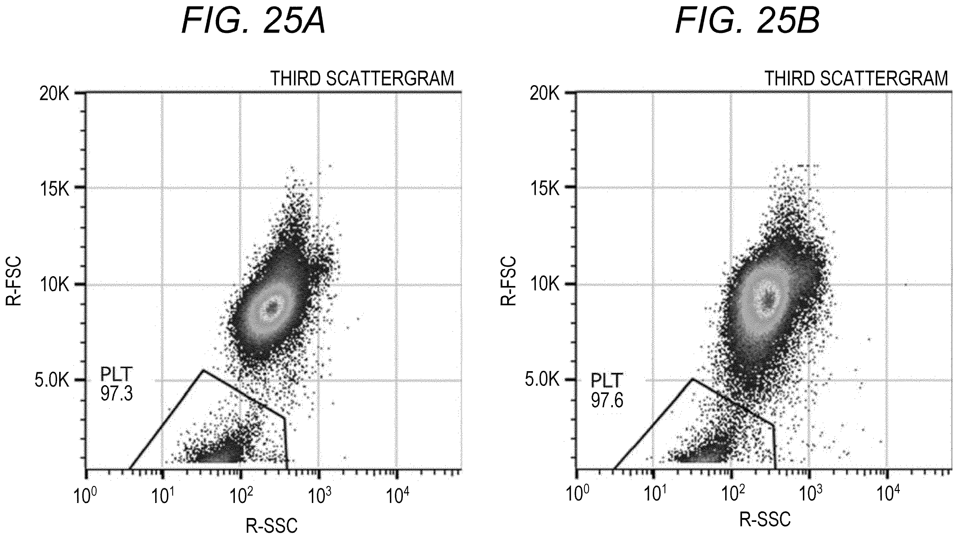

For each measurement sample, a third scattergram in which the side scattered light intensity (red) was taken on a horizontal axis and the forward scattered light intensity (red) was taken on a vertical axis was created. The third scattergrams for the normal specimen and the abnormal specimen are shown in Figs. 25A and 25B, respectively. Referring to Fig. 25, in either specimen, a population indicating a high forward scattered light intensity and a population having a lower forward scattered light intensity than that of the population were recognized. It is known that the forward scattered light intensity is a parameter reflecting particle size. It is known that platelets are smaller in size than other blood cells, and have lower forward scattered light intensity in FCM measurement. Therefore, in each scattergram, a population appeared in a region where the forward scattered light intensity (red) was low (a region surrounded by a solid line) was specified as platelets. The platelets specified in each third scattergram were excluded from the particles in the measurement sample to specify particles other than platelets.

### (2.2) Analysis by another third scattergram (V-SSC/R-FSC)

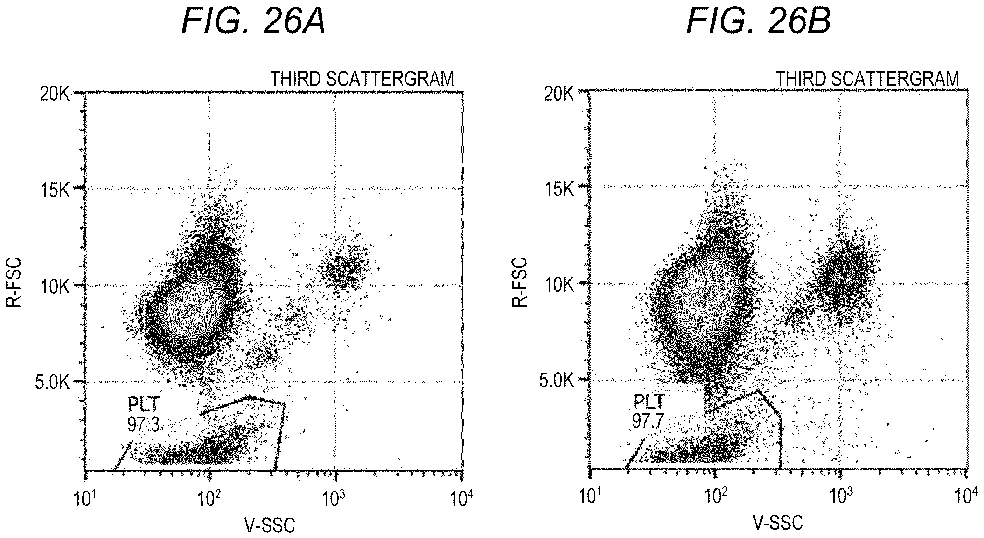

As another third scattergram, a scattergram in which the side scattered light intensity (blue-violet) was taken on a horizontal axis and the forward scattered light intensity (red) was taken on a vertical axis was created. The third scattergrams for the normal specimen and the abnormal specimen are shown in Figs. 26A and 26B, respectively. In each scattergram, a population appeared in a region where the forward scattered light intensity (red) was low (a region surrounded by a solid line) was specified as platelets. The platelets specified in each third scattergram were excluded from the particles in the measurement sample to specify particles other than platelets.

### (2.3) Analysis by another third scattergram (V-SFL/R-FSC)

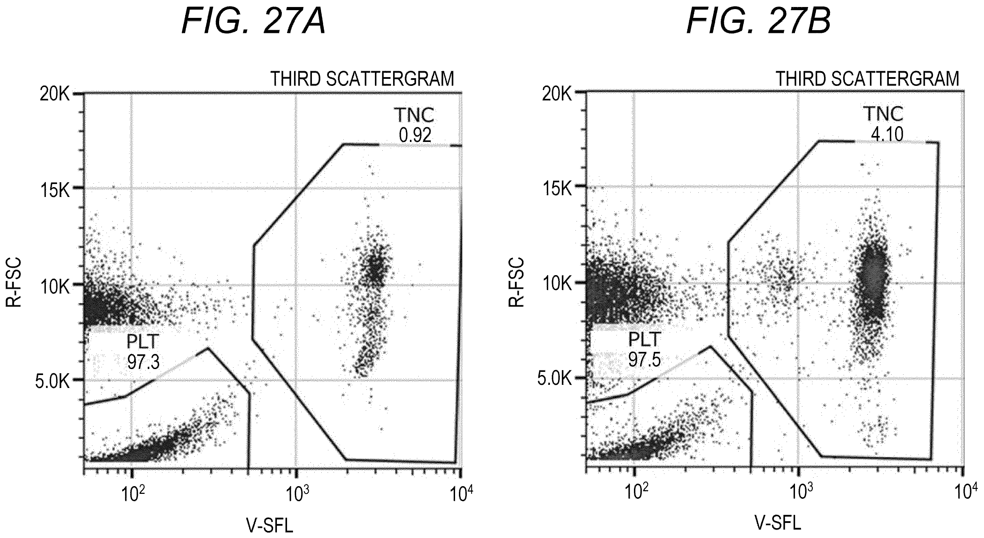

As still another third scattergram, a scattergram in which the fluorescence intensity (blue-violet) was taken on a horizontal axis and the forward scattered light intensity (red) was taken on a vertical axis was created. The third scattergrams for the normal specimen and the abnormal specimen are shown in Figs. 27A and 27B, respectively. As described above, since platelets are non-nucleated cells, it is known that platelets are relatively weakly stained with a fluorescent dye. Therefore, in each scattergram, a population appeared in a region where the forward scattered light intensity (red) was low (a region surrounded by a solid line) and the fluorescence intensity (blue-violet) was low was specified as platelets. The platelets specified in each third scattergram were excluded from the particles in the measurement sample to specify particles other than platelets.

### (2.4) Analysis by first scattergram (V-SSC/V-SFL)

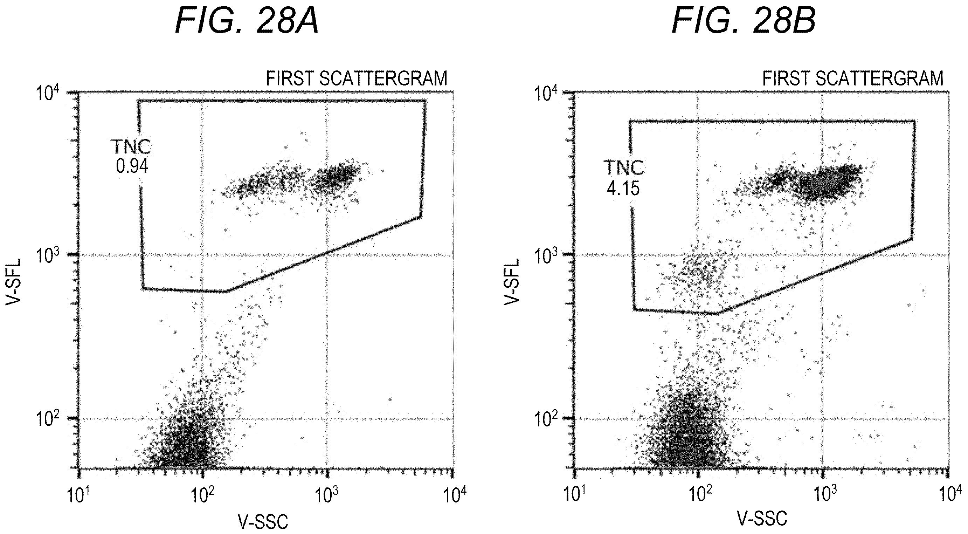

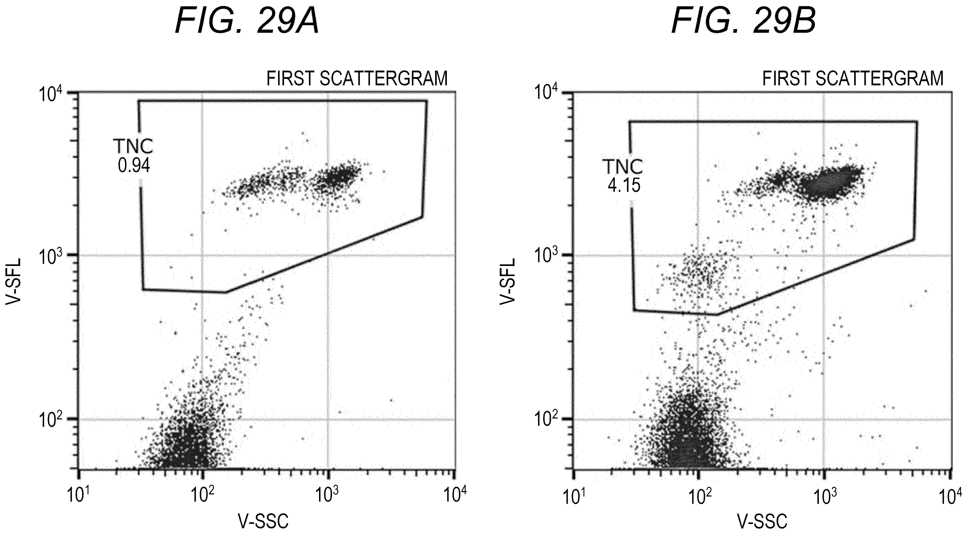

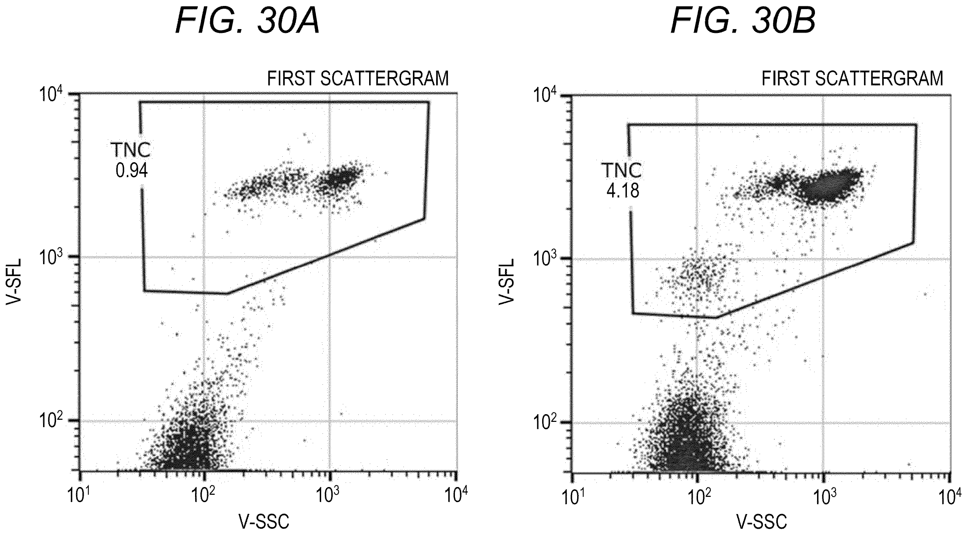

Particles other than the platelets specified in the third scattergram of Fig. 25 were displayed on the first scattergram of Fig. 28. Particles other than the platelets specified in the third scattergram of Fig. 26 were displayed on the first scattergram of Fig. 29. Particles other than the platelets specified in the third scattergram of Fig. 27 were displayed on the first scattergram of Fig. 30. Figs. 28A to 30A are scattergrams of the normal specimen, and Figs. 28B to 30B are scattergrams of the abnormal specimen. Referring to Figs. 28 to 30, in either specimen, a population indicating a high fluorescence intensity and a population having a lower fluorescence intensity than that of the population were recognized. Comparing Fig. 16 with Figs. 28 to 30, since platelets were excluded, the number of particles in the population having low fluorescence intensity decreased in Figs. 28 to 30. In each first scattergram, a population appeared in a region where the fluorescence intensity (blue-violet) was high (a region surrounded by a solid line) was specified as nucleated cells. Nucleated cells specified in each first scattergram were gated.

### (2.5) Analysis by second scattergram (V-SSC/R-FSC)

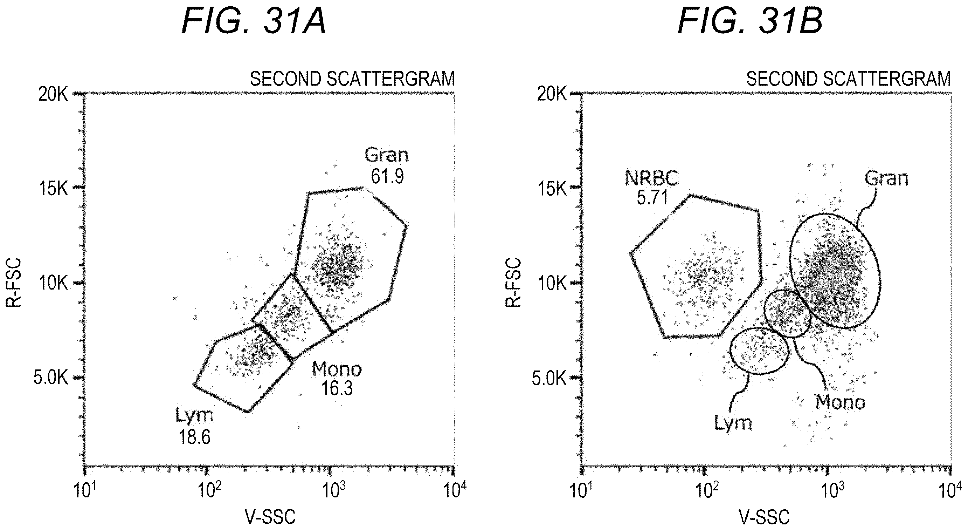

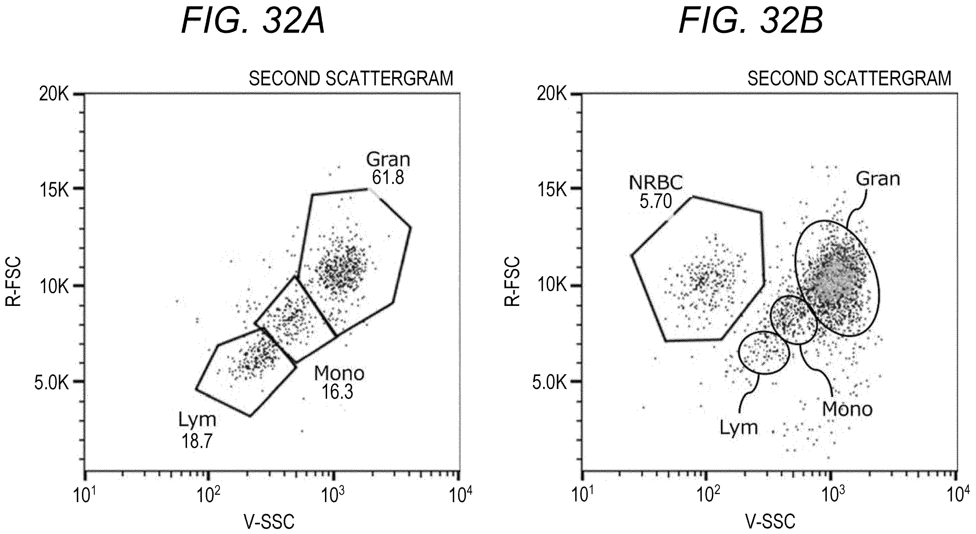

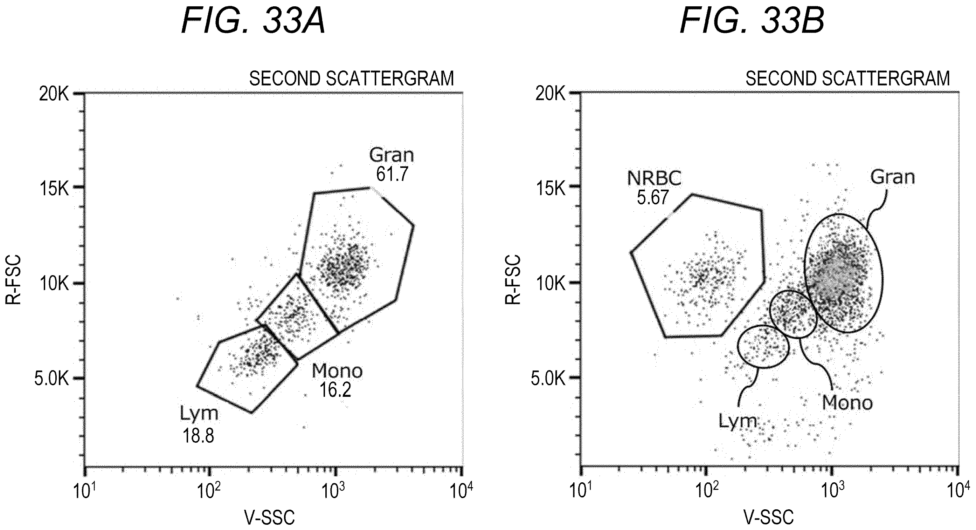

The nucleated cells gated in the first scattergram of Fig. 28 were displayed on the second scattergram of Fig. 31. The nucleated cells gated in the first scattergram of Fig. 29 were displayed on the second scattergram of Fig. 32. The nucleated cells gated in the first scattergram of Fig. 30 were displayed on the second scattergram of Fig. 33. Figs. 31A to 33A are scattergrams of the normal specimen, and Figs. 31B to 33B are scattergrams of the abnormal specimen. Referring to Figs. 31A to 33A, in the normal specimen, white blood cells contained as nucleated cells were classified into lymphocytes, monocytes, and granulocytes. In the normal specimen, particles classified as nucleated red blood cells hardly appeared. Referring to Figs. 31B to 33B, in the abnormal specimen, nucleated red blood cells contained as nucleated cells were specified, and white blood cells were classified into lymphocytes, monocytes, and granulocytes. As described above, it was shown that by gating nucleated cells from the particles in the measurement sample from which platelets were excluded based on the third scattergram, nucleated cells can be specified without being affected by platelets in the first scattergram. It was shown that nucleated red blood cells can be specified and white blood cells can be classified from the nucleated cells specified as described above.

### Example 5: Blood cell analysis using acridine fluorescent dye (5)

In Example 5, a normal specimen and an abnormal specimen different from those in Example 1 were used, and Basic Yellow 9 (2,7,9-trimethylacridine-3,6-diamine) was used as a fluorescent dye. Otherwise in the same manner as in Example 1, a measurement sample was prepared, and measurement and analysis by the analyzer were performed. Basic Yellow 9 was an acridine fluorescent dye excited by a blue-violet laser.

### (1) Measurement and analysis by first scattergram (V-SSC/V-SFL)

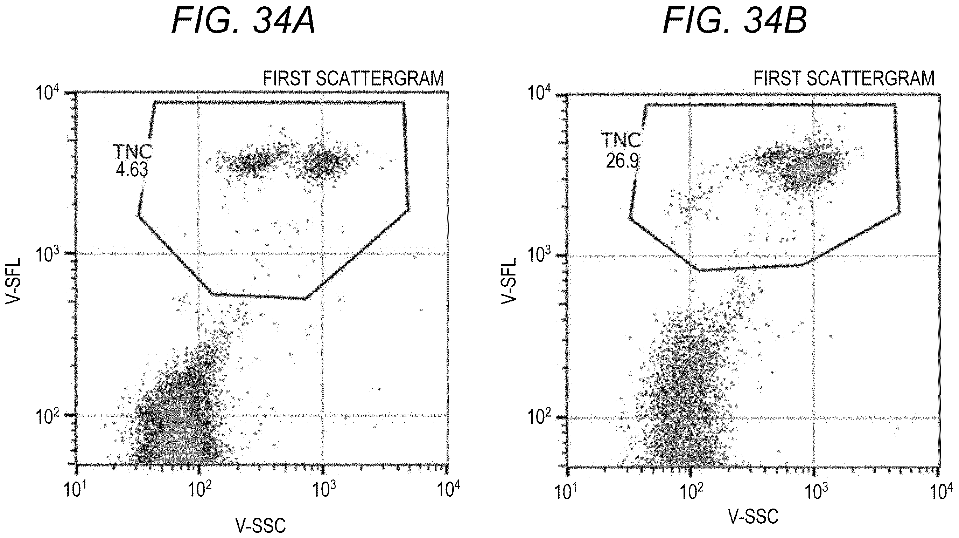

The first scattered light information acquired by the analyzer was side scattered light intensity (blue-violet), the second scattered light information was forward scattered light intensity (red), and the fluorescence information was fluorescence intensity (blue-violet). For each measurement sample, a first scattergram was created in the same manner as in Example 1. The created first scattergram is shown in Fig. 34. Referring to Fig. 34, in either specimen, a population indicating a high fluorescence intensity and a population having a lower fluorescence intensity than that of the population were recognized. In each scattergram, a population appeared in a region where the fluorescence intensity (blue-violet) was high (a region surrounded by a solid line) was specified as nucleated cells. Comparing Fig. 34A with Fig. 34B, the number of nucleated cells was larger in the scattergram of Fig. 34B. This reflected that the abnormal specimen contained nucleated red blood cells. Nucleated cells specified in each first scattergram were gated.

### (2) Analysis by second scattergram (V-SSC/R-FSC)

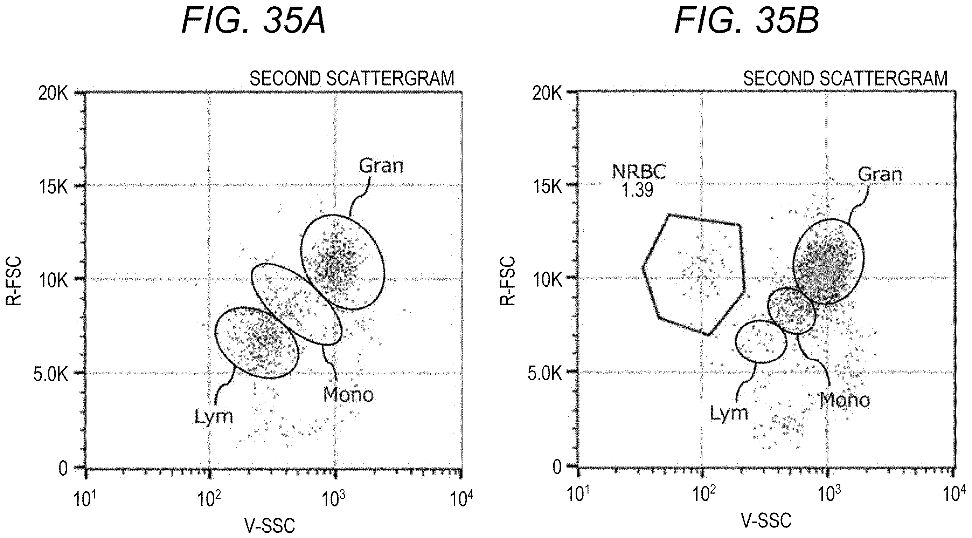

The gated nucleated cells were displayed on the second scattergram as in Example 1. The created second scattergram is shown in Fig. 35. Referring to Fig. 35A, in the normal specimen, white blood cells contained as nucleated cells were classified into lymphocytes, monocytes, and granulocytes. In the normal specimen, particles classified as nucleated red blood cells hardly appeared. Referring to Fig. 35B, in the abnormal specimen, nucleated red blood cells contained as nucleated cells were specified, and white blood cells were classified into lymphocytes, monocytes, and granulocytes. As described above, it was shown that nucleated cells can be specified from the particles in the measurement sample even when the fluorescent dye is changed from Acridine Yellow to Basic Yellow 9. It was shown that nucleated red blood cells can be specified and white blood cells can be classified from the nucleated cells specified as described above.

### Example 6: Blood cell analysis using acridine fluorescent dye (6)

In Example 6, a normal specimen and an abnormal specimen different from those in Examples 1 and 5 were used, and Brilliant Phosphine (3,6-diamino-2,7,10-trimethylacridinium) was used as a fluorescent dye. Otherwise in the same manner as in Example 1, a measurement sample was prepared, and measurement and analysis by the analyzer were performed. Brilliant Phosphine was an acridine fluorescent dye excited by a blue-violet laser.

### (1) Measurement and analysis by first scattergram (V-SSC/V-SFL)

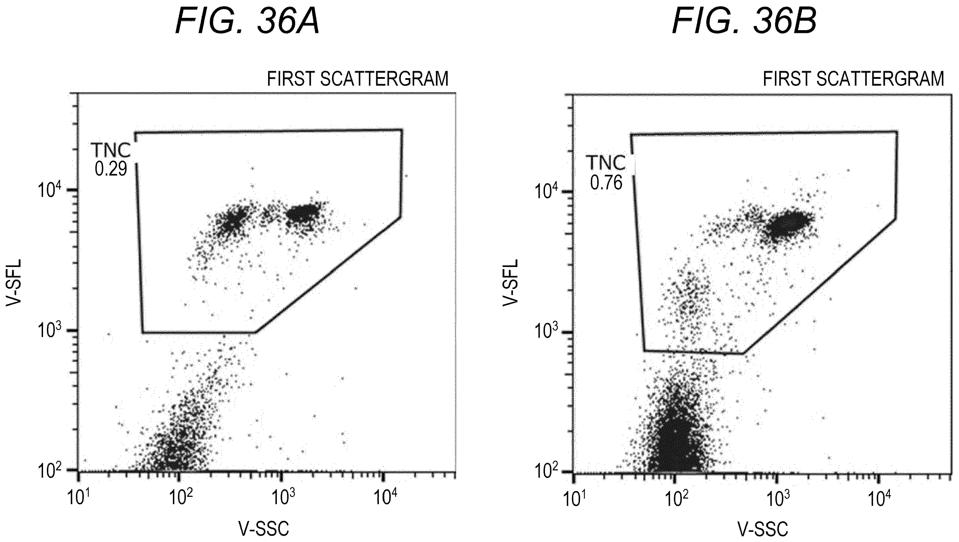

The first scattered light information acquired by the analyzer was side scattered light intensity (blue-violet), the second scattered light information was forward scattered light intensity (red), and the fluorescence information was fluorescence intensity (blue-violet). For each measurement sample, a first scattergram was created in the same manner as in Example 1. The created first scattergram is shown in Fig. 36. Referring to Fig. 36, in either specimen, a population indicating a high fluorescence intensity and a population having a lower fluorescence intensity than that of the population were recognized. In each scattergram, a population appeared in a region where the fluorescence intensity (blue-violet) was high (a region surrounded by a solid line) was specified as nucleated cells. Comparing Fig. 36A with Fig. 36B, the number of nucleated cells was larger in the scattergram of Fig. 36B. This reflected that the abnormal specimen contained nucleated red blood cells. Nucleated cells specified in each first scattergram were gated.

### (2) Analysis by second scattergram (V-SSC/R-FSC)

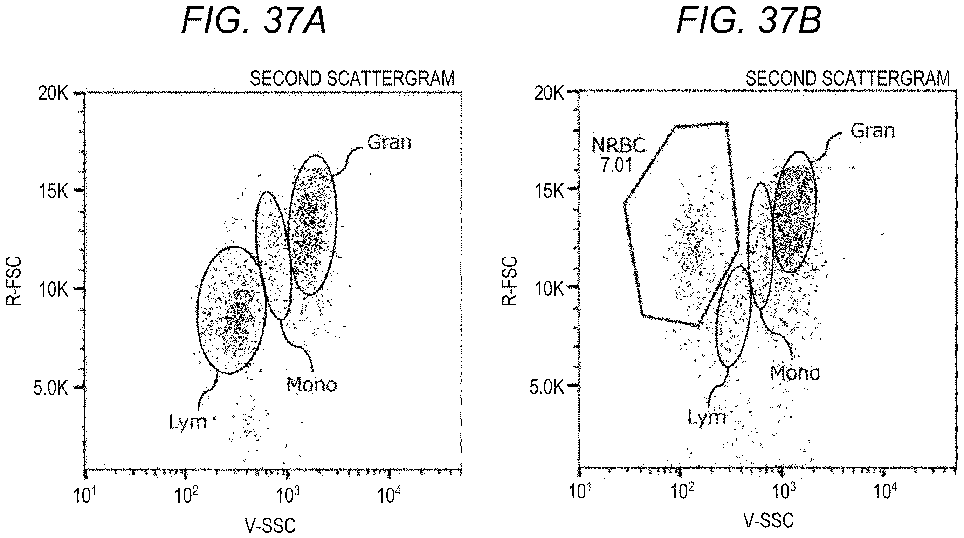

The gated nucleated cells were displayed on the second scattergram as in Example 1. The created second scattergram is shown in Fig. 37. Referring to Fig. 37A, in the normal specimen, white blood cells contained as nucleated cells were classified into lymphocytes, monocytes, and granulocytes. In the normal specimen, particles classified as nucleated red blood cells hardly appeared. Referring to Fig. 37B, in the abnormal specimen, nucleated red blood cells contained as nucleated cells were specified, and white blood cells were classified into lymphocytes, monocytes, and granulocytes. As described above, it was shown that nucleated cells can be specified from the particles in the measurement sample even when the fluorescent dye is changed from Acridine Yellow to Brilliant Phosphine. It was shown that nucleated red blood cells can be specified and white blood cells can be classified from the nucleated cells specified as described above.

### Comparative Example: Analysis by second scattergram based only on first or second scattered light information

In Comparative Example, the nucleated cells of each specimen specified on the first scattergram of Example 6 were displayed on the second scattergram based only on the first scattered light information and the second scattergram based only on the second scattered light information, and it was examined whether the nucleated red blood cells can be specified and the white blood cells can be classified.

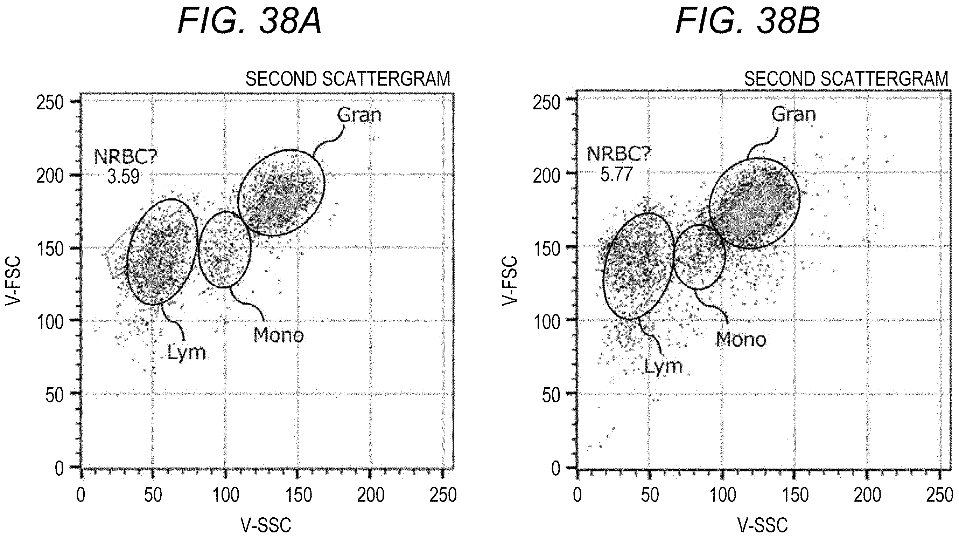

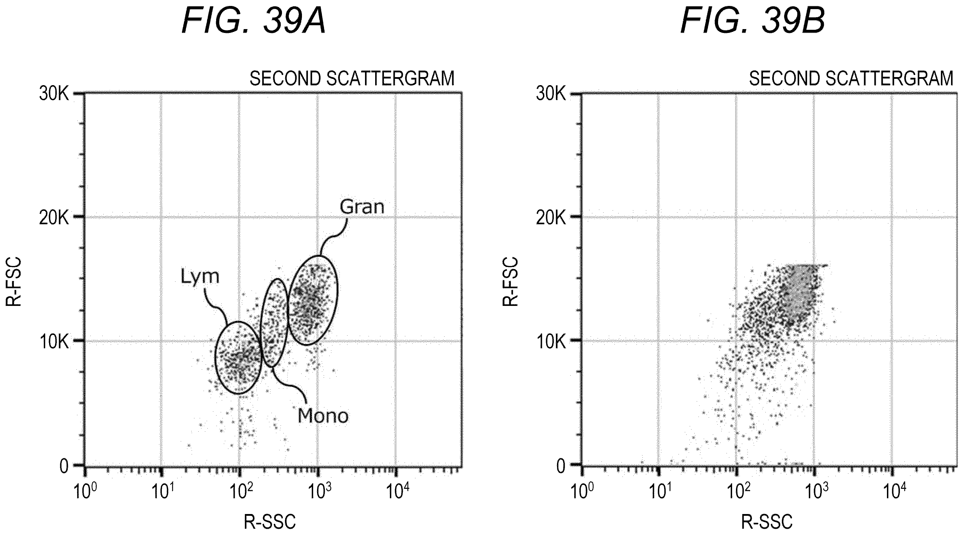

The nucleated cells of each specimen gated on the first scattergram created in Example 6 (see Fig. 36) were displayed on the second scattergram based only on the first scattered light information. In the second scattergram, the side scattered light intensity (blue-violet) was taken on a horizontal axis, and the forward scattered light intensity (blue-violet) was taken on a vertical axis. The scattergrams are shown in Fig. 38. The nucleated cells were displayed on the second scattergram based only on the second scattered light information. In the second scattergram, the side scattered light intensity (red) was taken on a horizontal axis, and the forward scattered light intensity (red) was taken on a vertical axis. The scattergrams are shown in Fig. 39.

Referring to Fig. 38A, although nucleated red blood cells were hardly contained in the normal sample, a flag "NRBC?" was displayed. This is considered that the population of lymphocytes was recognized in a region where nucleated red blood cells appeared, and thus the population of lymphocytes was erroneously specified as nucleated red blood cells. Referring to Fig. 38B, in the abnormal specimen, a region where nucleated red blood cells appeared and a region where lymphocytes appeared overlapped with each other. Therefore, nucleated red blood cells and lymphocytes could not be distinguished from each other. As described above, since the nucleated red blood cells could not be accurately specified, the flag "NRBC?" was displayed. Referring to Fig. 39A, in the normal specimen, white blood cells were classified into lymphocytes, monocytes, and granulocytes. However, referring to Fig. 39B, in the abnormal specimen, a region where nucleated red blood cells appeared and a region where white blood cells appeared completely overlapped with each other. Therefore, it was not possible to specify nucleated red blood cells or classify white blood cells. As described above, it was shown that nucleated red blood cells cannot be specified and white blood cells cannot be classified by only one of the first and second scattered light information.

### Example 7: Blood cell analysis using cyanine fluorescent dye

In Example 7, NK-88 (3-Ethyl-2-[(3-ethyl-2-benzothiazolinylidene)methyl] benzothiazolium) was used as a fluorescent dye. Otherwise in the same manner as in Example 1, a measurement sample was prepared, and measurement and analysis by the analyzer were performed. The normal specimen and the abnormal specimen used in Example 7 were the same as those in Example 1. NK-88 was a cyanine fluorescent dye excited by a blue-violet laser.

### (1) Measurement and analysis by first scattergram (V-SSC/V-SFL)

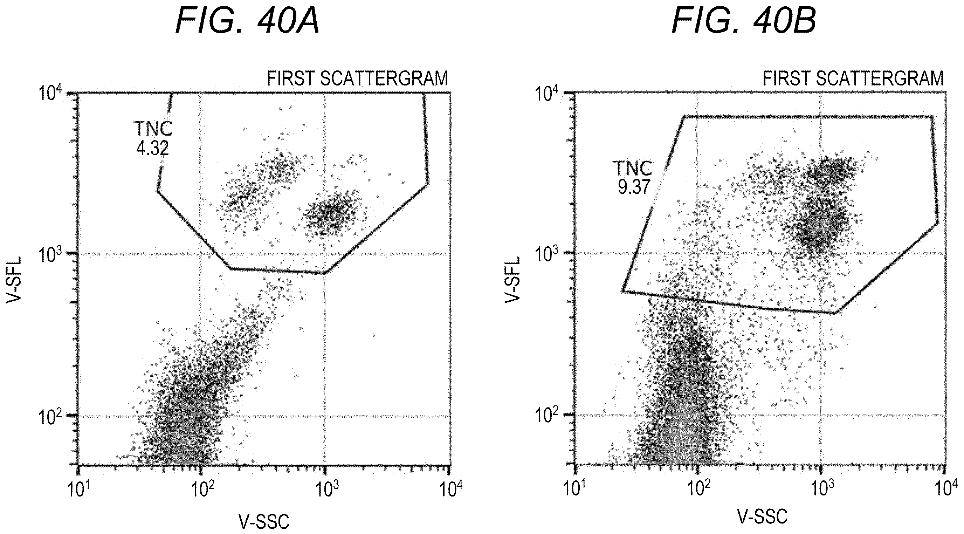

The first scattered light information acquired by the analyzer was side scattered light intensity (blue-violet), the second scattered light information was forward scattered light intensity (red), and the fluorescence information was fluorescence intensity (blue-violet). For each measurement sample, a first scattergram was created in the same manner as in Example 1. The created first scattergram is shown in Fig. 40. Referring to Fig. 40, in either specimen, a population indicating a high fluorescence intensity and a population having a lower fluorescence intensity than that of the population were recognized. In each scattergram, a population appeared in a region where the fluorescence intensity (blue-violet) was high (a region surrounded by a solid line) was specified as nucleated cells. Comparing Fig. 40A with Fig. 40B, the number of nucleated cells was larger in the scattergram of Fig. 40B. This reflected that the abnormal specimen contained nucleated red blood cells. Nucleated cells specified in each first scattergram were gated.

### (2) Analysis by second scattergram (V-SSC/R-FSC)

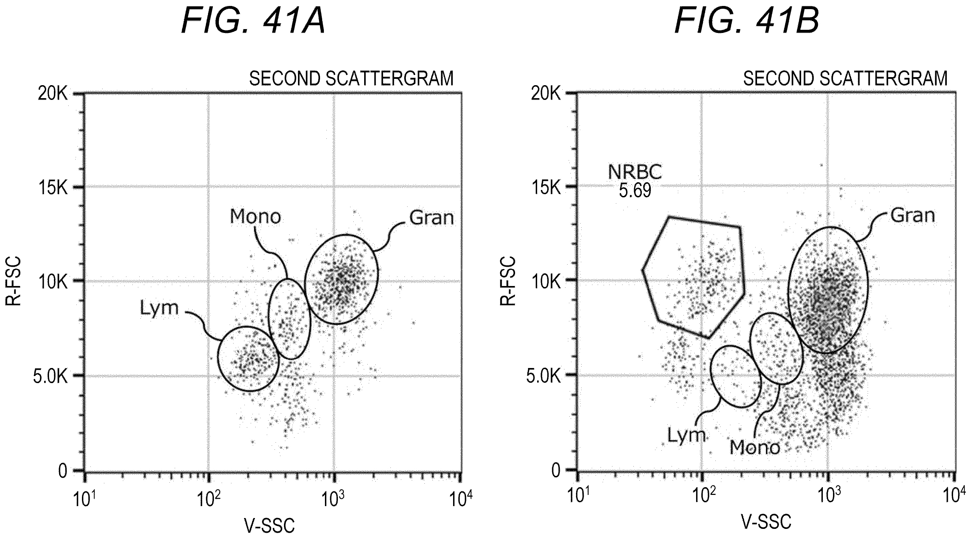

The gated nucleated cells were displayed on the second scattergram as in Example 1. The created second scattergram is shown in Fig. 41. Referring to Fig. 41A, in the normal specimen, white blood cells contained as nucleated cells were classified into lymphocytes, monocytes, and granulocytes. In the normal specimen, particles classified as nucleated red blood cells hardly appeared. Referring to Fig. 41B, in the abnormal specimen, nucleated red blood cells contained as nucleated cells were specified, and white blood cells were classified into lymphocytes, monocytes, and granulocytes. As described above, it was shown that nucleated cells can be specified from the particles in the measurement sample even when the cyanine fluorescent dye NK-88 is used as the fluorescent dye. It was shown that nucleated red blood cells can be specified and white blood cells can be classified from the nucleated cells specified as described above.

### Example 8: Blood cell analysis using fluorescent dye excited by red laser (1)

In Example 8, a normal specimen different from that in Example 1 was used, and NK-321 (3-Ethyl-2-[3-(1-ethyl-4(1H)-quinolylidene)-1-propenyl]benzothiazolium iodide) was used as a fluorescent dye. Nucleated cells in the measurement sample were specified using a first scattergram different from that in Example 1. Otherwise in the same manner as in Example 1, a measurement sample was prepared, and measurement and analysis by the analyzer were performed. The abnormal specimen used in Example 8 was the same as that in Example 1. NK-321 was a cyanine fluorescent dye excited by a red laser.

### (1) Measurement

Each measurement sample was measured by the analyzer to acquire first scattered light information, second scattered light information, and fluorescence information. The first scattered light information was side scattered light intensity (blue-violet). The second scattered light information was forward scattered light intensity (red). The fluorescence information was fluorescence intensity obtained by irradiating the particles in the measurement sample with a red laser (hereinafter, also referred to as "fluorescence intensity (red)" or "R-SFL").

### (2) Analysis

### (2.1) Analysis by first scattergram (V-SSC/R-SFL)

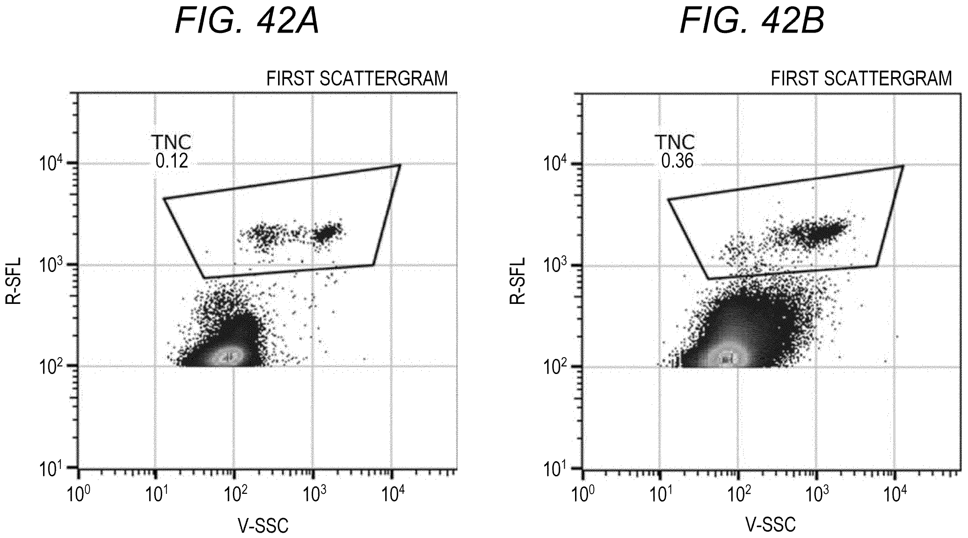

For each measurement sample, a first scattergram in which the side scattered light intensity (blue-violet) was taken on a horizontal axis and the fluorescence intensity (red) was taken on a vertical axis was created. The first scattergrams for the normal specimen and the abnormal specimen are shown in Figs. 42A and 42B, respectively. Referring to Fig. 42, in either specimen, a population indicating a high fluorescence intensity and a population having a lower fluorescence intensity than that of the population were recognized. In each scattergram, a population appeared in a region where the fluorescence intensity (red) was high (a region surrounded by a solid line) was specified as nucleated cells. Comparing Fig. 42A with Fig. 42B, the number of nucleated cells was larger in the scattergram of Fig. 42B. This reflected that the abnormal specimen contained nucleated red blood cells. Nucleated cells specified in each first scattergram were gated.

### (2.2) Analysis by second scattergram (V-SSC/R-FSC)

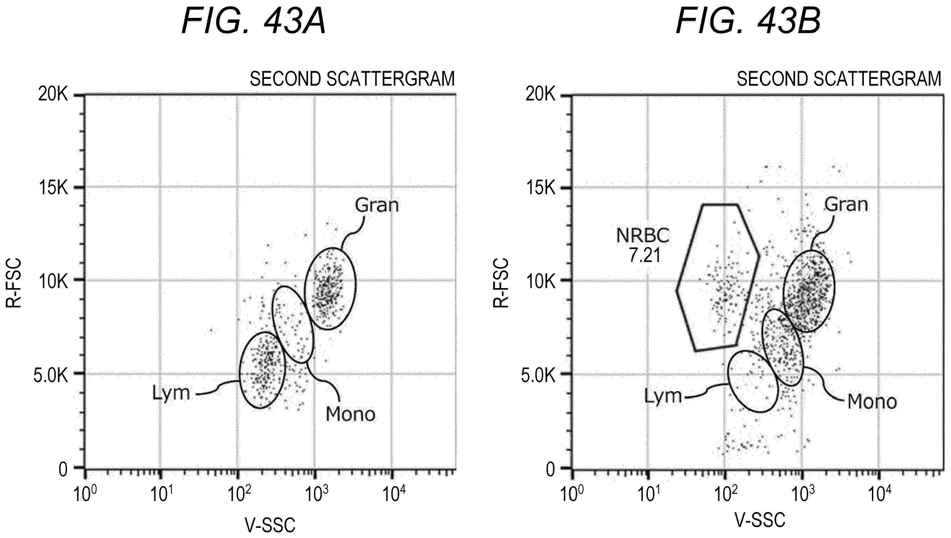

The gated nucleated cells were displayed on the second scattergram as in Example 1. The created second scattergram is shown in Fig. 43. Referring to Fig. 43A, in the normal specimen, white blood cells contained as nucleated cells were classified into lymphocytes, monocytes, and granulocytes. In the normal specimen, particles classified as nucleated red blood cells hardly appeared. Referring to Fig. 43B, in the abnormal specimen, nucleated red blood cells contained as nucleated cells were specified, and white blood cells were classified into lymphocytes, monocytes, and granulocytes. As described above, it was shown that nucleated cells can be specified from the particles in the measurement sample even when the cyanine fluorescent dye excited by a red laser is used as the fluorescent dye. It was shown that nucleated red blood cells can be specified and white blood cells can be classified from the nucleated cells specified as described above.

### Example 9: Blood cell analysis using fluorescent dye excited by red laser (2)

In Example 9, a normal specimen and an abnormal specimen different from those in Examples 1 and 8 were used, and Brilliant Cresyl Blue ALD (3-methyl-7-amino-10-diethylaminiumylphonoxaxine) was used as a fluorescent dye. Nucleated cells in the measurement sample were specified using a first scattergram different from that in Example 1. Otherwise in the same manner as in Example 1, a measurement sample was prepared, and measurement and analysis by the analyzer were performed. Brilliant Cresyl Blue ALD was a phenoxazine fluorescent dye excited by a red laser.

### (1) Measurement and analysis by first scattergram (V-SSC/R-SFL)

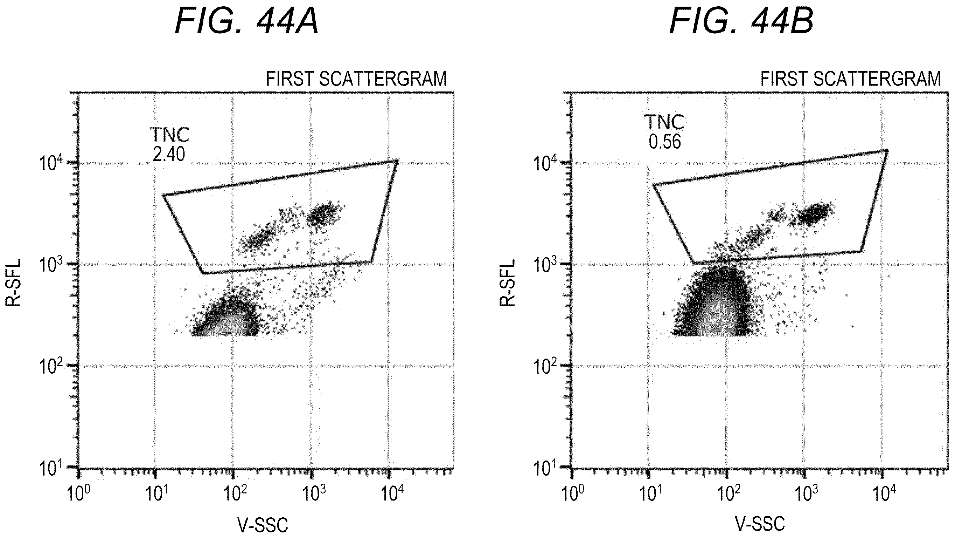

The first scattered light information acquired by the analyzer was side scattered light intensity (blue-violet), the second scattered light information was forward scattered light intensity (red), and the fluorescence information was fluorescence intensity (red). For each measurement sample, a first scattergram was created in the same manner as in Example 8. The created first scattergram is shown in Fig. 44. Referring to Fig. 44, in either specimen, a population indicating a high fluorescence intensity and a population having a lower fluorescence intensity than that of the population were recognized. In each scattergram, a population appeared in a region where the fluorescence intensity (red) was high (a region surrounded by a solid line) was specified as nucleated cells. Comparing Fig. 44A with Fig. 44B, the number of nucleated cells was larger in the scattergram of Fig. 44B. This reflected that the abnormal specimen contained nucleated red blood cells. Nucleated cells specified in each first scattergram were gated.

### (2) Analysis by second scattergram (V-SSC/R-FSC)

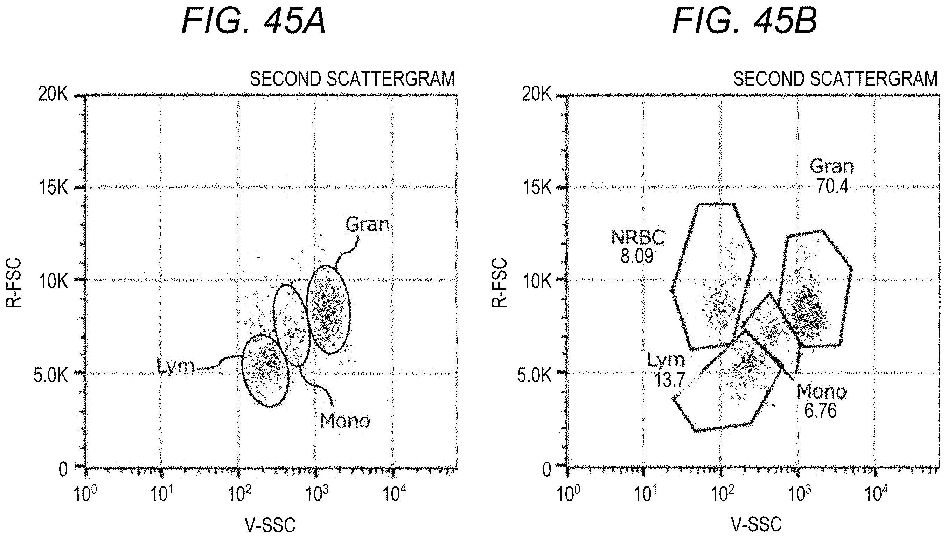

The gated nucleated cells were displayed on the second scattergram as in Example 1. The created second scattergram is shown in Fig. 45. Referring to Fig. 45A, in the normal specimen, white blood cells contained as nucleated cells were classified into lymphocytes, monocytes, and granulocytes. In the normal specimen, particles classified as nucleated red blood cells hardly appeared. Referring to Fig. 45B, in the abnormal specimen, nucleated red blood cells contained as nucleated cells were specified, and white blood cells were classified into lymphocytes, monocytes, and granulocytes. As described above, it was shown that nucleated cells can be specified from the particles in the measurement sample even when the phenoxazine fluorescent dye excited by a red laser is used as the fluorescent dye. It was shown that nucleated red blood cells can be specified and white blood cells can be classified from the nucleated cells specified as described above.

## Claims

1. A blood cell analysis method comprising:
acquiring fluorescence information, first scattered light information, and second scattered light information generated by irradiating a measurement sample comprising a particle stained with a fluorescent dye capable of binding to a nucleic acid with light of a first wavelength and light of a second wavelength;
specifying a population of nucleated cells from particles in the measurement sample based on the fluorescence information; and
specifying a nucleated red blood cell from the population of nucleated cells based on the first scattered light information and the second scattered light information of the population of nucleated cells,
wherein the measurement sample is a sample prepared by mixing whole blood and the fluorescent dye,
the fluorescent dye is a fluorescent dye capable of being excited by the light of the first wavelength or the light of the second wavelength,
the first wavelength is 315 nm or more and 490 nm or less, and the second wavelength is 610 nm or more and 750 nm or less,
the fluorescence information is information related to fluorescence generated from the fluorescent dye of the particle,
the first scattered light information is information on scattered light generated from the particle by irradiating the measurement sample with the light of the first wavelength, and
the second scattered light information is information on scattered light generated from the particle by irradiating the measurement sample with the light of the second wavelength.

2. The method according to claim 1, wherein
the measurement sample does not comprise a hemolysis reagent and/or
the method further comprising
preparing the measurement sample by mixing the whole blood and the fluorescent dye before the acquiring, and
not comprising hemolyzing a mature red blood cell comprised in the measurement sample.

3. The method according to claim 1 or 2, wherein
the fluorescent dye is a fluorescent dye capable of being excited by the light of the first wavelength, and the fluorescence information is information on fluorescence generated from the fluorescent dye of the particle by irradiating the measurement sample with the light of the first wavelength, or
the fluorescent dye is a fluorescent dye capable of being excited by the light of the second wavelength, and the fluorescence information is information on fluorescence generated from the fluorescent dye of the particle by irradiating the measurement sample with the light of the second wavelength.

4. The method according to any one of claims 1 to 3, wherein the fluorescence information is fluorescence intensity.

5. The method according to claim 4, wherein
in the specifying a population of nucleated cells, particles in the measurement sample are classified into a first particle population and a second particle population based on fluorescence intensity,
the second particle population is a population indicating a higher fluorescence intensity than that of the first particle population, and
the second particle population is specified as a population of nucleated cells and
wherein optionally, the first particle population is specified as a population comprising mature red blood cells and/or
wherein optionally, in the specifying a population of nucleated cells, a population of particles indicating a higher fluorescence intensity than a threshold value is specified as the second particle population.

6. The method according to claim 4, wherein in the specifying a population of nucleated cells, a histogram based on fluorescence intensity and a number of particle is created, and a population of particles indicating a higher fluorescence intensity than a threshold value in the histogram is specified as a population of nucleated cells.

7. The method according to any one of claims 1 to 4, wherein
the fluorescence information is fluorescence intensity, the first scattered light information is first side scattered light intensity, and the second scattered light information is second forward scattered light intensity or second side scattered light intensity,
in the specifying a population of nucleated cells, a scattergram is created based on the fluorescence intensity and the first side scattered light intensity, the second forward scattered light intensity, or the second side scattered light intensity, and
a population of particles indicating a higher fluorescence intensity than a threshold value in the scattergram is specified as a population of nucleated cells.

8. The method according to any one of claims 1 to 6, wherein the first scattered light information is side scattered light information.

9. The method according to any one of claims 1 to 8, wherein in the specifying a nucleated red blood cell, the population of nucleated cells is classified into nucleated red blood cells and white blood cells based on the first scattered light information and the second scattered light information.

10. The method according to any one of claims 1 to 9, wherein the first scattered light information is first side scattered light intensity, and the second scattered light information is second forward scattered light intensity or second side scattered light intensity.

11. The method according to claim 10, wherein
in the specifying a nucleated red blood cell, the population of nucleated cells is classified into a third particle population and a fourth particle population based on the first side scattered light intensity and the second forward scattered light intensity or the second side scattered light intensity,
the fourth particle population is a population indicating a higher first side scattered light intensity than the third particle population, and
the third particle population is specified as nucleated red blood cells, and the fourth particle population is specified as white blood cells.

12. The method according to claim 11, wherein
a scattergram based on the first side scattered light intensity and the second forward scattered light intensity or the second side scattered light intensity is created, and
the population of nucleated cells is classified into the third particle population and the fourth particle population in the scattergram.

13. The method according to any one of claims 9 to 12, further comprising classifying the white blood cells into three subpopulations: lymphocytes, monocytes, and granulocytes.

14. The method according to any one of claims 1 to 13, wherein
the first scattered light information or the second scattered light information comprises information on forward scattered light,
the method further comprises specifying a particle population excluding a platelet from the particles in the measurement sample based on the information on forward scattered light after the acquiring and before the specifying a population of nucleated cells, and
in the specifying a population of nucleated cells, a cell population of the nucleated cells is specified from the population excluding a platelet based on fluorescence information of the particle population excluding a platelet and wherein optionally,
in the specifying a particle population excluding a platelet, the information on forward scattered light is first forward scattered light intensity or second forward scattered light intensity,
the particles in the measurement sample are classified into a fifth particle population and a sixth particle population based on the forward scattered light intensity,
the sixth particle population is a population indicating a higher forward scattered light intensity than that of the fifth particle population, and
the sixth particle population is specified as a cell population excluding a platelet and
wherein optionally, the fifth particle population is specified as a population of platelets.

15. The method according to claim 14, wherein the information on forward scattered light is the second forward scattered light intensity and
wherein optionally, in the specifying a particle population excluding a platelet, a population of particles indicating a second forward scattered light intensity less than or equal to a threshold value is specified as the fifth particle population, and a population of particles indicating a higher second forward scattered light intensity than the threshold value is specified as the sixth particle population.

16. The method according to any one of claims 1 to 13, wherein
the fluorescence information is fluorescence intensity, the first scattered light information is first side scattered light intensity, and the second scattered light information is second forward scattered light intensity or second side scattered light intensity,
the method further comprises, after the acquiring and before the specifying a population of nucleated cells, specifying a particle population excluding a platelet from the particles in the measurement sample,
in the specifying a particle population excluding a platelet, a scattergram based on the second forward scattered light intensity, the fluorescence intensity, the first side scattered light intensity, or the second side scattered light intensity is created,
the particles in the measurement sample are classified into a fifth particle population and a sixth particle population in the scattergram,
the sixth particle population is a population indicating a higher forward scattered light intensity than that of the fifth particle population, and
the sixth particle population is specified as a cell population excluding a platelet.

17. The method according to any one of claims 1 to 16, wherein the fluorescent dye is selected from a group consisting of an acridine compound, a cyanine compound, a styryl compound, a phenoxazine compound, a phenothiazine compound, a coumarin compound, and an azo(triazine) compound and
wherein optionally,
(i) the acridine compound is a compound represented by following formula (I): 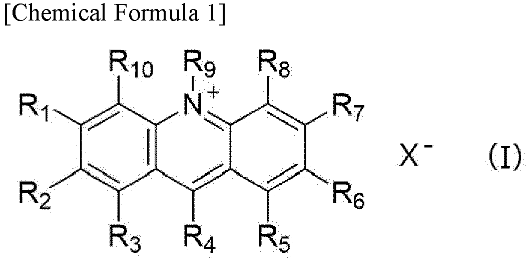
wherein R₁ to R₁₀ are independently a hydrogen atom, -NH₂, -(CH₂)ₙ-NR₁₁R₁₂, -NH-R₁₃-NR₁₁R₁₂, -O-R₁₁, -COOH, a halogen, a phenyl group optionally having a substituent, an alkyl group having 1 to 18 carbon atoms or an aminoacyl group, wherein at least one of R₁, R₄, or R₇ is independently -NH₂, -(CH₂)ₙ-NR₁₁R₁₂, or a phenyl group substituted with -NH₂,
R₁₁ and R₁₂ are same or different, and R₁₁ and R₁₂ are a hydrogen atom or an alkyl group having 1 to 18 carbon atoms,
R₁₃ is an alkyl group having 1 to 6 carbon atoms,
n is an integer of 0 to 6, and
X⁻ is a counter ion or
(ii) the cyanine compound is
a compound represented by following formula (II): 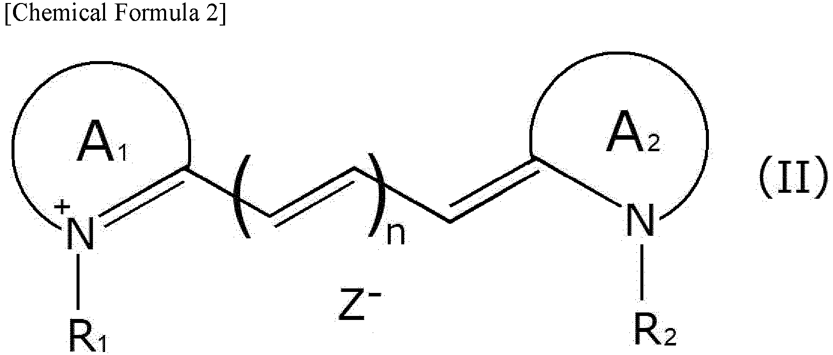
wherein R₁ and R₂ are same or different, and R₁ and R₂ are an alkyl group having 1 to 18 carbon atoms, an alkenyl group having 3 to 20 carbon atoms, an alkyl group having 1 to 18 carbon atoms having a hydroxy group, an alkyl group having 1 to 18 carbon atoms having a carboxy group, an alkyl group having 1 to 18 carbon atoms having a sulfo group, a halogen, -(CH₂)ₚ-NR₅R₆, -(CH₂)_{q}-O-R₇, or a benzyl group optionally having a substituent,
n is an integer of 0 to 2, p is an integer of 1 to 18, and q is an integer of 1 to 6, 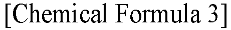 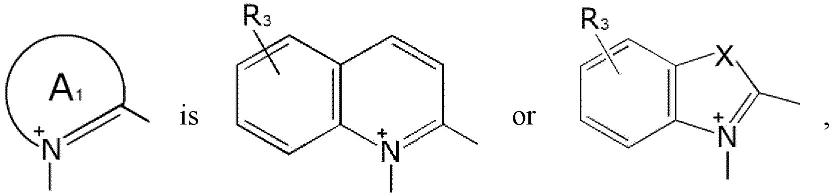 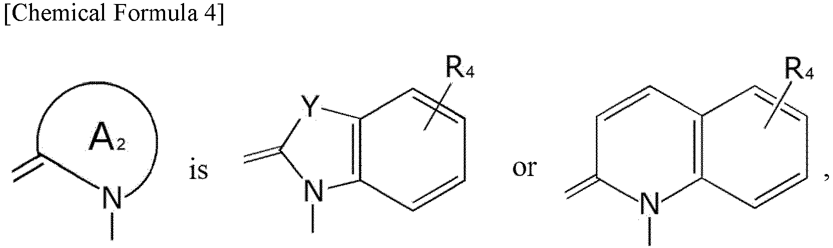
R₃ and R₄ are same or different, and R₃ and R₄ are a hydrogen atom, a halogen, an alkyl group having 1 to 18 carbon atoms, a phenyl group optionally having a substituent, an alkoxy group having 1 to 6 carbon atoms, or -(CH₂)_{q}-O-R₇,
R₅ and R₆ are same or different, and R₅ and R₆ are a hydrogen atom or an alkyl group having 1 to 18 carbon atoms,
R₇ is a hydrogen atom, an alkyl group having 1 to 18 carbon atoms, or a phenyl group optionally having a substituent,
X and Y are same or different, and X and Y are a sulfur atom, an oxygen atom, a selenium atom, or CR₈R₉,
R₈ and R₉ are same or different, and R₈ and R₉ are an alkyl group having 1 to 3 carbon atoms, and
Z⁻ is a counter ion, or
the cyanine compound is a compound represented by following formula (III): 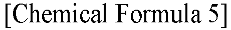 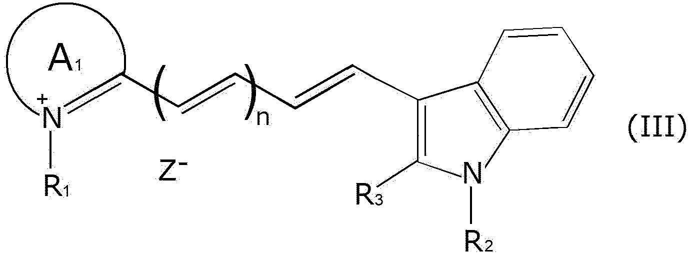 wherein R₁, R₂, R₃, A₁, n and Z⁻ are as described above, or
the cyanine compound is a compound represented by following formula (IV): 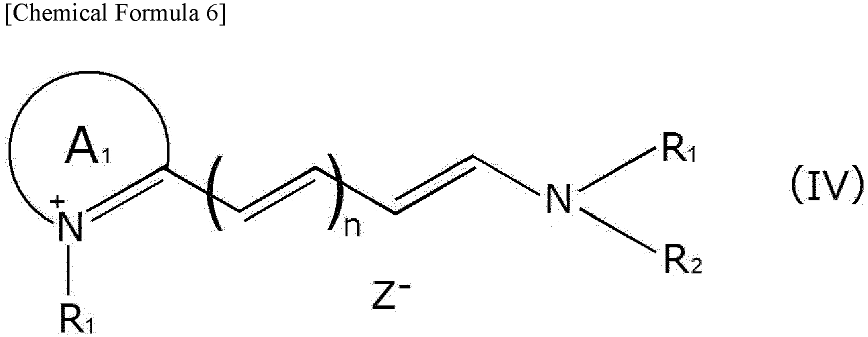 wherein R₁, R₂, A₁, n and Z⁻ are as described above, or
the cyanine compound is a compound represented by following formula (V): 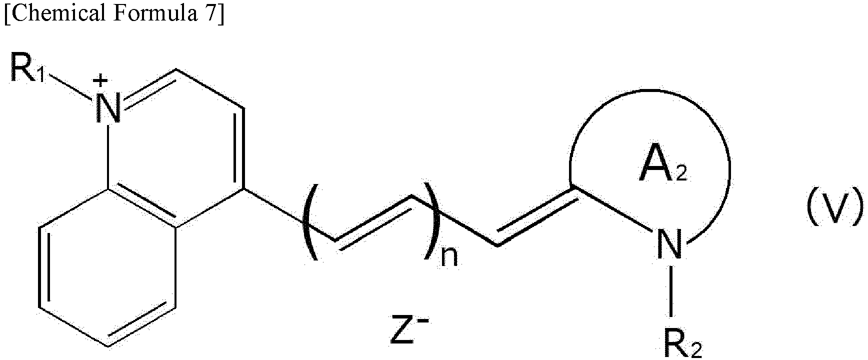 wherein R₁, R₂, A₂, n and Z⁻ are as described above, or
the cyanine compound is a compound represented by following formula (VI): 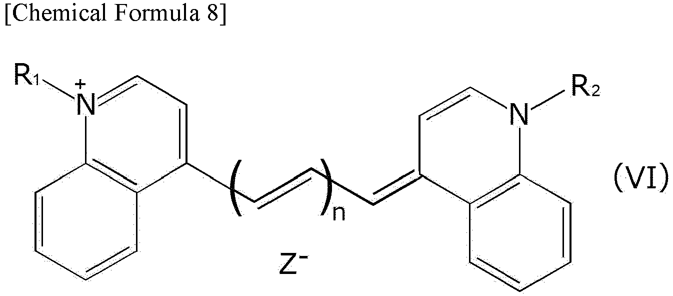 wherein R₁, R₂, n and Z⁻ are as described above or
(iii) the styryl compound is
a compound represented by following formula (VII): 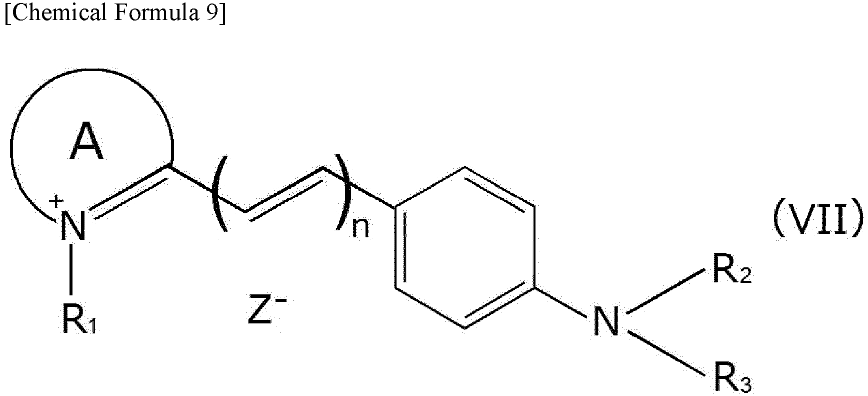
wherein R₁ is an alkyl group having 1 to 18 carbon atoms, an alkenyl group having 3 to 20 carbon atoms, an alkyl group having 1 to 18 carbon atoms having a hydroxy group, an alkyl group having 1 to 18 carbon atoms having a carboxy group, an alkyl group having 1 to 18 carbon atoms having a sulfo group, a halogen, -(CH₂)ₚ-NR₅R₆, -(CH₂)_{q}-O-R₇, or a benzyl group optionally having a substituent,
R₂ and R₃ are same or different, and R₂ and R₃ are a hydrogen atom, a halogen, an alkyl group having 1 to 18 carbon atoms, a phenyl group optionally having a substituent, an alkoxy group having 1 to 6 carbon atoms, or R₂ and/or R₃ forms a heterocyclic ring comprising N together with a benzene ring to which the N is bonded,
n is an integer of 0 to 2, p is an integer of 1 to 18, and q is an integer of 1 to 6, 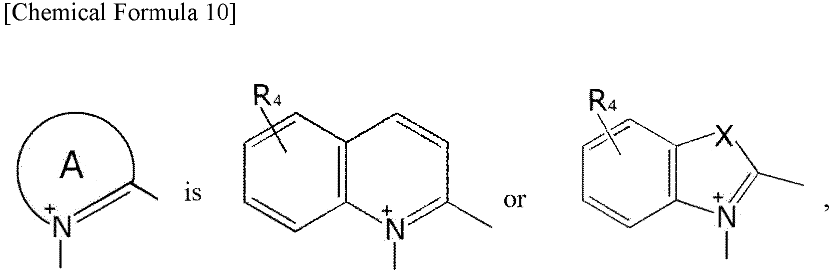
wherein R₄ is a hydrogen atom, a halogen, an alkyl group having 1 to 18 carbon atoms, a phenyl group optionally having a substituent, an alkoxy group having 1 to 6 carbon atoms, or -(CH₂)_{q}-O-R₇,
R₅ and R₆ are same or different, and R₅ and R₆ are a hydrogen atom or an alkyl group having 1 to 18 carbon atoms,
R₇ is a hydrogen atom, an alkyl group having 1 to 18 carbon atoms, or a phenyl group optionally having a substituent,
X is a sulfur atom, an oxygen atom, a selenium atom, or CR₈R₉,
R₈ and R₉ are same or different, and R₈ and R₉ are an alkyl group having 1 to 3 carbon atoms, and
Z⁻ is a counter ion, or
the styryl compound is a compound represented by following formula (VIII): 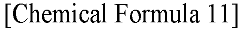 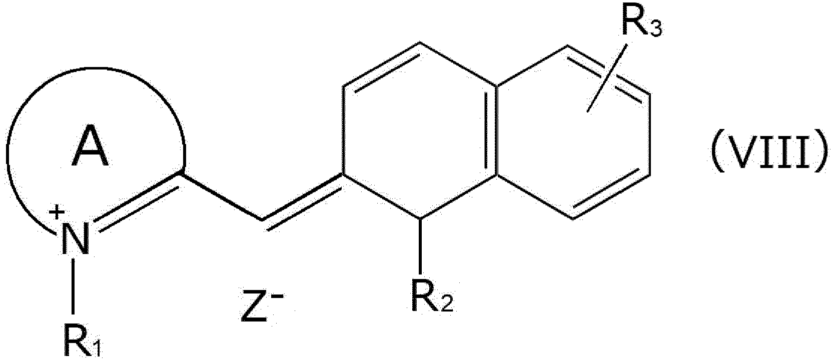
wherein R₁, A and Z⁻ are as described above,
R₂ and R₃ are same or different, and R₂ and R₃ are a hydrogen atom, a halogen, an alkyl group having 1 to 18 carbon atoms, a phenyl group optionally having a substituent, or an alkoxy group having 1 to 6 carbon atoms; or
the styryl compound is a compound represented by following formula (IX): 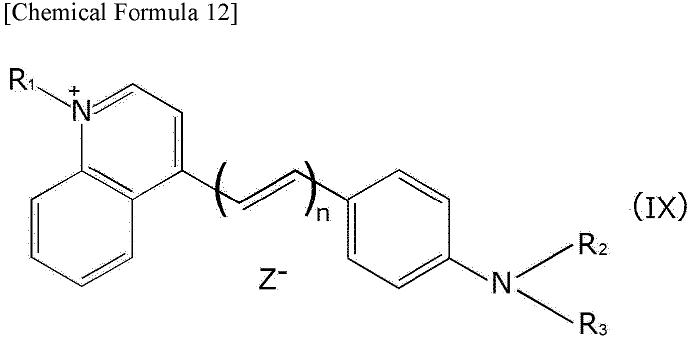 wherein R₁, R₂, R₃, n and Z⁻ are as described above or
(iv) the phenoxazine compound is a compound represented by following formula (X): 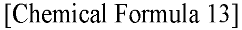 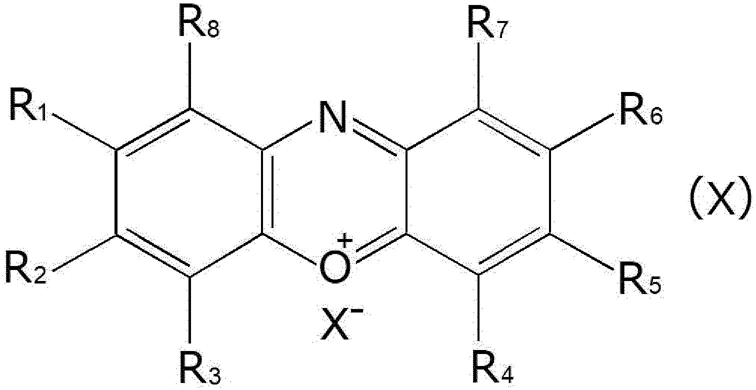
wherein at least one of R₂ or R₅ among R₁ to R₈ is independently-NH₂, -(CH₂)ₙ-NR₉R₁₀, or a phenyl group substituted with -NH₂,
the remaining R is independently a hydrogen atom, an oxygen atom,-O-R₉, -COOH, -NO₂, a halogen, a phenyl group optionally having a substituent, an alkyl group having 1 to 18 carbon atoms or an aminoacyl group, or R₁ and R₈ are bonded to each other to form a benzene ring, and/or R₆ and R₇ are bonded to each other to form a benzene ring,
R₉ and R₁₀ are same or different, and R₉ and R₁₀ are a hydrogen atom or an alkyl group having 1 to 18 carbon atoms,
n is an integer of 0 to 6, and
X⁻ is a counter ion or
(v) the phenothiazine compound is a compound represented by following formula (XI): 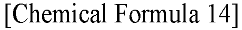 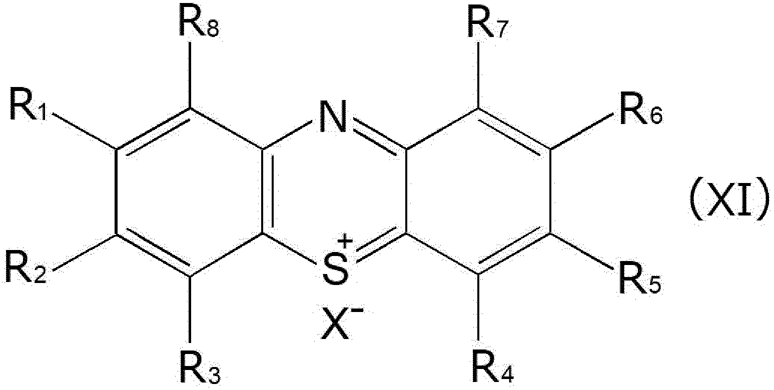
wherein at least one of R₂ or R₅ among R₁ to R₈ is independently-NH₂, -(CH₂)ₙ-NR₉R₁₀, or a phenyl group substituted with -NH₂,
the remaining R is independently a hydrogen atom, an oxygen atom,-O-R₉, -COOH, -NO₂, a halogen, a phenyl group optionally having a substituent, an alkyl group having 1 to 18 carbon atoms or an aminoacyl group, or R₁ and R₈ are bonded to each other to form a benzene ring, and/or R₆ and R₇ are bonded to each other to form a benzene ring,
R₉ and R₁₀ are same or different, and R₉ and R₁₀ are a hydrogen atom or an alkyl group having 1 to 18 carbon atoms,
n is an integer of 0 to 6, and
X⁻ is a counter ion or
(vi) the coumarin compound is a compound represented by following formula (XII): 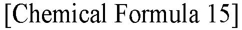 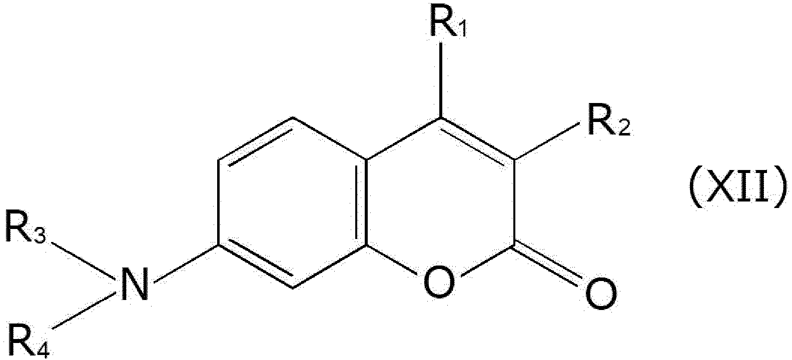
wherein R₁ is a hydrogen atom, an alkyl group having 1 to 3 carbon atoms, a haloalkyl group having 1 to 3 carbon atoms, or an alkyl group having 1 to 3 carbon atoms having a hydroxy group, or R₁ and R₂ are bonded to each other to form a ring,
R₂ is a hydrogen atom, a benzimidazole ring, a benzothiazole ring, a benzoxazole ring, a pyridine ring, -COOR₅, -SO₃R₆, -CN, or a phenyl group optionally having a substituent,
R₃ and R₄ are same or different and are a hydrogen atom or an alkyl group having 1 to 6 carbon atoms, or R₃ and/or R₄ form a heterocyclic ring comprising N together with a benzene ring to which the N is bonded, and
R₅ and R₆ are same or different, and R₅ and R₆ are a hydrogen atom or an alkyl group having 1 to 6 carbon atoms or
(vii) the azo(triazine) compound is a compound represented by following formula (XIII) : 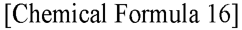 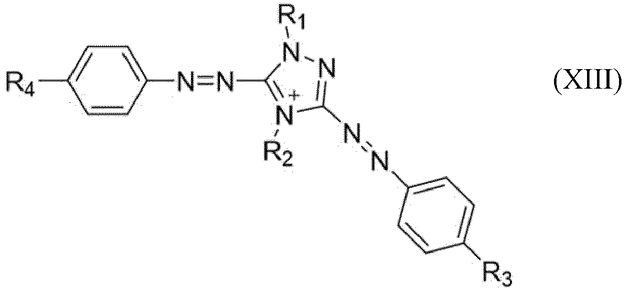
wherein R₁ and R₂ are same or different, and R₁ and R₂ are a hydrogen atom or an alkyl group having 1 to 3 carbon atoms,
R₃ and R₄ are same or different, and R₃ and R₄ are a hydrogen atom, an alkyl group having 1 to 3 carbon atoms, or -NR₅R₆, and
R₅ and R₆ are same or different, and R₅ and R₆ are a hydrogen atom or an alkyl group having 1 to 3 carbon atoms.

## Patentansprüche

1. Verfahren zur Analyse von Blutzellen, umfassend:
Erfassen von Fluoreszenzinformationen, ersten Streulichtinformationen und zweiten Streulichtinformationen, die durch Bestrahlen einer Messprobe, die ein mit einem Fluoreszenzfarbstoff, der an eine Nukleinsäure binden kann, gefärbtes Partikel umfasst, mit Licht einer ersten Wellenlänge und Licht einer zweiten Wellenlänge erzeugt werden;
Spezifizieren einer Population von kernhaltigen Zellen aus Partikeln in der Messprobe auf der Grundlage der Fluoreszenzinformationen; und
Spezifizieren einer kernhaltigen roten Blutzelle aus der Population kernhaltiger Zellen auf der Grundlage der ersten Streulichtinformationen und der zweiten Streulichtinformationen der Population kernhaltiger Zellen,
wobei die Messprobe eine Probe ist, die durch Mischen von Vollblut und dem Fluoreszenzfarbstoff hergestellt wurde,
der Fluoreszenzfarbstoff ein Fluoreszenzfarbstoff ist, der durch das Licht der ersten Wellenlänge oder das Licht der zweiten Wellenlänge angeregt werden kann, die erste Wellenlänge 315 nm oder mehr und 490 nm oder weniger ist und die zweite Wellenlänge 610 nm oder mehr und 750 nm oder weniger ist,
die Fluoreszenzinformationen Informationen sind, die sich auf die Fluoreszenz beziehen, die von dem Fluoreszenzfarbstoff des Partikels generiert wird, die ersten Streulichtinformationen Informationen über Streulicht sind, das von dem Partikel erzeugt wird, indem die Messprobe mit dem Licht der ersten Wellenlänge bestrahlt wird, und
die zweiten Streulichtinformationen Informationen über Streulicht sind, das von dem Partikel generiert wird, indem die Messprobe mit dem Licht der zweiten Wellenlänge bestrahlt wird.

2. Verfahren gemäß Anspruch 1, wobei die Messprobe kein Hämolysereagenz umfasst und/oder das Verfahren ferner umfasst
das Vorbereiten der Messprobe durch Mischen des Vollbluts und des Fluoreszenzfarbstoffs vor der Erfassung, und
kein Hämolysieren einer in der Messprobe enthaltenen reifen roten Blutzelle.

3. Verfahren gemäß Anspruch 1 oder 2, wobei der Fluoreszenzfarbstoff ein Fluoreszenzfarbstoff ist, der durch das Licht der ersten Wellenlänge angeregt werden kann, und die Fluoreszenzinformationen Informationen über die Fluoreszenz sind, die durch Bestrahlung der Messprobe mit dem Licht der ersten Wellenlänge von dem Fluoreszenzfarbstoff der Partikel erzeugt wird, oder der Fluoreszenzfarbstoff ein Fluoreszenzfarbstoff ist, der durch das Licht der zweiten Wellenlänge angeregt werden kann, und die Fluoreszenzinformationen Informationen über die Fluoreszenz sind, die durch Bestrahlen der Messprobe mit dem Licht der zweiten Wellenlänge von dem Fluoreszenzfarbstoff des Partikels erzeugt wird.

4. Verfahren gemäß irgendeinem der Ansprüche 1 bis 3, wobei die Fluoreszenzinformationen die Fluoreszenzintensität sind.

5. Verfahren gemäß Anspruch 4, wobei
bei der Spezifizierung einer Population von kernhaltigen Zellen Partikel in der Messprobe auf der Grundlage der Fluoreszenzintensität in eine erste Partikelpopulation und eine zweite Partikelpopulation klassifiziert werden, die zweite Partikelpopulation eine Population ist, die eine höhere Fluoreszenzintensität als die erste Partikelpopulation anzeigt, und
die zweite Partikelpopulation als Population von kernhaltigen Zellen spezifiziert wird, und
wobei optional die erste Partikelpopulation als eine Population spezifiziert wird, die reife rote Blutkörperchen umfasst, und/oder
wobei optional bei der Spezifizierung einer Population von kernhaltigen Zellen eine Population von Partikeln, die eine höhere Fluoreszenzintensität als ein Schwellenwert anzeigt, als die zweite Partikelpopulation spezifiziert wird.

6. Verfahren gemäß Anspruch 4, wobei bei der Spezifizierung einer Population von kernhaltigen Zellen ein Histogramm auf der Grundlage der Fluoreszenzintensität und einer Partikelanzahl erstellt wird und eine Population von Partikeln, die eine höhere Fluoreszenzintensität als ein Schwellenwert im Histogramm aufweisen, als Population von kernhaltigen Zellen spezifiziert wird.

7. Verfahren gemäß irgendeinem der Ansprüche 1 bis 4, wobei die Fluoreszenzinformationen Fluoreszenzintensitäten sind, die ersten Streulichtinformationen erste seitlich gestreute Lichtintensitäten sind und die zweiten Streulichtinformationen zweite vorwärts gestreute Lichtintensitäten oder zweite seitlich gestreute Lichtintensitäten sind,
bei der Spezifizierung einer Population von kernhaltigen Zellen ein Streudiagramm auf der Grundlage der Fluoreszenzintensitäten und der ersten seitlich gestreuten Lichtintensitäten, der zweiten vorwärts gestreuten Lichtintensitäten oder der zweiten seitlich gestreuten Lichtintensitäten erstellt wird, und
eine Population von Partikeln, die eine höhere Fluoreszenzintensität als ein Schwellenwert im Streudiagramm aufweisen, als Population von kernhaltigen Zellen spezifiziert wird.

8. Verfahren gemäß irgendeinem der Ansprüche 1 bis 6, wobei die erste Streulichtinformation seitlich gestreute Streulichtinformation ist.

9. Verfahren gemäß irgendeinem der Ansprüche 1 bis 8, wobei bei der Spezifizierung einer kernhaltigen roten Blutzelle die Population kernhaltiger Zellen auf der Grundlage der ersten Streulichtinformation und der zweiten Streulichtinformation in kernhaltige rote Blutzellen und weiße Blutzellen klassifiziert wird.

10. Verfahren gemäß irgendeinem der Ansprüche 1 bis 9, wobei die erste Streulichtinformation eine erste seitlich gestreute Lichtintensität ist und die zweite Streulichtinformation eine zweite vorwärts gestreute Lichtintensität oder eine zweite seitlich gestreute Lichtintensität ist.

11. Verfahren gemäß Anspruch 10, wobei
bei der Spezifizierung einer kernhaltigen roten Blutzelle die Population der kernhaltigen Zellen auf der Grundlage der ersten seitlich gestreuten Lichtintensität und der zweiten vorwärts gestreuten Lichtintensität oder der zweiten seitlich gestreuten Lichtintensität in eine dritte Partikelpopulation und eine vierte Partikelpopulation klassifiziert wird,
die vierte Partikelpopulation eine Population ist, die eine höhere erste seitlich gestreute Lichtintensität als die dritte Partikelpopulation anzeigt, und
die dritte Partikelpopulation als kernhaltige rote Blutkörperchen spezifiziert wird und die vierte Partikelpopulation als weiße Blutkörperchen spezifiziert wird.

12. Verfahren gemäß Anspruch 11, wobei
ein Streudiagramm auf der Grundlage der ersten seitlich gestreuten Lichtintensität und der zweiten vorwärts gestreuten Lichtintensität oder der zweiten seitlich gestreuten Lichtintensität erstellt wird, und
die Population der kernhaltigen Zellen in dem Streudiagramm in die dritte Partikelpopulation und die vierte Partikelpopulation klassifiziert wird.

13. Verfahren gemäß irgendeinem der Ansprüche 9 bis 12, ferner umfassend das Klassifizieren der weißen Blutkörperchen in drei Subpopulationen: Lymphozyten, Monozyten und Granulozyten.

14. Verfahren gemäß irgendeinem der Ansprüche 1 bis 13, wobei
die erste Streulichtinformation oder die zweite Streulichtinformation Informationen über vorwärts gestreutes Licht umfasst,
das Verfahren ferner Spezifizieren einer Partikelpopulation, die ein Blutplättchen aus den Partikeln in der Messprobe ausschließt, basierend auf den Informationen über vorwärts gestreutes Licht nach dem Erfassen und vor dem Spezifizieren einer Population von kernhaltigen Zellen, umfasst, und
beim Spezifizieren einer Population von kernhaltigen Zellen eine Zellpopulation der kernhaltigen Zellen aus der Population unter Ausschluss eines Blutplättchens auf der Grundlage von Fluoreszenzinformationen der Partikelpopulation spezifiziert wird, und wobei optional bei der Spezifizierung einer Partikelpopulation unter Ausschluss eines Blutplättchens die Informationen über das vorwärts gestreute Licht die erste vorwärts gestreute Lichtintensität oder die zweite vorwärts gestreute Lichtintensität sind,
die Partikel in der Messprobe auf der Grundlage der vorwärts gestreuten Lichtintensität in eine fünfte Partikelpopulation und eine sechste Partikelpopulation klassifiziert werden,
die sechste Partikelpopulation eine Population ist, die eine höhere Vorwärtsstreulichtintensität als die fünfte Partikelpopulation anzeigt, und die sechste Partikelpopulation als eine Zellpopulation unter Ausschluss eines Blutplättchens spezifiziert wird, und wobei optional die fünfte Partikelpopulation als eine Population von Blutplättchen spezifiziert wird.

15. Verfahren gemäß Anspruch 14, wobei die Informationen über das vorwärts gestreute Licht die zweite Intensität des vorwärts gestreuten Lichts sind und wobei optional bei der Spezifizierung einer Partikelpopulation unter Ausschluss eins Blutplättchens eine Population von Partikeln, die eine zweite Intensität des vorwärts gestreuten Lichts kleiner oder gleich einem Schwellenwert anzeigt, als fünfte Partikelpopulation spezifiziert wird und eine Population von Partikeln, die eine höhere zweite Intensität des vorwärts gestreuten Lichts als der Schwellenwert anzeigt, als sechste Partikelpopulation spezifiziert wird.

16. Verfahren gemäß irgendeinem der Ansprüche 1 bis 13, wobei
die Fluoreszenzinformationen die Fluoreszenzintensität sind, die ersten Streulichtinformationen die erste seitlich gestreute Lichtintensität sind und die zweiten Streulichtinformationen die zweite vorwärts gestreute Lichtintensität oder die zweite seitlich gestreute Lichtintensität sind,
das Verfahren ferner umfasst, dass nach dem Erfassen und vor dem Spezifizieren einer Population von kernhaltigen Zellen eine Partikelpopulation, die ein Blutplättchen ausschließt, aus den Partikeln in der Messprobe spezifiziert wird,
beim Spezifizieren einer Partikelpopulation, die ein Blutplättchen ausschließt, ein Streudiagramm auf der Grundlage der zweiten Vorwärtsstreulichtintensität, der Fluoreszenzintensität, der ersten seitlichen Streulichtintensität oder der zweiten seitlichen Streulichtintensität erstellt wird,
die Partikel in der Messprobe in dem Streudiagramm in eine fünfte Partikelpopulation und eine sechste Partikelpopulation klassifiziert werden,
die sechste Partikelpopulation eine Population ist, die eine höhere Vorwärtsstreulichtintensität als die fünfte Partikelpopulation anzeigt, und
die sechste Partikelpopulation als eine Zellpopulation unter Ausschluss eines Blutplättchens spezifiziert wird.

17. Verfahren gemäß irgendeinem der Ansprüche 1 bis 16, wobei der Fluoreszenzfarbstoff ausgewählt ist aus einer Gruppe bestehend aus einer Acridinverbindung, einer Cyaninverbindung, einer Styrylverbindung, einer Phenoxazinverbindung, einer Phenothiazinverbindung, einer Cumarinverbindung und einer Azo(triazin)verbindung und wobei optional
(i) die Acridinverbindung eine Verbindung ist, die durch die folgende Formel (I) repräsentiert wird: 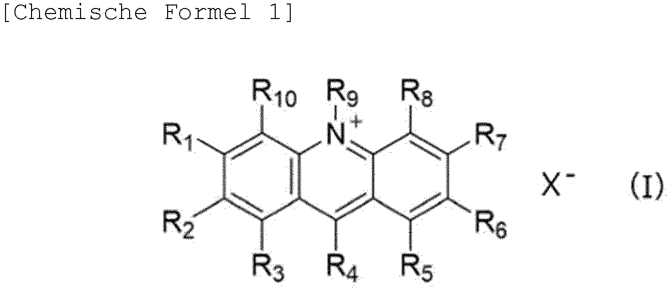
worin R₁ bis R₁₀ unabhängig voneinander ein Wasserstoffatom, -NH₂, -(CH₂)ₙ-NR₁₁R₁₂, -NH-R₁₃-NR₁₁R₁₂, -O-R₁₁, -COOH, ein Halogen, eine Phenylgruppe, die optional einen Substituenten hat, eine Alkylgruppe mit 1 bis 18 Kohlenstoffatomen oder eine Aminoacylgruppe sind,
wobei mindestens einer der Reste R₁, R₄ oder R₇ unabhängig voneinander -NH₂, -(CH₂)ₙ-NR₁₁R₁₂ oder eine mit -NH₂ substituierte Phenylgruppe ist,
R₁₁ und R₁₂ gleich oder verschieden sind, und R₁₁ und R₁₂ ein Wasserstoffatom oder eine Alkylgruppe mit 1 bis 18 Kohlenstoffatomen sind,
R₁₃ eine Alkylgruppe mit 1 bis 6 Kohlenstoffatomen ist, n eine ganze Zahl von 0 bis 6 ist und X⁻ ein Gegenion ist, oder
(ii) die Cyaninverbindung eine Verbindung ist, die durch die folgende Formel (II) repräsentiert wird: 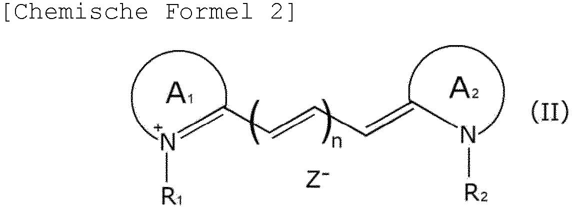
wobei R₁ und R₂ gleich oder verschieden sind und R₁ und R₂ eine Alkylgruppe mit 1 bis 18 Kohlenstoffatomen, eine Alkenylgruppe mit 3 bis 20 Kohlenstoffatomen, eine Alkylgruppe mit 1 bis 18 Kohlenstoffatomen mit einer Hydroxygruppe, eine Alkylgruppe mit 1 bis 18 Kohlenstoffatomen mit einer Carboxygruppe, eine Alkylgruppe mit 1 bis 18 Kohlenstoffatomen mit einer Sulfogruppe, ein Halogenatom, -(CH₂)ₚ-NR₅R₆, -(CH₂)_{q}-O-R₇ oder eine Benzylgruppe, die optional einen Substituenten aufweist,
n eine ganze Zahl von 0 bis 2 ist, p eine ganze Zahl von 1 bis 18 ist und q eine ganze Zahl von 1 bis 6 ist, 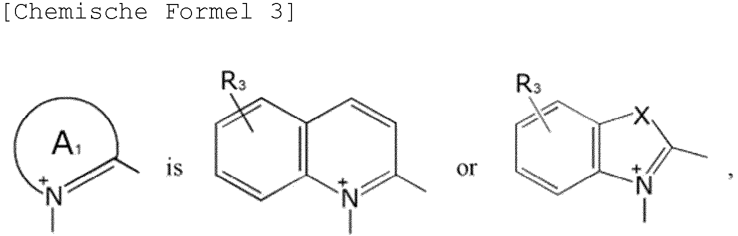 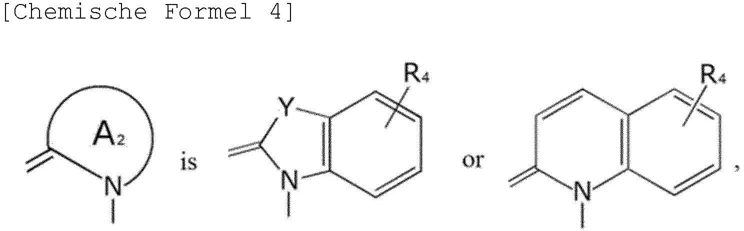
R₃ und R₄ sind gleich oder verschieden, und R₃ und R₄ ein Wasserstoffatom, ein Halogen, eine Alkylgruppe mit 1 bis 18 Kohlenstoffatomen, eine Phenylgruppe, die optional einen Substituenten aufweist, eine Alkoxygruppe mit 1 bis 6 Kohlenstoffatomen oder -(CH₂)_{q}-O-R₇ sind,
R₅ und R₆ sind gleich oder verschieden, und R₅ und R₆ ein Wasserstoffatom oder eine Alkylgruppe mit 1 bis 18 Kohlenstoffatomen sind,
R₇ ein Wasserstoffatom, eine Alkylgruppe mit 1 bis 18 Kohlenstoffatomen oder eine Phenylgruppe mit einem optionalen Substituenten ist,
X und Y gleich oder verschieden sind und X und Y ein Schwefelatom, ein Sauerstoffatom, ein Selenatom oder CR₈R₉ sind,
R₈ und R₉ gleich oder verschieden sind, und R₈ und R₉ eine Alkylgruppe mit 1 bis 3 Kohlenstoffatomen sind, und Z⁻ ein Gegenion ist,
oder die Cyaninverbindung eine Verbindung ist, die durch die folgende Formel (III) repräsentiert wird: 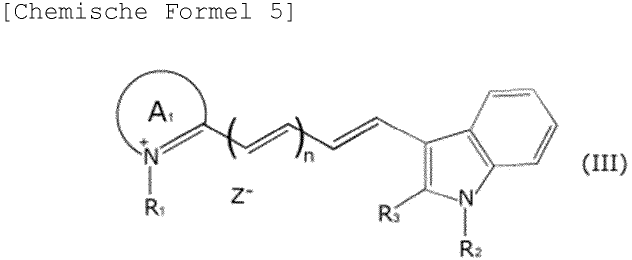
wobei R₁, R₂, R₃, A₁, n und Z⁻ wie oben beschrieben sind, oder die Cyaninverbindung eine Verbindung ist, die durch die folgende Formel (IV) repräsentiert wird: 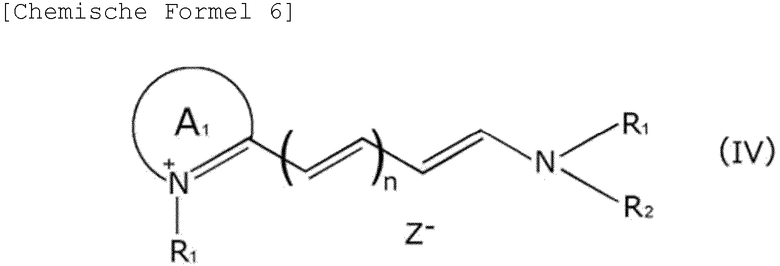
wobei R₁, R₂, A₁, n und Z⁻ wie oben beschrieben sind, oder
die Cyaninverbindung eine Verbindung ist, die durch die folgende Formel (V) dargestellt wird: 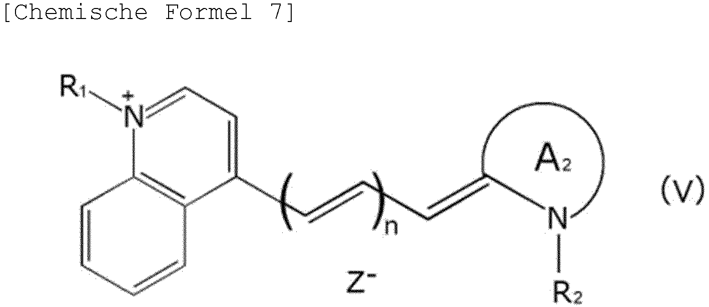
wobei R₁, R₂, A₂, n und Z⁻ wie oben beschrieben sind, oder
die Cyaninverbindung eine Verbindung ist, die durch die folgende Formel (VI) repräsentiert wird: 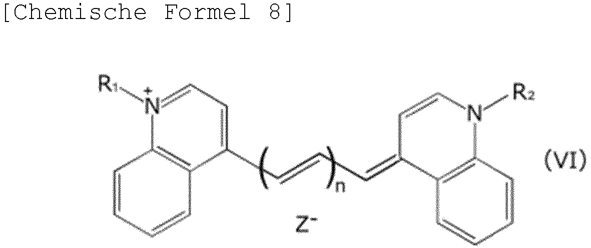
wobei R₁, R₂, n und Z⁻ wie oben beschrieben sind, oder
(iii) die Styrylverbindung
eine Verbindung ist, die durch die folgende Formel (VII) repräsentiert wird: 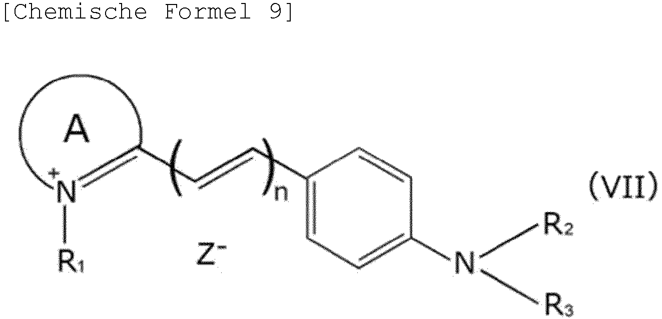
wobei R₁ eine Alkylgruppe mit 1 bis 18 Kohlenstoffatomen, eine Alkenylgruppe mit 3 bis 20 Kohlenstoffatomen, eine Alkylgruppe mit 1 bis 18 Kohlenstoffatomen mit einer Hydroxygruppe, eine Alkylgruppe mit 1 bis 18 Kohlenstoffatomen mit einer Carboxygruppe, eine Alkylgruppe mit 1 bis 18 Kohlenstoffatomen mit einer Sulfogruppe, ein Halogen, -(CH₂)ₚ-NR₅R₆, -(CH₂)_{q}-O-R₇ oder eine Benzylgruppe mit einem optionalen Substituenten ist,
R₂ und R₃ gleich oder unterschiedlich sind und R₂ und R₃ ein Wasserstoffatom, ein Halogen, eine Alkylgruppe mit 1 bis 18 Kohlenstoffatomen, eine Phenylgruppe mit einem optionalen Substituenten, eine Alkoxygruppe mit 1 bis 6 Kohlenstoffatomen sind, oder R₂ und/oder R₃ bilden einen heterocyclischen Ring, der N zusammen mit einem Benzolring, an den das N gebunden ist, umfasst, n ist eine ganze Zahl von 0 bis 2, p ist eine ganze Zahl von 1 bis 18 und q ist eine ganze Zahl von 1 bis 6, 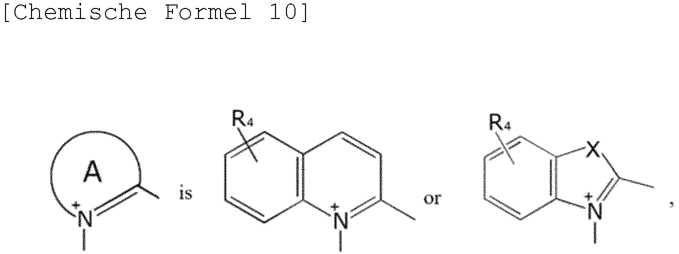
wobei R₄ ein Wasserstoffatom, ein Halogen, eine Alkylgruppe mit 1 bis 18 Kohlenstoffatomen, eine Phenylgruppe, die gegebenenfalls einen Substituenten aufweist, eine Alkoxygruppe mit 1 bis 6 Kohlenstoffatomen oder -(CH₂)_{q}-O-R₇ ist,
R₅ und R₆ gleich oder verschieden sind und R₅ und R₆ ein Wasserstoffatom oder eine Alkylgruppe mit 1 bis 18 Kohlenstoffatomen sind,
R₇ ein Wasserstoffatom, eine Alkylgruppe mit 1 bis 18 Kohlenstoffatomen oder eine Phenylgruppe mit einem optionalen Substituenten ist,
X ein Schwefelatom, ein Sauerstoffatom, ein Selenatom oder CR₈R₉ ist,
R₈ und R₉ gleich oder verschieden sind und R₈ und R₉ eine Alkylgruppe mit 1 bis 3 Kohlenstoffatomen sind, und Z⁻ein Gegenion ist, oder
die Styrylverbindung ist eine Verbindung, die durch die folgende Formel (VIII) repräsentiert wird: 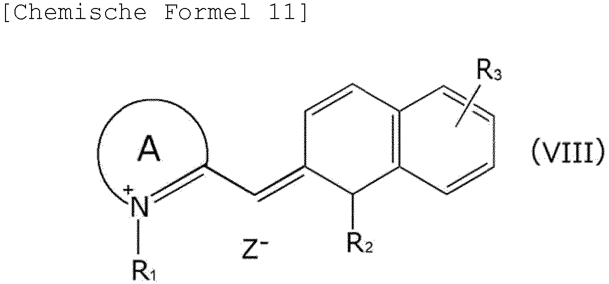
wobei R₁, A und Z⁻ wie oben beschrieben sind,
R₂ und R₃ gleich oder verschieden sind und R₂ und R₃ ein Wasserstoffatom, ein Halogen, eine Alkylgruppe mit 1 bis 18 Kohlenstoffatomen, eine Phenylgruppe, die optional einen Substituenten aufweist, oder eine Alkoxygruppe mit 1 bis 6 Kohlenstoffatomen sind; oder
die Styrylverbindung eine Verbindung ist, die durch die folgende Formel (IX) repräsentiert wird: 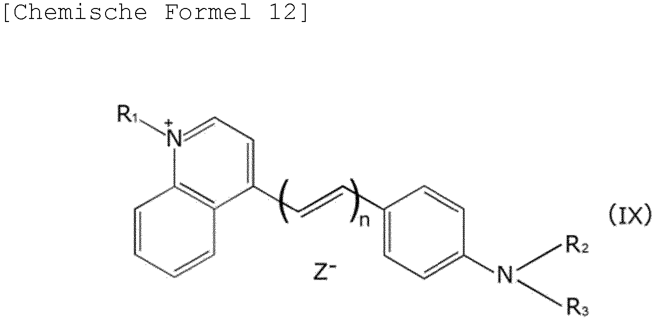
worin R₁, R₂, R₃, n und Z⁻ wie oben beschrieben sind, oder
(iv) die Phenoxazinverbindung eine Verbindung ist, die durch die folgende Formel (X) repräsentiert wird: 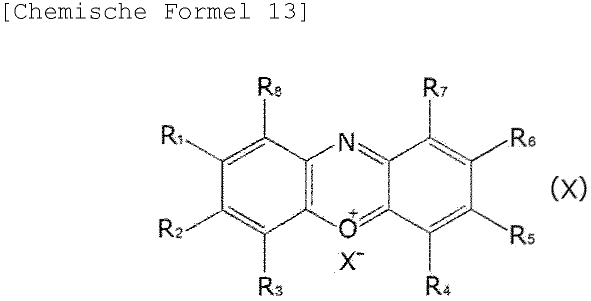
wobei mindestens einer der Reste R₂ oder R₅ unter R₁ bis R₈ unabhängig voneinander -NH₂, -(CH₂)ₙ-NR₉R₁₀ oder eine mit -NH₂ substituierte Phenylgruppe ist, der verbleibende Rest R unabhängig voneinander ein Wasserstoffatom, ein Sauerstoffatom, -O-R₉, -COOH, -NO₂,
ein Halogen, eine Phenylgruppe, die gegebenenfalls einen Substituenten aufweist, eine Alkylgruppe mit 1 bis 18 Kohlenstoffatomen oder eine Aminoacylgruppe, oder R₁ und R₈ sind miteinander verbunden, um einen Benzolring zu bilden, und/oder R₆ und R₇ sind miteinander verbunden, um einen Benzolring zu bilden,
R₉ und R₁₀ gleich oder verschieden sind und R₉ und R₁₀ ein Wasserstoffatom oder eine Alkylgruppe mit 1 bis 18 Kohlenstoffatomen sind, n eine ganze Zahl von 0 bis 6 ist und X⁻ ein Gegenion ist oder
(v) die Phenothiazinverbindung eine Verbindung ist, die durch die folgende Formel (XI) repräsentiert wird: 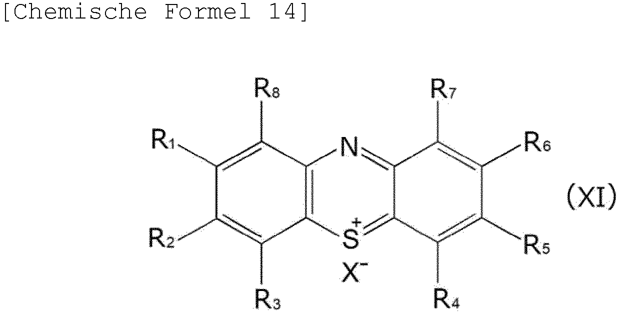
wobei mindestens einer der Reste R₂ oder R₅ unter R₁ bis R₈ unabhängig voneinander -NH₂, -(CH₂)ₙ-NR₉R₁₀ oder eine mit -NH₂ substituierte Phenylgruppe ist, der verbleibende Rest R unabhängig voneinander ein Wasserstoffatom, ein Sauerstoffatom, -O-R₉, -COOH, -NO₂, ein Halogen, eine Phenylgruppe, die optional einen Substituenten aufweist, eine Alkylgruppe mit 1 bis 18 Kohlenstoffatomen oder eine Aminoacylgruppe, oder R₁ und R₉ sind miteinander verbunden, um einen Benzolring zu bilden, sind und/oder R₆ und R₇ sind miteinander verbunden, um einen Benzolring zu bilden,
R₉ und R₁₀ gleich oder verschieden sind und R₉ und R₁₀ ein Wasserstoffatom oder eine Alkylgruppe mit 1 bis 18 Kohlenstoffatomen sind,
n eine ganze Zahl von 0 bis 6 ist, und
X⁻ ein Gegenion ist oder
(vi) die Cumarinverbindung eine Verbindung ist, die durch die folgende Formel (XII) repräsentiert wird: 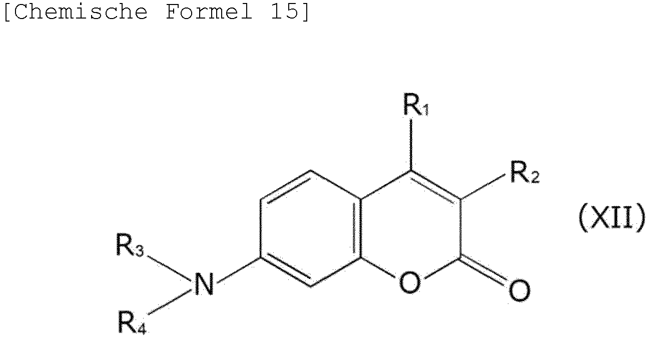
wobei R₁ ein Wasserstoffatom, eine Alkylgruppe mit 1 bis 3 Kohlenstoffatomen, eine Halogenalkylgruppe mit 1 bis 3 Kohlenstoffatomen oder eine Alkylgruppe mit 1 bis 3 Kohlenstoffatomen mit einer Hydroxygruppe ist, oder R₁ und R₂ miteinander verbunden sind, um einen Ring zu bilden,
R₂ ein Wasserstoffatom, ein Benzimidazolring, ein Benzothiazolring, ein Benzoxazolring, ein Pyridinring,-COOR₅, -SO₃R₆, -CN oder eine Phenylgruppe mit einem optionalen Substituenten ist,
R₃ und R₄ gleich oder verschieden sind und ein Wasserstoffatom oder eine Alkylgruppe mit 1 bis 6 Kohlenstoffatomen sind, oder R₃ und/oder R₄ zusammen mit einem Benzolring, an den das N gebunden ist, einen heterocyclischen Ring bilden, der N enthält, und
R₅ und R₆ gleich oder verschieden sind und R₅ und R₆ ein Wasserstoffatom oder eine Alkylgruppe mit 1 bis 6 Kohlenstoffatomen sind, oder
(vii) die Azo(triazin)-Verbindung eine Verbindung ist, die durch die folgende Formel repräsentiert wird 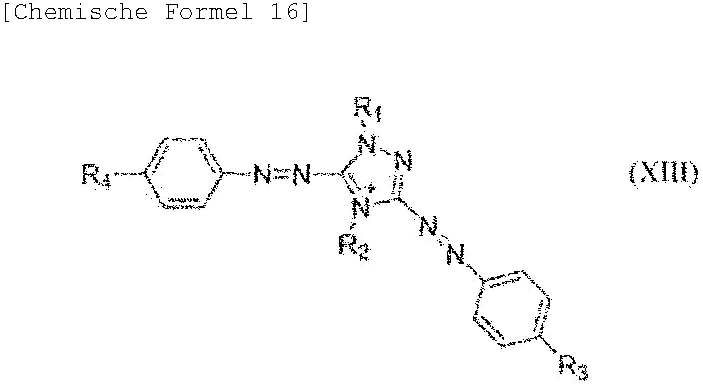
wobei R₁ und R₂ gleich oder verschieden sind und R₁ und R₂ ein Wasserstoffatom oder eine Alkylgruppe mit 1 bis 3 Kohlenstoffatomen sind, R₃ und R₄ gleich oder verschieden sind und R₃ und R₄ ein Wasserstoffatom, eine Alkylgruppe mit 1 bis 3 Kohlenstoffatomen oder -NR₅R₆ sind, und
R₅ und R₆ gleich oder verschieden sind und R₅ und R₆ ein Wasserstoffatom oder eine Alkylgruppe mit 1 bis 3 Kohlenstoffatomen sind.

## Revendications

1. Procédé d'analyse de cellules sanguines comprenant :
l'acquisition d'informations de fluorescence, de premières informations de lumière diffusée, et de deuxièmes informations de lumière diffusée générées par l'exposition d'un échantillon de mesure comprenant une particule colorée avec un colorant fluorescent apte à se lier à un acide nucléique à une lumière d'une première longueur d'onde et une lumière d'une deuxième longueur d'onde ;
la spécification d'une population de cellules nucléées à partir de particules dans l'échantillon de mesure sur la base des informations de fluorescence ; et
la spécification d'un globule rouge nucléé à partir de la population de cellules nucléées sur la base des premières informations de lumière diffusée et des deuxièmes informations de lumière diffusée de la population de cellules nucléées,
dans lequel l'échantillon de mesure est un échantillon préparé par le mélange de sang total et du colorant fluorescent,
le colorant fluorescent est un colorant fluorescent apte à être excité par la lumière de la première longueur d'onde ou la lumière de la deuxième longueur d'onde,
la première longueur d'onde est de 315 nm ou plus et de 490 nm ou moins, et la deuxième longueur d'onde est de 610 nm ou plus et de 750 nm ou moins,
les informations de fluorescence sont des informations relatives à la fluorescence générée par le colorant fluorescent de la particule,
les premières informations de lumière diffusée sont des informations sur la lumière diffusée générée par la particule par l'exposition de l'échantillon de mesure à la lumière de la première longueur d'onde, et
les deuxièmes informations de lumière diffusée sont des informations sur la lumière diffusée générée par la particule par l'exposition de l'échantillon de mesure à la lumière de la deuxième longueur d'onde.

2. Procédé selon la revendication 1, dans lequel
l'échantillon de mesure ne comprend pas un réactif d'hémolyse et/ou
le procédé comprenant en outre
la préparation de l'échantillon de mesure par le mélange de sang total et du colorant fluorescent avant l'acquisition, et
le fait de ne pas comprendre l'hémolyse d'un globule rouge mature compris dans l'échantillon de mesure.

3. Procédé selon la revendication 1 ou 2, dans lequel
le colorant fluorescent est un colorant fluorescent apte à être excité par la lumière de la première longueur d'onde, et les informations de fluorescence sont des informations sur la fluorescence générée par le colorant fluorescent de la particule par l'exposition de l'échantillon de mesure à la lumière de la première longueur d'onde, ou
le colorant fluorescent est un colorant fluorescent apte à être excité par la lumière de la deuxième longueur d'onde, et les informations de fluorescence sont des informations sur la fluorescence générée par le colorant fluorescent de la particule par l'exposition de l'échantillon de mesure à la lumière de la deuxième longueur d'onde.

4. Procédé selon l'une quelconque des revendications 1 à 3, dans lequel les informations de fluorescence sont l'intensité de fluorescence.

5. Procédé selon la revendication 4, dans lequel
dans la spécification d'une population de cellules nucléées, des particules dans l'échantillon de mesure sont classées en une première population de particules et une deuxième population de particules sur la base de l'intensité de fluorescence,
la deuxième population de particules est une population indiquant une intensité de fluorescence supérieure à celle de la première population de particules, et
la deuxième population de particules est spécifiée en tant que population de cellules nucléées et
dans lequel, facultativement, la première population de particules est spécifiée en tant que population comprenant des globules rouges matures et/ou
dans lequel, facultativement, dans la spécification d'une population de cellules nucléées, une population de particules indiquant une intensité de fluorescence supérieure à une valeur seuil est spécifiée en tant que deuxième population de particules.

6. Procédé selon la revendication 4, dans lequel, dans la spécification d'une population de cellules nucléées, un histogramme basé sur l'intensité de fluorescence et un nombre de particules est créé, et une population de particules indiquant une intensité de fluorescence supérieure à une valeur seuil dans l'histogramme est spécifiée en tant que population de cellules nucléées.

7. Procédé selon l'une quelconque des revendications 1 à 4, dans lequel
les informations de fluorescence sont l'intensité de fluorescence, les premières informations de lumière diffusée sont une première intensité de lumière diffusée latérale, et les deuxièmes informations de lumière diffusée sont une deuxième intensité de lumière diffusée vers l'avant ou une deuxième intensité de lumière diffusée latérale,
dans la spécification d'une population de cellules nucléées, un nuage de points est créé sur la base de l'intensité de fluorescence et de la première intensité de lumière diffusée latérale, de la deuxième intensité de lumière diffusée vers l'avant, ou de la deuxième intensité de lumière diffusée latérale, et
une population de particules indiquant une intensité de fluorescence supérieure à une valeur seuil dans le nuage de points est spécifiée en tant que population de cellules nucléées.

8. Procédé selon l'une quelconque des revendications 1 à 6, dans lequel les premières informations de lumière diffusée sont des informations de lumière diffusée latérale.

9. Procédé selon l'une quelconque des revendications 1 à 8, dans lequel, dans la spécification d'un globule rouge nucléé, la population de cellules nucléées est classée en globules rouges nucléés et en globules blancs sur la base des premières informations de lumière diffusée et des deuxièmes informations de lumière diffusée.

10. Procédé selon l'une quelconque des revendications 1 à 9, dans lequel les premières informations de lumière diffusée sont une première intensité de lumière diffusée latérale, et les deuxièmes informations de lumière diffusée sont une deuxième intensité de lumière diffusée vers l'avant ou une deuxième intensité de lumière diffusée latérale.

11. Procédé selon la revendication 10, dans lequel
dans la spécification d'un globule rouge nucléé, la population de cellules nucléées est classée en une troisième population de particules et une quatrième population de particules sur la base de la première intensité de lumière diffusée latérale et de la deuxième intensité de lumière diffusée vers l'avant ou de la deuxième intensité de lumière diffusée latérale,
la quatrième population de particules est une population indiquant une première intensité de lumière diffusée latérale supérieure à celle de la troisième population de particules, et
la troisième population de particules est spécifiée en tant que globules rouges nucléés, et la quatrième population de particules est spécifiée en tant que globules blancs.

12. Procédé selon la revendication 11, dans lequel
un nuage de points basé sur la première intensité de lumière diffusée latérale et la deuxième intensité de lumière diffusée vers l'avant ou la deuxième intensité de lumière diffusée latérale est créé, et
la population de cellules nucléées est classée en la troisième population de particules et la quatrième population de particules dans le nuage de points.

13. Procédé selon l'une quelconque des revendications 9 à 12, comprenant en outre la classification des globules blancs en trois sous-populations : lymphocytes, monocytes, et granulocytes.

14. Procédé selon l'une quelconque des revendications 1 à 13, dans lequel
les premières informations de lumière diffusée ou les deuxièmes informations de lumière diffusée comprennent des informations sur la lumière diffusée vers l'avant,
le procédé comprend en outre la spécification d'une population de particules excluant une plaquette des particules dans l'échantillon de mesure sur la base des informations sur la lumière diffusée vers l'avant après l'acquisition et avant la spécification d'une population de cellules nucléées, et
dans la spécification d'une population de cellules nucléées, une population de cellules des cellules nucléées est spécifiée à partir de la population excluant une plaquette sur la base d'informations de fluorescence de la population de particules excluant une plaquette et dans lequel, facultativement,
dans la spécification d'une population de particules excluant une plaquette, les informations sur la lumière diffusée vers l'avant sont une première intensité de lumière diffusée vers l'avant ou une deuxième intensité de lumière diffusée vers l'avant,
les particules dans l'échantillon de mesure sont classées en une cinquième population de particules et une sixième population de particules sur la base de l'intensité de lumière diffusée vers l'avant, la sixième population de particules est une population indiquant une intensité de lumière diffusée vers l'avant supérieure à celle de la cinquième population de particules, et
la sixième population de particules est spécifiée en tant que population de cellules excluant une plaquette et
dans lequel, facultativement, la cinquième population de particules est spécifiée en tant que population de plaquettes.

15. Procédé selon la revendication 14, dans lequel les informations sur la lumière diffusée vers l'avant sont la deuxième intensité de lumière diffusée vers l'avant et
dans lequel, facultativement, dans la spécification d'une population de particules excluant une plaquette, une population de particules indiquant une deuxième intensité de lumière diffusée vers l'avant inférieure ou égale à une valeur seuil est spécifiée en tant que cinquième population de particules, et une population de particules indiquant une deuxième intensité de lumière diffusée vers l'avant supérieure à la valeur seuil est spécifiée en tant que sixième population de particules.

16. Procédé selon l'une quelconque des revendications 1 à 13, dans lequel
les informations de fluorescence sont l'intensité de fluorescence, les premières informations de lumière diffusée sont une première intensité de lumière diffusée latérale, et les deuxièmes informations de lumière diffusée sont une deuxième intensité de lumière diffusée vers l'avant ou une deuxième intensité de lumière diffusée latérale,
le procédé comprend en outre, après l'acquisition et avant la spécification d'une population de cellules nucléées, la spécification d'une population de particules excluant une plaquette des particules dans l'échantillon de mesure,
dans la spécification d'une population de particules excluant une plaquette, un nuage de points basé sur la deuxième intensité de lumière diffusée vers l'avant, l'intensité de fluorescence, la première intensité de lumière diffusée latérale, ou la deuxième intensité de lumière diffusée latérale est créé,
les particules dans l'échantillon de mesure sont classées en une cinquième population de particules et une sixième population de particules dans le nuage de points,
la sixième population de particules est une population indiquant une intensité de lumière diffusée vers l'avant supérieure à celle de la cinquième population de particules, et
la sixième population de particules est spécifiée en tant que population de cellules excluant une
plaquette.

17. Procédé selon l'une quelconque des revendications 1 à 16, dans lequel le colorant fluorescent est sélectionné dans un groupe consistant en un composé d'acridine, un composé de cyanine, un composé de styryle, un composé de phénoxazine, un composé de phénothiazine, un composé de coumarine, et un composé d'azo(triazine) et dans lequel, facultativement,
(i) le composé d'acridine est un composé représenté par la formule (I) suivante : 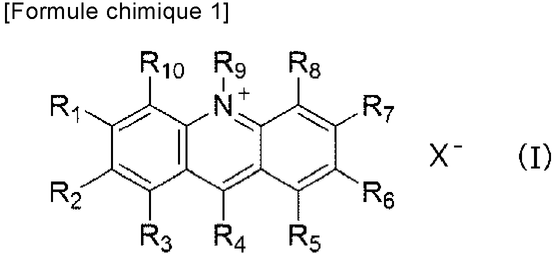
dans lequel R₁ à R₁₀ représentent indépendamment un atome d'hydrogène, -NH₂, -(CH₂)ₙ-NR₁₁R₁₂, -NH-R₁₃-NR₁₁R₁₂, -O-R₁₁, -COOH, un halogène, un groupe phényle présentant facultativement un substituant, un groupe alkyle présentant de 1 à 18 atomes de carbone ou un groupe aminoacyle, dans lequel au moins l'un de R₁, R₄, ou R₇ représente indépendamment -NH₂, -(CH₂)ₙ-NR₁₁R₁₂, ou un groupe phényle substitué par -NH₂,
R₁₁ et R₁₂ sont identiques ou différents, et R₁₁ et R₁₂ représentent un atome d'hydrogène ou un groupe alkyle présentant de 1 à 18 atomes de carbone,
R₁₃ est un groupe alkyle présentant de 1 à 6 atomes de carbone,
n est un nombre entier de 0 à 6, et
X⁻ représente un contre-ion, ou
(ii) le composé de cyanine est
un composé représenté par la formule (II) suivante : 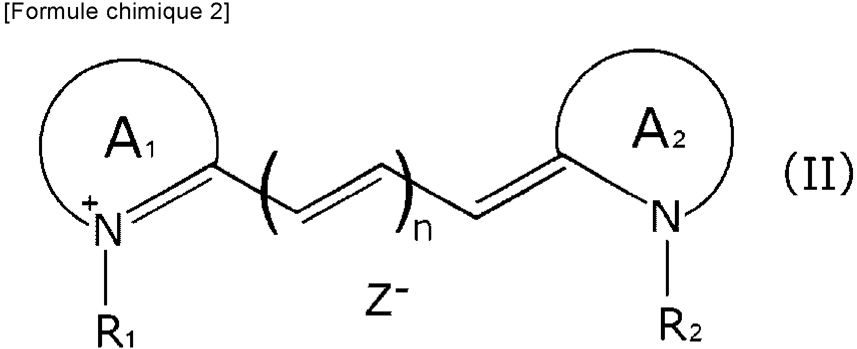
dans lequel R₁ et R₂ sont identiques ou différents, et R₁ et R₂ représentent un groupe alkyle présentant de 1 à 18 atomes de carbone, un groupe alcényle présentant de 3 à 20 atomes de carbone, un groupe alkyle présentant de 1 à 18 atomes de carbone présentant un groupe hydroxy, un groupe alkyle présentant de 1 à 18 atomes de carbone présentant un groupe carboxy, un groupe alkyle présentant de 1 à 18 atomes de carbone présentant un groupe sulfo, un halogène, -(CH₂)NR₅R₆, -(CH2)_{q}-O-R₇, ou un groupe benzyle présentant facultativement un substituant,
n est un nombre entier de 0 à 2, p est un nombre entier de 1 à 18, et q est un nombre entier de 1 à 6, 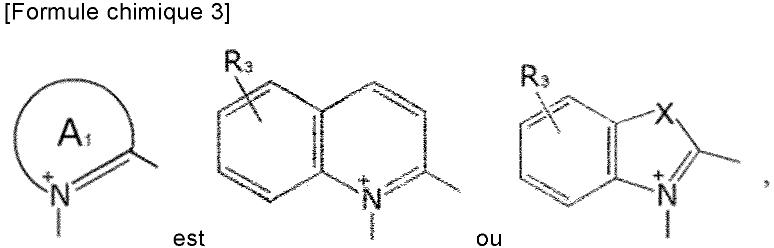 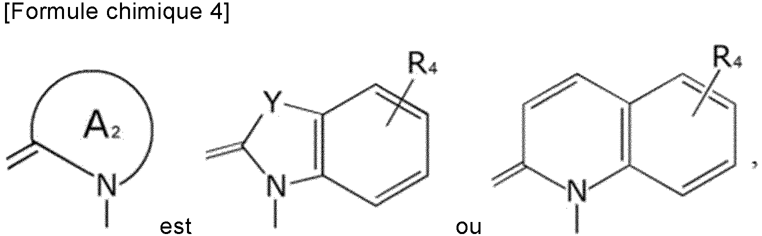
R₃ et R₄ sont identiques ou différents, et R₃ et R₄ représentent un atome d'hydrogène, un halogène, un groupe alkyle présentant de 1 à 18 atomes de carbone, un groupe phényle présentant facultativement un substituant, un groupe alcoxy présentant de 1 à 6 atomes de carbone, ou -(CH2)_{q}-O-R₇,
R₅ et R₆ sont identiques ou différents, et R₅ et R₆ représentent un atome d'hydrogène ou un groupe alkyle présentant de 1 à 18 atomes de carbone,
R₇ représente un atome d'hydrogène, un groupe alkyle présentant de 1 à 18 atomes de carbone, ou un groupe phényle présentant facultativement un substituant,
X et Y sont identiques ou différents, et X et Y représentent un atome de soufre, un atome d'oxygène, un atome de sélénium ou CR₈R₉,
R₈ et R₉ sont identiques ou différents, et R₈ et R₉ représentent un groupe alkyle présentant de 1 à 3 atomes de carbone, et
Z⁻ représente un contre-ion, ou
le composé de cyanine est un composé représenté par la formule (III) suivante : 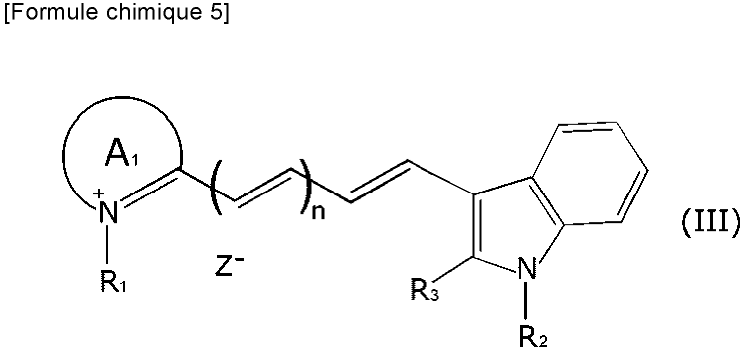 dans lequel R₁, R₂, R₃, A₁, n et Z⁻ sont tels que décrits ci-dessus, ou
le composé de cyanine est un composé représenté par la formule (IV) suivante : 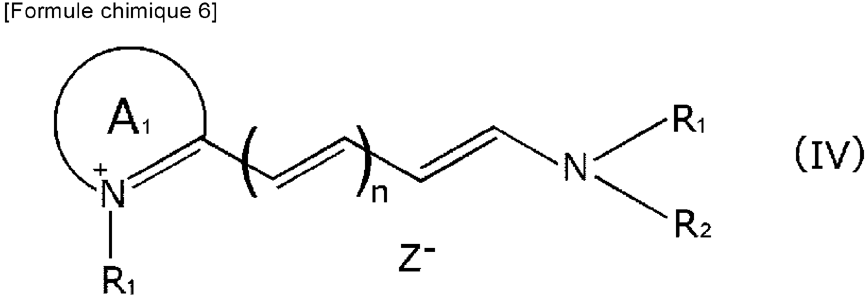 dans lequel R₁, R₂, A₁, n et Z⁻ sont tels que décrits ci-dessus, ou
le composé de cyanine est un composé représenté par la formule (V) suivante : 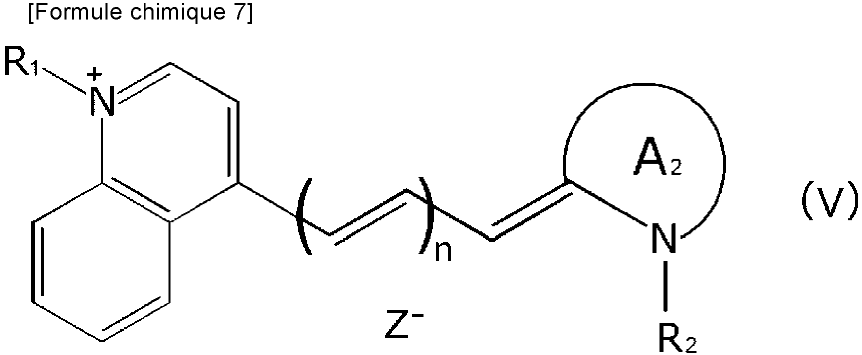 dans lequel R₁, R₂, A₂, n et Z⁻ sont tels que décrits ci-dessus, ou
le composé de cyanine est un composé représenté par la formule (VI) suivante : 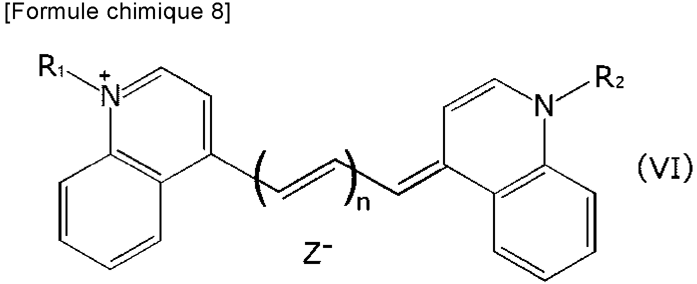 dans lequel R₁, R₂, n et Z⁻ sont tels que décrits ci-dessus ou
(iii) le composé de styryle est
un composé représenté par la formule (VII) suivante : 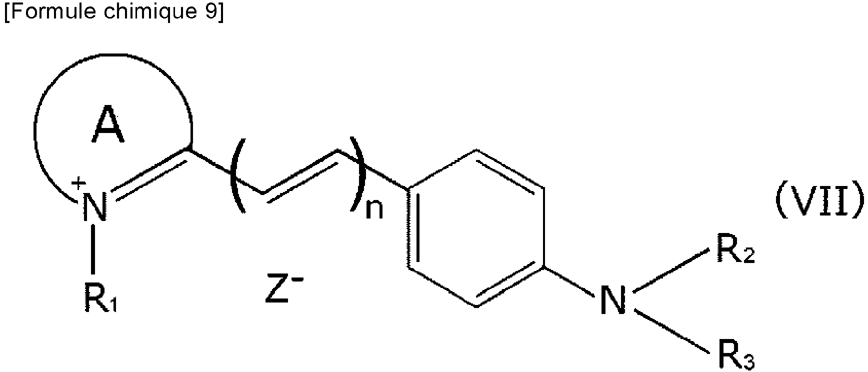
dans lequel R₁ représente un groupe alkyle présentant de 1 à 18 atomes de carbone, un groupe alcényle présentant de 3 à 20 atomes de carbone, un groupe alkyle présentant de 1 à 18 atomes de carbone présentant un groupe hydroxy, un groupe alkyle présentant de 1 à 18 atomes de carbone présentant un groupe carboxy, un groupe alkyle présentant de 1 à 18 atomes de carbone présentant un groupe sulfo, un halogène, -(CH₂)ₚ-NR₅R₆, -(CH2)_{q}-O-R₇, ou un groupe benzyle présentant facultativement un substituant,
R₂ et R₃ sont identiques ou différents, et R₂ et R₃ représentent un atome d'hydrogène, un halogène, un groupe alkyle présentant de 1 à 18 atomes de carbone, un groupe phényle présentant facultativement un substituant, un groupe alcoxy présentant de 1 à 6 atomes de carbone, ou R₂ et/ou R₃ forme(nt) un cycle hétérocyclique comprenant N avec un cycle benzénique auquel le N est lié,
n est un nombre entier de 0 à 2, p est un nombre entier de 1 à 18, et q est un nombre entier de 1 à 6, 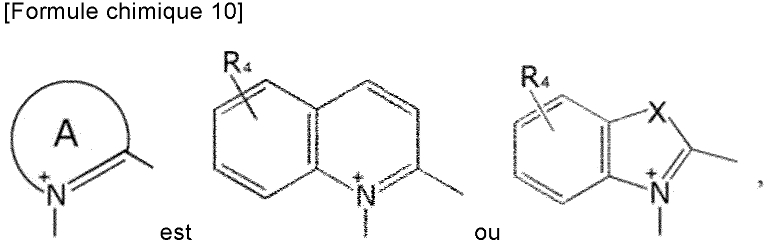
dans lequel R₄ représente un atome d'hydrogène, un halogène, un groupe alkyle présentant de 1 à 18 atomes de carbone, un groupe phényle présentant facultativement un substituant, un groupe alcoxy présentant de 1 à 6 atomes de carbone, ou -(CH2)_{q}-O-R₇,
R₅ et R₆ sont identiques ou différents, et R₅ et R₆ représentent un atome d'hydrogène ou un groupe alkyle présentant de 1 à 18 atomes de carbone,
R₇ représente un atome d'hydrogène, un groupe alkyle présentant de 1 à 18 atomes de carbone, ou un groupe phényle présentant facultativement un substituant,
X représente un atome de soufre, un atome d'oxygène, un atome de sélénium, ou CR₈R₉,
R₈ et R₉ sont identiques ou différents, et R₈ et R₉ représentent un groupe alkyle présentant de 1 à 3 atomes de carbone, et
Z⁻ représente un contre-ion, ou
le composé de styryle est un composé représenté par la formule (VIII) suivante : 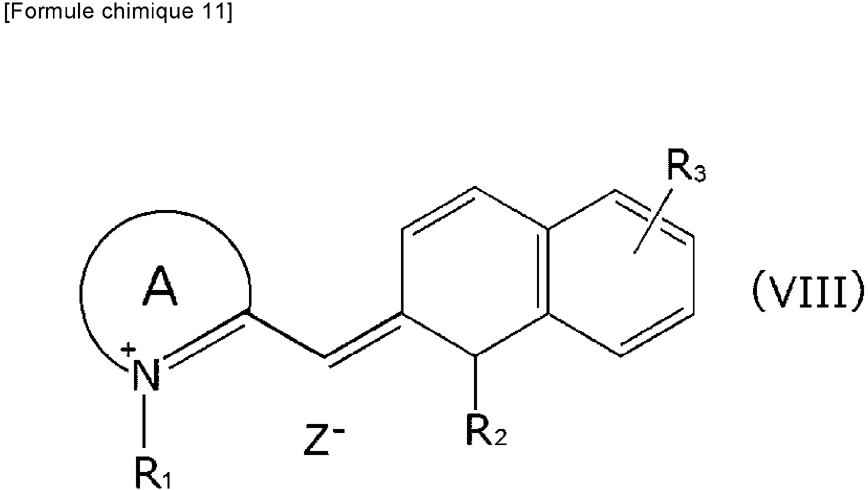
dans lequel R₁, A et Z⁻ sont tels que décrits ci-dessus,
R₂ et R₃ sont identiques ou différents, et R₂ et R₃ représentent un atome d'hydrogène, un halogène, un groupe alkyle présentant de 1 à 18 atomes de carbone, un groupe phényle présentant facultativement un substituant, ou un groupe alcoxy présentant de 1 à 6 atomes de carbone ; ou
le composé de styryle est un composé représenté par la formule (IX) suivante : 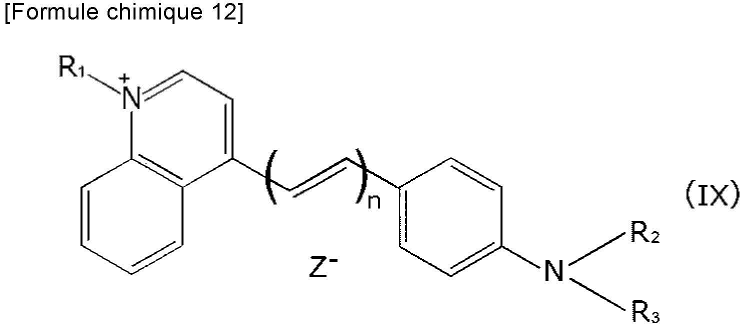 dans lequel R₁, R₂, R₃, n et Z⁻ sont tels que décrits ci-dessus ou
(iv) le composé de phénoxazine est un composé représenté par la formule (X) suivante : 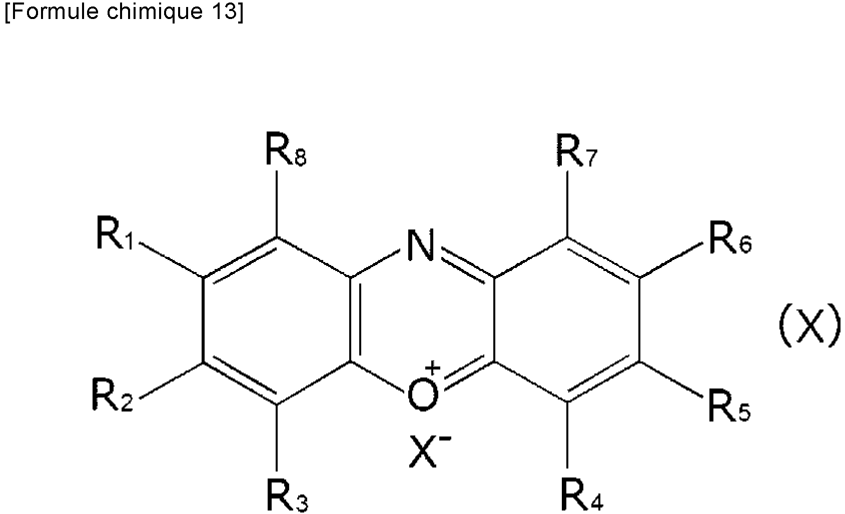
dans lequel au moins l'un de R₂ ou R₅ parmi R₁ à R₈ représente indépendamment -NH₂, -(CH₂)ₙ-NR₉R₁₀, ou un groupe phényle substitué par -NH₂,
le R restant représente indépendamment un atome d'hydrogène, un atome d'oxygène, -O-R₉, -COOH, -NO₂, un halogène, un groupe phényle présentant facultativement un substituant, un groupe alkyle présentant de 1 à 18 atomes de carbone ou un groupe aminoacyle, ou R₄ et R₈ sont liés l'un à l'autre pour former un cycle benzénique, et/ou R₆ et R₇ sont liés l'un à l'autre pour former un cycle benzénique,
R₉ et R₁₀ sont identiques ou différents, et R9 et R₁₀ représentent un atome d'hydrogène ou un groupe alkyle présentant de 1 à 18 atomes de carbone,
n est un nombre entier de 0 à 6, et
X⁻ représente un contre-ion, ou
(v) le composé de phénothiazine est un composé représenté par la formule (XI) suivante : 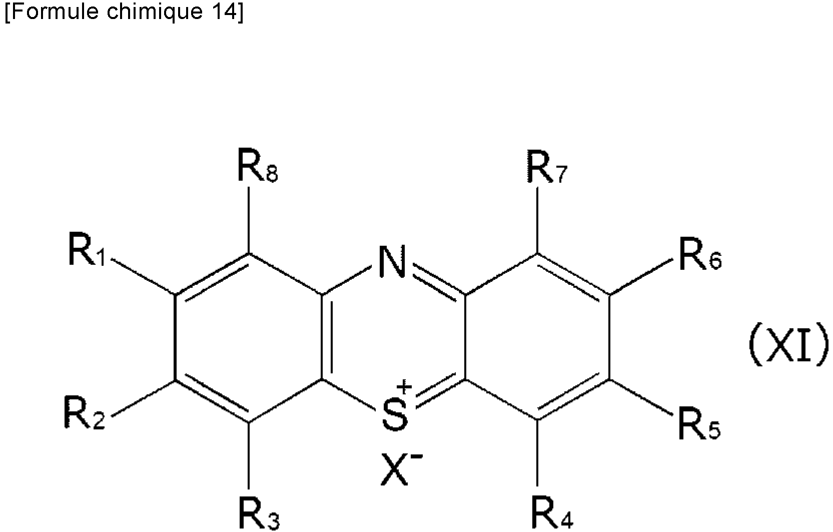
dans lequel au moins l'un de R₂ ou R₅ parmi R₁ à R₈ représente indépendamment -NH₂, -(CH₂)ₙ-NR₉R₁₀, ou un groupe phényle substitué par -NH₂,
le R restant représente indépendamment un atome d'hydrogène, un atome d'oxygène, -O-R₉, -COOH, -NO₂, un halogène, un groupe phényle présentant facultativement un substituant, un groupe alkyle présentant de 1 à 18 atomes de carbone ou un groupe aminoacyle, ou R₄ et R₈ sont liés l'un à l'autre pour former un cycle benzénique, et/ou R₆ et R₇ sont liés l'un à l'autre pour former un cycle benzénique,
R₉ et R₁₀ sont identiques ou différents, et R₉ et R₁₀ représentent un atome d'hydrogène ou un groupe alkyle présentant de 1 à 18 atomes de carbone,
n est un nombre entier de 0 à 6, et
X⁻ représente un contre-ion, ou
(vi) le composé de coumarine est un composé représenté par la formule (XII) suivante : 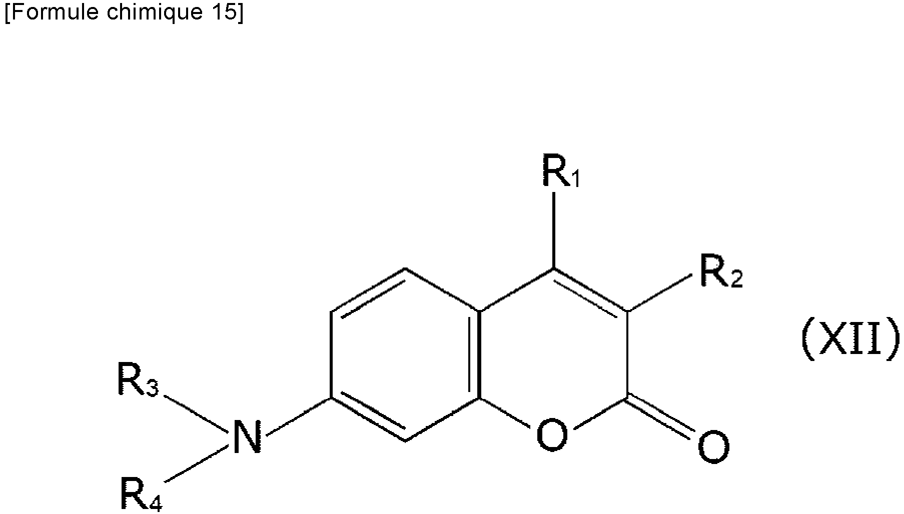
dans lequel R₁ représente un atome d'hydrogène, un groupe alkyle présentant de 1 à 3 atomes de carbone, un groupe haloalkyle présentant de 1 à 3 atomes de carbone, ou un groupe alkyle présentant de 1 à 3 atomes de carbone présentant un groupe hydroxy, ou R₁ et R₂ sont liés l'un à l'autre pour former un cycle,
R₂ représente un atome d'hydrogène, un cycle benzimidazole, un cycle benzothiazole, un cycle benzoxazole, un cycle pyridine, -COOR₅, -SO₃R₆, -CN, ou un groupe phényle présentant facultativement un substituant,
R₃ et R₄ sont identiques ou différents et représentent un atome d'hydrogène ou un groupe alkyle présentant de 1 à 6 atomes de carbone, ou R₃ et/ou R₄ forment un cycle hétérocyclique comprenant N avec un cycle benzénique auquel le N est lié, et
R₅ et R₆ sont identiques ou différents, et R₅ et R₆ représentent un atome d'hydrogène ou un groupe alkyle présentant de 1 à 6 atomes de carbone ou
(vii) le composé d'azo(triazine) est un composé représenté par la formule (XIII) suivante : 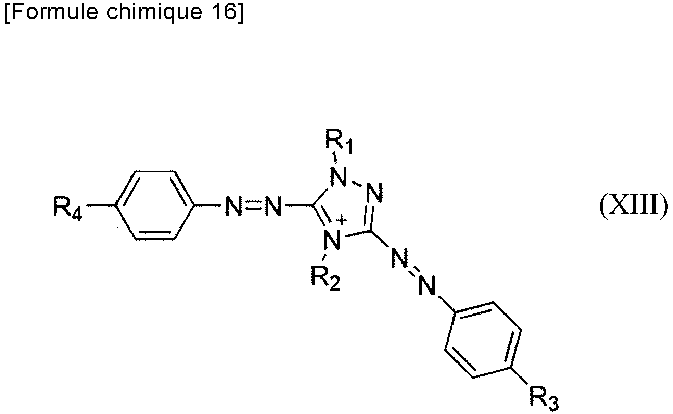
dans lequel R₁ et R₂ sont identiques ou différents, et R₁ et R₂ représentent un atome d'hydrogène ou un groupe alkyle présentant de 1 à 3 atomes de carbone,
R₃ et R₄ sont identiques ou différents, et R₃ et R₄ représentent un atome d'hydrogène, un groupe alkyle présentant de 1 à 3 atomes de carbone, ou -NR₅R₆, et
R₅ et R₆ sont identiques ou différents, et R₅ et R₆ représentent un atome d'hydrogène ou un groupe alkyle présentant de 1 à 3 atomes de carbone.
